(19) **Europäisches Patentamt**

**European Patent Office**

**Office européen des brevets**

(11) **EP 1 252 566 B1**

(12) **EUROPÄISCHE PATENTSCHRIFT**

(45) Veröffentlichungstag und Bekanntmachung des Hinweises auf die Patenterteilung:
**17.09.2003 Patentblatt 2003/38**

(51) Int Cl.[7]: **G06F 9/00**

(21) Anmeldenummer: **01909436.6**

(22) Anmeldetag: **09.01.2001**

(86) Internationale Anmeldenummer:
**PCT/DE01/00049**

(87) Internationale Veröffentlichungsnummer:
**WO 01/057648 (09.08.2001 Gazette 2001/32)**

(54) **ANORDNUNG MITEINANDER VERBUNDENER RECHENELEMENTE UND VERFAHREN ZUR RECHNERGESTÜTZTEN ERMITTLUNG EINES ZWEITEN ZUSTANDS EINES SYSTEMS IN EINEM ERSTEN ZUSTANDSRAUM AUS EINEM ERSTEN ZUSTAND DES SYSTEMS IN DEM ERSTEN ZUSTANDSRAUM**

CONFIGURATION OF INTERCONNECTED ARITHMETIC ELEMENTS, AND METHOD FOR THE COMPUTER-AIDED DETERMINATION OF A SECOND STATE OF A SYSTEM IN A FIRST STATE SPACE FROM A FIRST STATE OF THE SYSTEM IN THE FIRST STATE SPACE

CONFIGURATION D'ELEMENTS DE CALCUL INTERCONNECTES ET PROCEDE DE DETERMINATION ASSISTEE PAR ORDINATEUR DU DEUXIEME ETAT D'UN SYSTEME DANS UN PREMIER ESPACE D'ETAT A PARTIR D'UN PREMIER ETAT DU SYSTEME DANS LE PREMIER ESPACE D'ETAT

(84) Benannte Vertragsstaaten:
**DE FR GB IT**

(30) Priorität: **31.01.2000 DE 10004064**

(43) Veröffentlichungstag der Anmeldung:
**30.10.2002 Patentblatt 2002/44**

(73) Patentinhaber: **SIEMENS AKTIENGESELLSCHAFT**
**80333 München (DE)**

(72) Erfinder:
• **ZIMMERMANN, Hans-Georg**
**82319 Starnberg/Percha (DE)**
• **NEUNEIER, Ralf**
**81667 München (DE)**

(56) Entgegenhaltungen:
WO-A-00/08599  WO-A-00/55809
WO-A-00/62250  DE-C- 19 838 654
US-A- 5 444 819  US-A- 5 761 386

• **TEMPLEMAN J N: "RACE NETWORKS A THEORY OF COMPETITIVE RECOGNITION NETWORKS BASED ON THE RATE OF REACTIVATION OF NEURONS IN CORTICAL COLUMNS" PROCEEDINGS OF THE INTERNATIONAL CONFERENCE ON NEURAL NETWORKS. SAN DIEGO, JULY 24 - 27, 1988, NEW YORK, IEEE, US, Bd. 1, 24. Juli 1988 (1988-07-24), Seiten 9-16, XP000744244**
• **MAKOTO HIRAHARA ET AL: "A NEURAL NETWORK MODEL FOR VISUAL MOTION DETECTION THAT CAN EXPLAIN PSYCHOPHYSICAL AND NEUROPHYSIOLOGICAL PHENOMENA" BIOLOGICAL CYBERNETICS, SPRINGER VERLAG, HEIDELBERG, DE, Bd. 68, Nr. 3, 1992, Seiten 247-252, XP000332691 ISSN: 0340-1200**
• **LUBENSKY D: "LEARNING SPECTRAL-TEMPORAL DEPENDENCIES USING CONNECTIONIST NETWORKS" SPEECH PROCESSING. NEW YORK, APR. 11 - 14, 1988, INTERNATIONAL CONFERENCE ON ACOUSTICS, SPEECH & SIGNAL PROCESSING. ICASSP, NEW YORK, IEEE, US, Bd. 1 CONF. 13, 11. April 1988 (1988-04-11), Seiten 418-421, XP000129262**

- TAKASE ET AL: "TIME SEQUENTIAL PATTERN TRANSFORMATION AND ATTRACTORS OF RECURRENT NEURAL NETWORKS" PROCEEDINGS OF THE INTERNATIONAL JOINT CONFERENCE ON NEURAL NETWORKS. (IJCNN). NAGOYA, OCT. 25 - 29, 1993, NEW YORK, IEEE, US, Bd. 3, 28. Oktober 1993 (1993-10-28), Seiten 2319-2322, XP000502253 ISBN: 0-7803-1422-0

- DELIANG WANG ET AL: "ANTICIPATION-BASED TEMPORAL PATTERN GENERATION" IEEE TRANSACTIONS ON SYSTEMS, MAN AND CYBERNETICS, IEEE INC. NEW YORK, US, Bd. 25, Nr. 4, 1. April 1995 (1995-04-01), Seiten 615-628, XP000501275 ISSN: 0018-9472

**Beschreibung**

Die Erfindung betrifft eine Anordnung miteinander verbundener Rechenelemente und ein Verfahren zur rechnergestützten Ermittlung eines zweiten Zustands eines Systems in einem ersten Zustandsraum aus einem ersten Zustand des Systems in dem ersten Zustandsraum.

Aus [1] ist es bekannt, zur Ermittlung von einem Zustand eines Systems eine Anordnung miteinander verbundener Rechenelemente einzusetzen. Ferner ist es aus [1] bekannt, aus mehreren zeitlich nachfolgenden Zuständen eines Systems eine Dynamik des Systems oder einen dynamischen Prozeß, welcher dem System zugrunde liegt, zu ermitteln.

Allgemein wird ein dynamischer Prozeß, welcher einem System zugrunde liegt, üblicherweise durch eine Zustandsübergangsbeschreibung, die für einen Beobachter des dynamischen Prozesses nicht sichtbar ist, und eine Ausgangsgleichung, die beobachtbare Größen des technischen dynamischen Prozesses beschreibt, beschrieben.

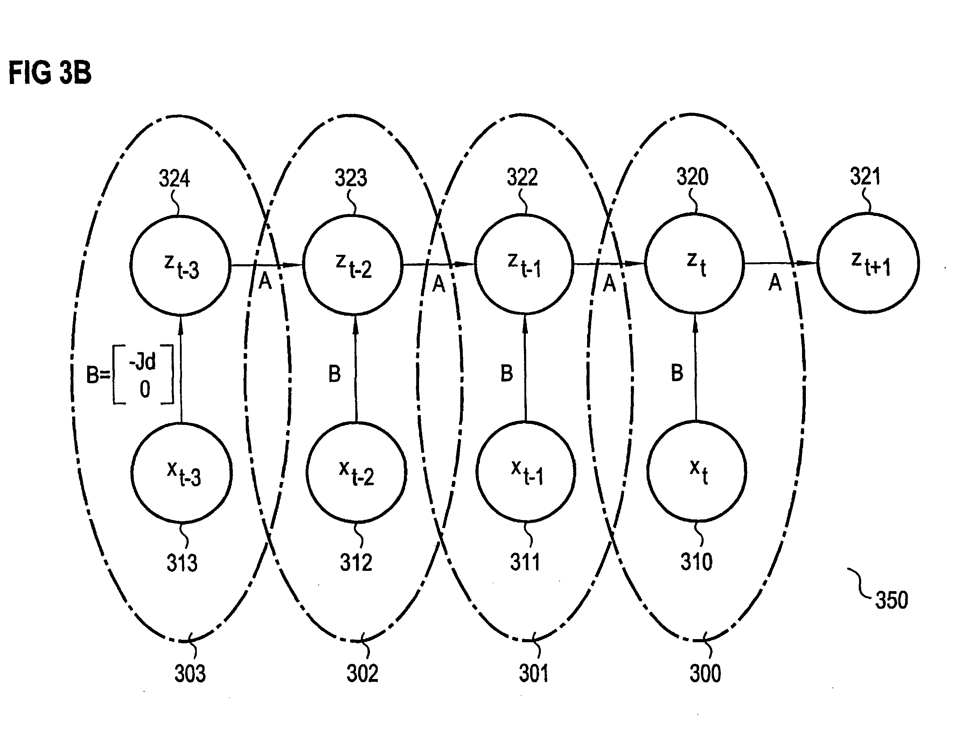

Eine solche Struktur ist in **Fig.2** dargestellt.

Ein dynamisches System 200 unterliegt dem Einfluß einer externen Eingangsgröße x vorgebbarer Dimension, wobei eine Eingangsgröße $x_t$ zu einem Zeitpunkt t mit $x_t$ bezeichnet wird:

$$x_t \in \Re^l,$$

wobei mit l eine natürliche Zahl bezeichnet wird.

Die Eingangsgröße $x_t$ zu einem Zeitpunkt t verursacht eine Veränderung des dynamischen Prozesses, der in dem dynamischen System 200 abläuft.

Ein innerer Zustand st ($s_t \in \Re^m$) vorgebbarer Dimension m zu einem Zeitpunkt t ist für einen Beobachter des dynamischen Systems 200 nicht beobachtbar.

In Abhängigkeit vom inneren Zustand $s_t$ und der Eingangsgröße $x_t$ wird ein Zustandsübergang des inneren Zustandes $s_t$ des dynamischen Prozesses verursacht und der Zustand des dynamischen Prozesses geht über in einen Folgezustand $s_{t+1}$ zu einem folgenden Zeitpunkt t+1.

Dabei gilt:

$$s_{t+1} = f(s_t, x_t). \tag{1}$$

wobei mit f(.) eine allgemeine Abbildungsvorschrift bezeichnet wird.

Eine von einem Beobachter des dynamischen Systems 200 beobachtbare Ausgangsgröße $y_t$ zu einem Zeitpunkt t hängt ab von der Eingangsgröße $x_t$ sowie dem inneren Zustand $s_t$.

Die Ausgangsgröße $y_t$ ($y_t \in \Re^n$) ist vorgebbarer Dimension n.

Die Abhängigkeit der Ausgangsgröße $y_t$ von der Eingangsgröße $x_t$ und dem inneren Zustand $s_t$ des dynamischen Prozesses ist durch folgende allgemeine Vorschrift gegeben:

$$y_t = g(s_t, x_t), \tag{2}$$

wobei mit g(.) eine allgemeine Abbildungsvorschrift bezeichnet wird.

Zur Beschreibung des dynamischen Systems 200 wird in [1] eine Anordnung miteinander verbundener Rechenelemente in Form eines neuronalen Netzes miteinander verbundener Neuronen eingesetzt. Die Verbindungen zwischen den Neuronen des neuronalen Netzes sind gewichtet. Die Gewichte des neuronalen Netzes sind in einem Parametervektor v zusammengefaßt.

Somit hängt ein innerer Zustand eines dynamischen Systems, welches einem dynamischen Prozeß unterliegt, gemäß folgender Vorschrift von der Eingangsgröße $x_t$ und dem inneren Zustand des vorangegangenen Zeitpunktes $s_t$ und dem Parametervektor v ab:

$$s_{t+1} = NN(v, s_t, x_t), \tag{3}$$

wobei mit NN(.) eine durch das neuronale Netz vorgegebene Abbildungsvorschrift bezeichnet wird.

Aus [2] ist eine als Time Delay Recurrent Neural Network (TDRNN) bezeichnete Anordnung bekannt.

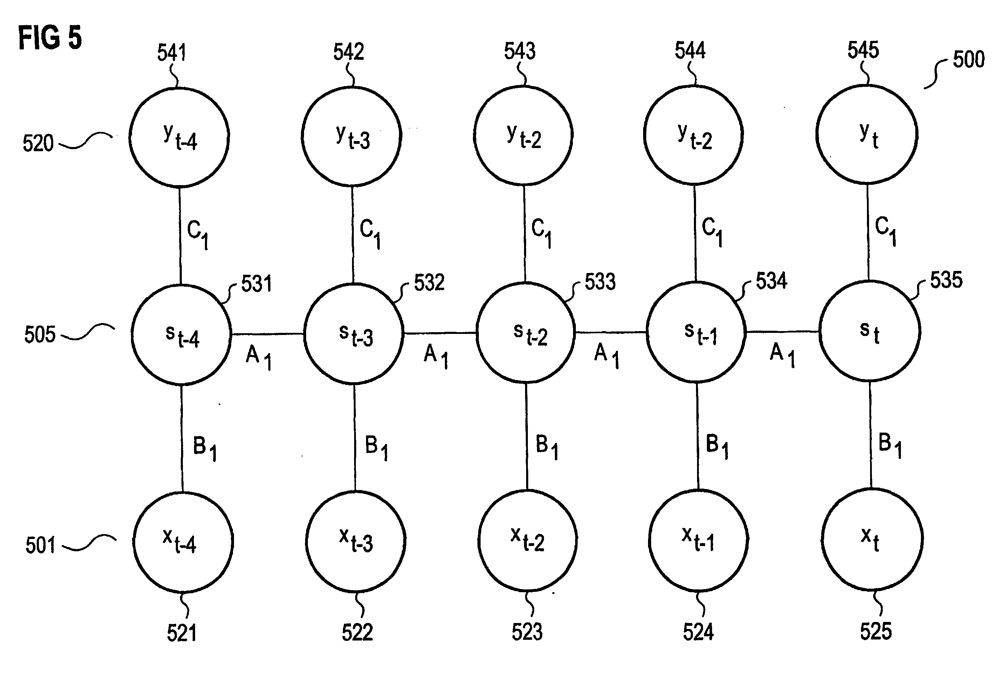

Das bekannte TDRNN ist in **Fig.5** als ein über eine endliche Anzahl von Zeitpunkten (dargestellt 5 Zeitpunkte: t-4, t-3, t-2, t-1, t) entfaltetes neuronales Netz 500 dargestellt.

Das in **Fig.5** dargestellte neuronale Netz 500 weist eine Eingangsschicht 501 mit fünf Teileingangsschichten 521, 522, 523, 524 und 525 auf, die jeweils eine vorgebbare Anzahl Eingangs-Rechenelemente enthalten, denen Eingangsgrößen $x_{t-4}$, $x_{t-3}$, $x_{t-2}$, $x_{t-1}$ und xt zu vorgebbaren Zeitpunkten t-4, t-3, t-2, t-1 und t, d.h. im weiteren beschriebene Zeitreihenwerte mit vorgegebenen Zeitschritten, anlegbar sind.

Eingangs-Rechenelemente, d.h. Eingangsneuronen, sind über variable Verbindungen mit Neuronen einer vorgebbaren Anzahl versteckter Schichten 505 (dargestellt 5 verdeckte Schichten) verbunden.

Dabei sind Neuronen einer ersten 531, einer zweiten 532, einer dritten 533, einer vierten 534 und einer fünften 535 versteckten Schicht jeweils mit Neuronen der ersten 521, der zweiten 522, der dritten 523, der vierten 524 und der fünften 525 Teileingangsschicht verbunden.

Die Verbindungen zwischen der ersten 531, der zweiten 532, der dritten 533, der vierten 534 und der fünften 535 versteckten Schicht mit jeweils der ersten 521, der zweiten 522, der dritten 523, der vierten 524 und der fünften 525 Teileingangsschicht sind jeweils gleich. Die Gewichte aller Verbindungen sind jeweils in einer ersten Verbindungsmatrix $B_1$ enthalten.

Ferner sind die Neuronen der ersten versteckten Schicht 531 mit ihren Ausgängen mit Eingängen von Neuronen der zweiten versteckten Schicht 532 gemäß einer durch eine zweite Verbindungsmatrix $A_1$ gegebene Struktur verbunden. Die Neuronen der zweiten versteckten Schicht 532 sind mit ihren Ausgängen mit Eingängen von Neuronen der dritten versteckten Schicht 533 gemäß einer durch die zweite Verbindungsmatrix $A_1$ gegebene Struktur verbunden. Die Neuronen der dritten versteckten Schicht 533 sind mit ihren Ausgängen mit Eingängen von Neuronen der vierten versteckten Schicht 534 gemäß einer durch die zweite Verbindungsmatrix $A_1$ gegebene Struktur verbunden. Die Neuronen der vierten versteckten Schicht 534 sind mit ihren Ausgängen mit Eingängen von Neuronen der fünften versteckten Schicht 535 gemäß einer durch die zweite Verbindungsmatrix $A_1$ gegebene Struktur verbunden.

In den versteckten Schichten, der ersten versteckten Schicht 531, der zweiten versteckten Schicht 532, der dritten versteckten Schicht 533, der vierten versteckten Schicht 534 und der fünften versteckten Schicht 535 werden jeweils "innere" Zustände oder "innere" Systemzustände $s_{t-4}$, $s_{t-3}$, $s_{t-2}$, $s_{t-1}$, und $s_t$ eines durch das TDRNN beschriebenen dynamischen Prozesses an fünf aufeinanderfolgenden Zeitpunkten t-4, t-3, t-2, t-1 und t repräsentiert.

Die Angaben in den Indizes in den jeweiligen Schichten geben jeweils den Zeitpunkt t-4, t-3, t-2, t-1 und t an, auf die sich jeweils die an den Ausgängen der jeweiligen Schicht abgreifbaren bzw. zuführbaren Signale beziehen $(x_{t-4}, x_{t-3}, x_{t-2}, x_{t-1}, x_t)$.

Eine Ausgangsschicht 520 weist fünf Teilausgangsschichten, eine erste Teilausgangsschicht 541, eine zweite Teilausgangsschicht 542, eine dritte Teilausgangsschicht 543, eine vierte Teilausgangsschicht 544 sowie eine fünfte Teilausgangsschicht 545 auf. Neuronen der ersten Teilausgangsschicht 541 sind gemäß einer durch eine Ausgangs-Verbindungsmatrix $C_1$ gegebenen Struktur mit Neuronen der ersten versteckten Schicht 531 verbunden. Neuronen der zweiten Teilausgangsschicht 542 sind ebenfalls gemäß der durch die Ausgangs-Verbindungsmatrix $C_1$ gegebenen Struktur mit Neuronen der zweiten versteckten Schicht 532 verbunden. Neuronen der dritten Teilausgangsschicht 543 sind gemäß der Ausgangs-Verbindungsmatrix $C_1$ mit Neuronen der dritten versteckten Schicht 533 verbunden. Neuronen der vierten Teilausgangsschicht 544 sind gemäß der Ausgangs-Verbindungsmatrix $C_1$ mit Neuronen der vierten versteckten Schicht 534 verbunden. Neuronen der fünften Teilausgangsschicht 545 sind gemäß der Ausgangs-Verbindungsmatrix $C_1$ mit Neuronen der fünften versteckten Schicht 535 verbunden. An den Neuronen der Teilausgangsschichten 541, 542, 543, 544 und 545 sind die Ausgangsgrößen für jeweils einen Zeitpunkt t-4, $t^{-3}$, $t^{-2}$, $t^{-1}$, t abgreifbar $(y_{t-4}, y_{t-3}, y_{t-2}, y_{t-1}, y_t)$.

Der Grundsatz, daß äquivalente Verbindungsmatrizen in einem neuronalen Netz zu einem jeweiligen Zeitpunkt die gleichen Werte aufweisen, wird als Prinzip der sogenannten geteilten Gewichtswerte (Shared Weights) bezeichnet.

Die aus [2] bekannte und als <u>T</u>ime <u>D</u>elay <u>R</u>ecurrent <u>N</u>eural <u>N</u>etwork (TDRNN) bezeichnete Anordnung wird in einer Trainingsphase derart trainiert, daß zu einer Eingangsgröße $x_t$ jeweils eine Zielgröße $y_t^d$ an einem realen dynamischen System ermittelt wird. Das Tupel (Eingangsgröße, ermittelte Zielgröße) wird als Trainingsdatum bezeichnet. Eine Vielzahl solcher Trainingsdaten bilden einen Trainingsdatensatz.

Dabei weisen zeitlich aufeinanderfolgende Tupel $(x_{t-4}, y_{t-4}^d)$ $(x_{t-3}, y_{t-3}^d)$, $(x_{t-2}, y_{t-2}^d)$ der Zeitpunkte (t-4, t-3, t-3, ...) des Trainingsdatensatzes jeweils einen vorgegeben Zeitschritt auf.

Mit dem Trainingsdatensatz wird das TDRNN trainiert. Eine Übersicht über verschiedene Trainingsverfahren ist ebenfalls in [1] zu finden.

Es ist an dieser Stelle zu betonen, daß lediglich die Ausgangsgrößen yt-4 ,yt-3 , ..., Yt zu Zeitpunkten t-4, t-3, ..., t des dynamischen Systems 200 erkennbar sind. Die "inneren" Systemzustände $s_{t-4}$, $s_{t-3}$, ..., $s_t$ sind nicht beobachtbar.

In der Trainingsphase wird üblicherweise folgende Kostenfunktion E minimiert:

$$E = \frac{1}{T} \sum_{t=1}^{T} \left( y_t - y_t^d \right)^2 \to \min_{f,g}, \qquad (4)$$

wobei mit T eine Anzahl berücksichtigter Zeitpunkte bezeichnet wird.

In [3] ist ferner ein Überblick über Grundlagen neuronaler Netze und die Anwendungsmöglichkeiten neuronaler Netze im Bereich der Ökonomie zu finden.

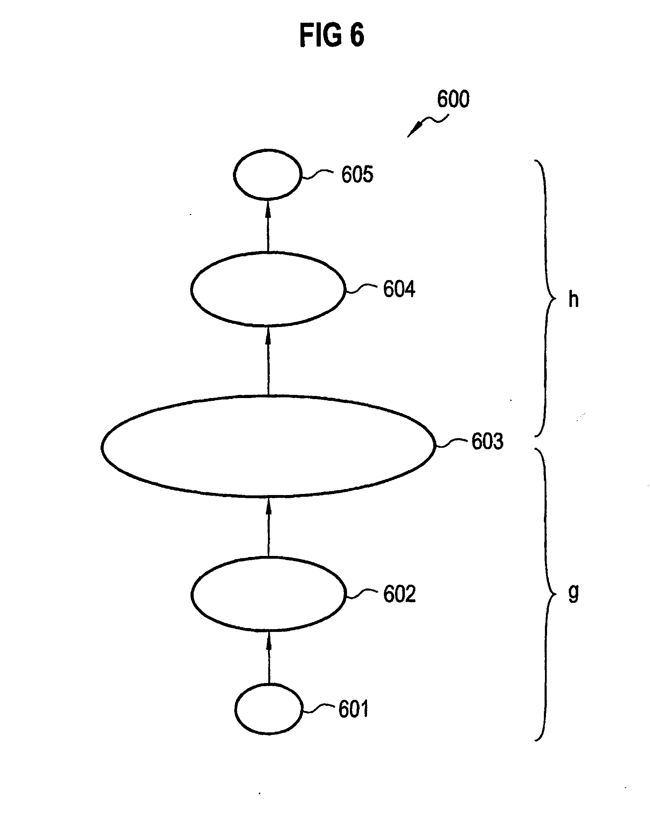

Aus [4] ist ein sogenannter neuronaler Autoassoziator bekannt (vgl. **Fig.6**).

Der Autoassoziator 600 besteht aus einer Eingangsschicht 601, drei verdeckten Schichten 602, 603, 604 sowie einer Ausgangsschicht 605.

Die Eingangsschicht 601 sowie eine erste verdeckte Schicht 602 und eine zweite verdeckte Schicht 603 bilden eine Einheit, mit der eine erste nichtlineare Koordinatentransformation g durchführbar ist.

Die zweite verdeckte Schicht 603 bildet gemeinsam mit einer dritten verdeckten Schicht 604 und der Ausgangsschicht 605 eine zweite Einheit, mit der eine zweite nichtlineare Koordinatentransformation h durchführbar ist.

Dieses aus [4] bekannte fünfschichtige neuronale Netz 600 weist die Eigenschaft auf, daß eine Eingangsgröße $x_t$ auf einen inneren Systemzustand transformiert wird gemäß der ersten nichtlinearen Koordinatentransformation g. Ausgehend von der zweiten verdeckten Schicht 603 wird unter Verwendung der dritten verdeckten Schicht 604 hin zu der Ausgangsschicht 605 unter Verwendung der zweiten nicht linearen Koordinatentransformation h der innere Systemzustand im wesentlichen auf die Eingangsgröße $x_t$ rücktransformiert. Ziel dieser bekannten Struktur ist die Abbildung der Eingangsgröße $x_t$ in einem ersten Zustandsraum X auf den inneren Zustand $s_t$ in einem zweiten Zustandsraum S, wobei die Dimension des zweiten Zustandsraum Dim(S) kleiner sein soll als die Dimension des ersten Zustandsraums Dim(X), um eine Datenkompression in der versteckten Schicht des Neuronalen Netzes zu erreichen. Die Rücktransformation in den ersten Zustandsraum X entspricht in diesem Fall einer Dekompression.

Aus [5] ist eine Anordnung zur Vorhersage ausländischer Wechselkurse aus einer Zeitreihe von Wechselkursdaten bekannt. Dazu werden die Wechselkursdaten differenzkodiert und logarithmisch transformiert. Die transformierten Daten werden symbolisch dargestellt und von einem neuronalen Netz, einer self-organizing map, ausgewertet und eine Vorhersage ermittelt.

[6] und [7] beschreiben neuronale Netzmodelle zur visuellen Bewegungsdetektion mit meheren Ein- und Ausgängen, wobei die Eingänge mehere Zeitreihenwerte erfassen können, die das System wechselseitig beeinflussen ohne dass eine Transformation der Eingangsdaten stattfindet.

Die bekannten Anordnungen und Verfahren weisen insbesondere den Nachteil auf, daß mit ihnen für eine Eingangsgröße $x_t$ zu einem aktuellen Zeitpunkt t oder für eine Eingangsgröße $x_{t-1}$ zu einem zeitlich um einen vorgegeben Zeitschritt vorangegangenen Zeitpunkt t-1 nur der aktuelle Zustand eines Prozesses beschreibbar ist. Ein um einen vorgebbaren Zeitschritt zeitlich folgender zukünftiger Folgezustand des Prozesses oder um jeweils einen vorgebbaren Zeitschritt zeitlich aufeinanderfolgende zukünftige Folgezustände des Prozesses können in den meisten Fällen nicht beschrieben bzw. vorhergesagt werden.

Somit liegt der Erfindung das Problem zugrunde, eine Anordnung miteinander verbundener Rechenelemente anzugeben, mit der ein oder mehrere zeitlich aufeinanderfolgende zukünftige Folgezustände eines dynamischen Prozesses beschrieben werden können.

Ferner liegt der Erfindung das Problem zugrunde, ein Verfahren zur rechnergestützten Ermittlung eines oder mehrerer zeitlich aufeinanderfolgende zukünftige Folgezustände eines dynamischen Prozesses anzugeben.

Die Probleme werden durch eine Anordnung sowie ein Verfahren mit den Merkmalen gemäß den unabhängigen Ansprüchen gelöst.

Die Anordnung miteinander verbundener Rechenelemente weist auf:

- mindestens ein erstes Rechenelement, mit welchem ein erster Zustand eines Systems in einem ersten Zustandsraum in einen dritten Zustand des Systems in einem zweiten Zustandsraum transformierbar ist,
- mindestens ein zweites Rechenelement, mit welchem ein vierter Zustand des Systems in dem zweiten Zustandsraum ermittelbar ist,
- mindestens ein drittes Rechenelement, welches mit dem ersten Rechenelement und dem zweiten Rechenelement jeweils eine Verbindung hat und mit welchem eine Abweichung zwischen dem dritten Zustand und dem vierten Zustand bestimmbar ist,
- mindestens ein viertes Rechenelement, welches mit dem ersten Rechenelement und dem dritten Rechenelement jeweils eine Verbindung hat und mit welchem unter Verwendung der Abweichung und dem ersten Zustand ein zweiter Zustand des Systems in dem ersten Zustandsraum bestimmbar ist.

Bei dem Verfahren zur rechnergestützten Ermittlung eines zweiten Zustands eines Systems in einem ersten Zustandsraum aus einem ersten Zustand des Systems in dem ersten Zustandsraum wird der erste Zustand in einen dritten Zustand des Systems in einem zweiten Zustandsraum transformiert. Ein vierter Zustand des Systems in dem zweiten Zustandsraum wird ermittelt und eine Abweichung zwischen der dritten Zustand und dem vierten Zustand wird bestimmt. Unter Verwendung der Abweichung und dem ersten Zustand wird der zweite Zustand ermittelt.

Die Anordnung ist insbesondere geeignet zur Durchführung des erfindungsgemäßen Verfahrens oder einer deren nachfolgend erläuterten Weiterbildungen.

Unter Verwendung der Erfindung können insbesondere mehrere jeweils um einen vorgebbaren Zeitschritt aufeinanderfolgende Folgezustände eines dynamischen Prozesses prognostiziert werden. Damit sind Zustände des dynamischen Prozesses auch über einen großen Zeitraum prognostizierbar.

Ferner kann die Erfindung als ein technisches Modell für eine menschliche ("innere") Wahrnehmung von einem ("äußeren") realen Ereignis oder einer Bildung einer ("inneren") Vorstellung eines zukünftigen, ("äußeren") realen Ereignisses ("Cognitves System") verstanden werden. Dabei hängt die innere Vorstellung des zukünftigen Ereignisse ab von der inneren Vorstellung des aktuellen, äußeren Ereignisses und von einer Abweichung, welche die innere Vorstellung des aktuellen Ereignisses von dem äußeren, wahrgenommenen aktuellen Ereignis aufweist.

Bevorzugte Weiterbildungen der Erfindung ergeben sich aus den abhängigen Ansprüchen.

Die im weiteren beschriebenen Weiterbildungen beziehen sich sowohl auf das Verfahren als auch auf die Anordnung.

Die Erfindung und die im weiteren beschriebenen Weiterbildungen können sowohl in Software als auch in Hardware, beispielsweise unter Verwendung einer speziellen elektrischen Schaltung realisiert werden.

Ferner ist eine Realisierung der Erfindung oder einer im weiteren beschriebenen Weiterbildung möglich durch ein computerlesbares Speichermedium, auf welchem ein Computerprogramm gespeichert ist, welches die Erfindung oder Weiterbildung ausführt .

Auch können die Erfindung und/oder jede im weiteren beschriebene Weiterbildung durch ein Computerprogrammerzeugnis realisiert sein, welches ein Speichermedium aufweist, auf welchem ein Computerprogramm gespeichert ist, welches die Erfindung und/oder Weiterbildung ausführt.

Zu einer Verbesserung einer Genauigkeit, mit welcher der zweite Zustands des Systems ermittelbar ist, werden bevorzugt mehrere erste Rechenelementen, mehrere zweite Rechenelementen, mehrere dritte Rechenelementen und/oder mehrere vierte Rechenelementen verwendet.

Zur einer Vereinfachung einer Struktur miteinander verbundener Rechenelemente ist es vorteilhaft, das erste Rechenelement, das zweite Rechenelement, das dritte Rechenelement und das vierte Rechenelement zu einer Unteranordnung zusammenzufassen.

Für eine Prognose von mehreren Folgezuständen des Systems werden bevorzugt mehrere solcher ersten Unteranordnungen verwendet. Bei einer solchen Anordnung sind zumindest eine erste von den ersten Unteranordnungen und eine zweite von den ersten Unteranordnungen derart miteinander verbunden, daß das vierte Rechenelement der ersten von den ersten Unteranordnungen mit dem ersten Rechenelement der zweiten von den ersten Unteranordnungen identisch ist.

Zu einer Verbesserung einer Prognose von Folgezuständen des Systems ist es vorteilhaft, die erste Unteranordnung mit einer zweiten Unteranordnung zu erweitern, welche zweite Unteranordnung umfaßt:

- ein fünftes Rechenelement, mit welchem ein fünfter Zustand des Systems in dem ersten Zustandsraum in einen sechsten Zustand des Systems in dem zweiten Zustandsraum transformierbar ist und
- ein sechstes Rechenelement, welches mit dem fünften Rechenelement eine Verbindung hat und mit welchem ein siebter Zustand des Systems in dem zweiten Zustandsraum ermittelbar ist,
- ein siebtes Rechenelement, welches mit dem fünften Rechenelement eine Verbindung hat und mit welchem ein achter Zustand des Systems in dem ersten Zustandsraum bestimmbar ist,

wobei die zweite Unteranordnung derart mit der ersten Unteranordnung verbunden ist, daß das vierte Rechenelement und das fünfte Rechenelement identisch sind.

Eine Weiterbildung umfaßt eine erste von mehreren zweiten Unteranordnungen und eine zweite von den mehreren zweiten Unteranordnungen, wobei die erste von den mehreren zweiten Unteranordnungen und die zweite von den mehreren zweiten Unteranordnungen miteinander verbunden sind derart,

- daß das fünfte Rechenelement der zweiten von den mehreren zweiten Unteranordnungen und das siebte Rechenelement der ersten von den mehreren zweiten Unteranordnungen identisch sind.

In einer Weiterbildung ist die Anordnung eine neuronale Netzstruktur, bei der zumindest ein Teil der Rechenelemente künstliche Neuronen sind und/oder zumindest einem Teil der Verbindungen jeweils Gewichte zugeordnet sind. Bei einem Training der neuronalen Netzstruktur werden die Gewichte verändert.

Eine Weiterbildung ist gemäß einem Prinzip der "Shared Weights" realisiert, wobei die Gewichte gleicher Verbindungen identisch sind.

In einer Ausgestaltung bilden die Gewichte der Verbindung zwischen dem zweiten Rechenelement und dem dritten Rechenelement die negative Identitätsmatrix.

Bei einer Prognose eines zukünftigen Zustands des Systems ist der zweite Zustand ein um einen vorgebbaren Zeitschritt dem ersten Zustand nachfolgender Zustand des Systems.

In einer Ausgestaltung bilden der erste Zustand, der zweite Zustand, der fünfte Zustand und der achte Zustand einen Teil einer Zeitreihe sind.

Eine Weiterbildung wird eingesetzt zur Ermittlung einer Dynamik des Systems. Dabei ist die Dynamik unter Verwendung der Zeitreihe ermittelt.

Eine Ausgestaltung weist eine Meßanordnung auf zur Erfassung physikalischer Signale, mit denen ein Zustand des Systems beschreibbar ist.

Weiterbildungen können auch eingesetzt werden zur Ermittlung der Dynamik eines dynamischen Prozesses in einem chemischen Reaktor, zur Ermittlung der Dynamik eines Elekro-Kardio-Gramms und zur Ermittlung einer ökonomischer oder makroökonomischer Dynamik.

Bei komplexen Systemen wird ein Zustand des Systems durch einen Vektoren vorgebbarer Dimension beschrieben.

Ausführungsbeispiele der Erfindung sind in Figuren dargestellt und werden im weiteren näher erläutert.

Es zeigen

Figuren 1a und 1b      Skizze einer Teilstruktur und Skizze einer Gesamtstruktur gemäß einem ersten Ausführungsbeispiel;

Figur 2      eine Skizze einer allgemeinen Beschreibung eines dynamischen Systems;

Figuren 3a und 3b      Skizze einer Teilstruktur und Skizze einer Gesamtstruktur gemäß einem zweiten Ausführungsbeispiel;

Figur 4      eine Skizze eines chemischen Reaktors, von dem Größen gemessen werden, welche mit der Anordnung gemäß dem ersten Ausführungsbeispiel weiterverarbeitet werden;

Figur 5      eine Skizze einer Anordnung eines TDRNN, welche mit endlich vielen Zuständen über die Zeit entfaltet ist;

Figur 6      eine Skizze eines Autoassoziators gemäß dem Stand der Technik;

Figur 7      eine Skizze einer alternativen Netzstruktur;

**Erstes Ausführungsbeispiel: Chemischer Reaktor**

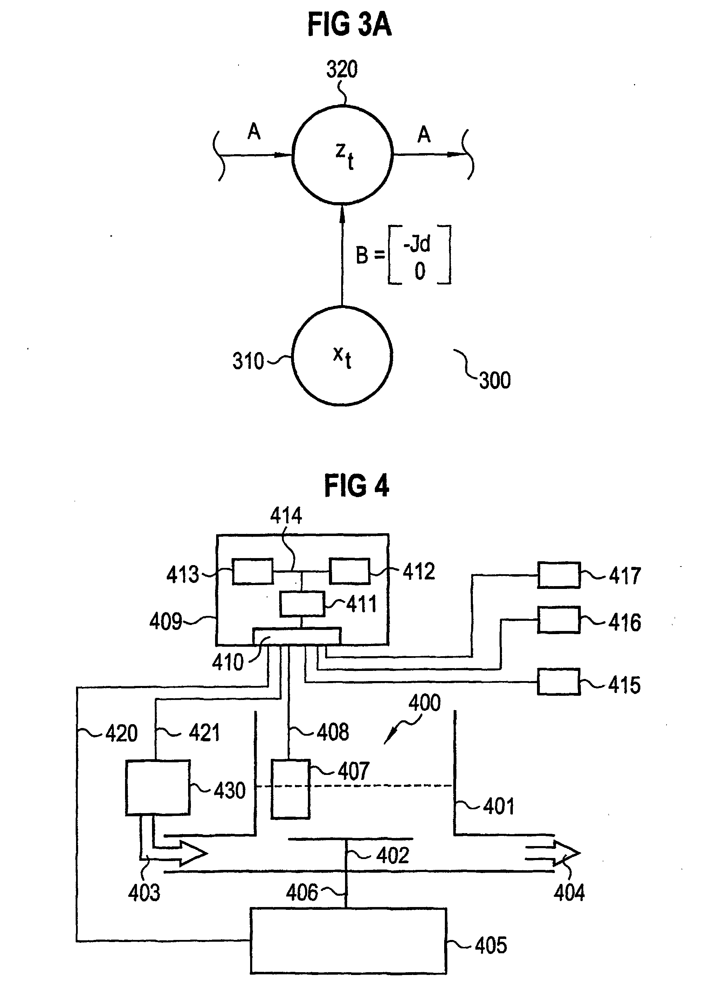

__Fig.4__ zeigt einen chemischen Reaktor 400, der mit einer chemischen Substanz 401 gefüllt ist. Der chemische Reaktor 400 umfaßt einen Rührer 402, mit dem die chemische Substanz 401 gerührt wird. In den chemischen Reaktor 400 einfließende weitere chemische Substanzen 403 reagieren während eines vorgebbaren Zeitraums in dem chemischen Reaktor 400 mit der in dem chemischen Reaktor 400 bereits enthaltenen chemischen Substanz 401. Eine aus dem Reaktor 400 ausfließende Substanz 404 wird aus dem chemischen Reaktor 400 über einen Ausgang abgeleitet.

Der Rührer 402 ist über eine Leitung mit einer Steuereinheit 405 verbunden, mit der über ein Steuersignal 406 eine Rührfrequenz des Rührers 402 einstellbar ist.

Ferner ist ein Meßgerät 407 vorgesehen, mit dem Konzentrationen von in der chemischen Substanz 401 enthaltenen chemischen Stoffe gemessen werden.

Meßsignale 408 werden einem Rechner 409 zugeführt, in dem Rechner 409 über eine Eingangs-/Ausgangsschnittstelle 410 und einem Analog/Digital-Wandler 411 digitalisiert und in einem Speicher 412 gespeichert. Ein Prozessor 413 ist ebenso wie der Speicher 412 über einen Bus 414 mit dem Analog/Digital-Wandler 411 verbunden. Der Rechner 409 ist ferner über die Eingangs-/Ausgangsschnittstelle 410 mit der Steuerung 405 des Rührers 402 verbunden und somit steuert der Rechner 409 die Rührfrequenz des Rührers 402.

Der Rechner 409 ist ferner über die Eingangs-/Ausgangsschnittstelle 410 mit einer Tastatur 415, einer Computermaus 416 sowie einem Bildschirm 417 verbunden.

Der chemische Reaktor 400 als dynamisches technisches System 200 unterliegt somit einem dynamischen Prozeß und weist eine Dynamik auf.

Der chemische Reaktor 400 wird mittels einer Zustandsbeschreibung beschrieben. Die Eingangsgröße $x_t$ setzt sich in diesem Fall zusammen aus einer Angabe über die Temperatur, die in dem chemischen Reaktor 400 herrscht sowie dem in dem chemischen Reaktor 400 herrschenden Druck und der zu dem Zeitpunkt t eingestellten Rührfrequenz. Somit ist die Eingangsgröße ein dreidimensionaler Vektor.

Ziel der im weiteren beschriebenen Niodellierung des chemischen Reaktors 400 ist die Bestimmung der dynamischen Entwicklung der Stoffkonzentrationen, um somit eine effiziente Erzeugung eines zu produzierenden vorgebbaren Zielstoffes als ausfließende Substanz 404 zu ermöglichen.

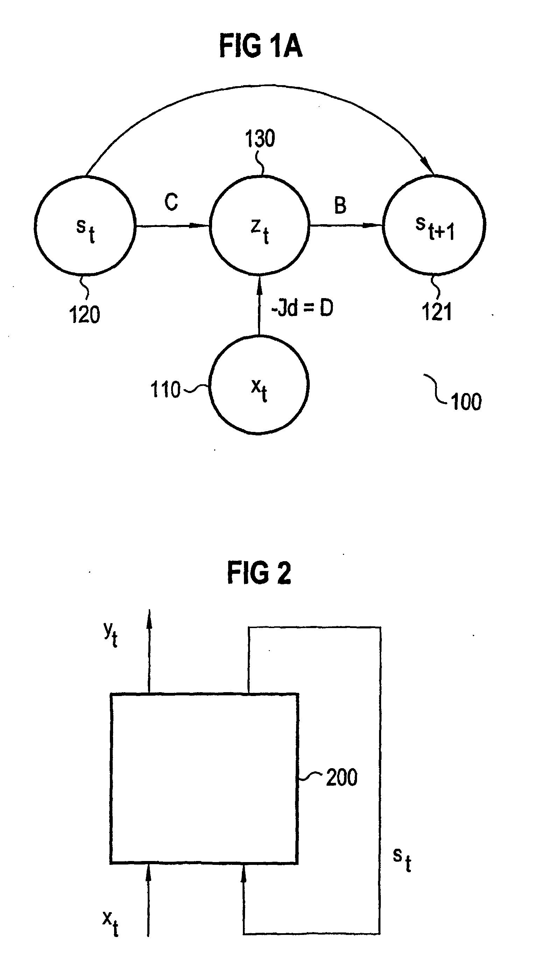

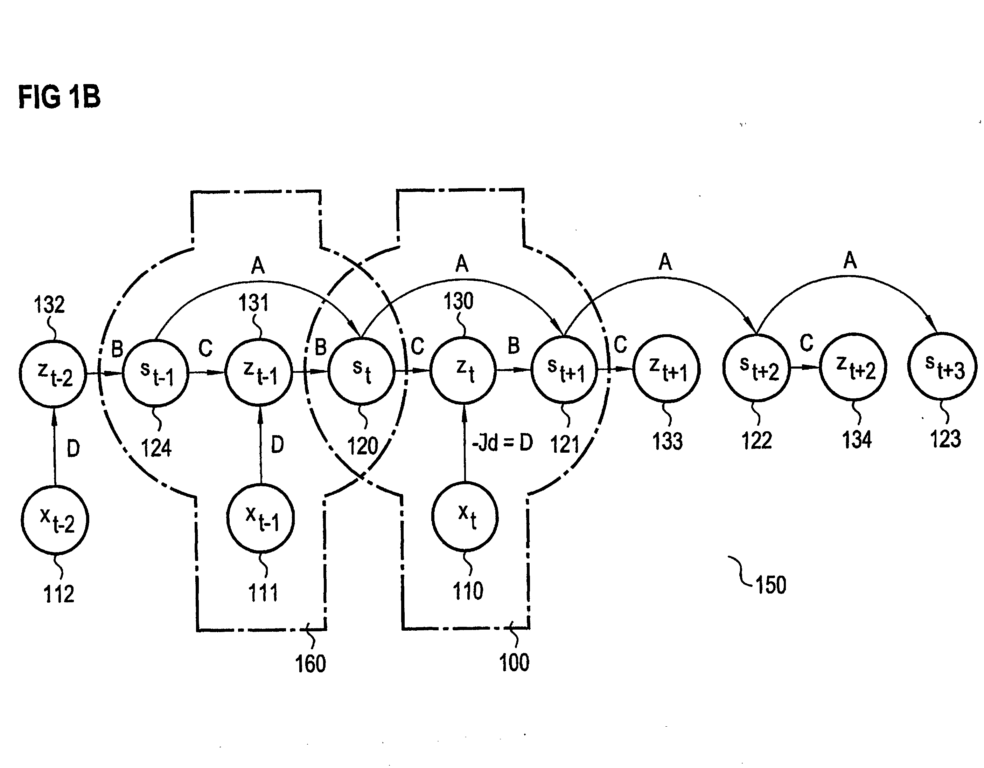

Dies erfolgt unter Verwendung der im weiteren beschriebenen und in der **Fig.1a** (neuronale Teilstruktur) und in der **Fig.1b** (neuronale Gesamtstruktur) dargestellten Anordnung, welche ein neuronale Netz mit künstlichen Neuronen ist.

Zum einfacheren Verständnis der der Anordnung zugrunde liegenden Prinzipien ist in **Fig.1a** eine Teilstruktur der Gesamtstruktur dargestellt.

Die in **Fig.1a** dargestellte neuronale Teilstruktur 100 weist ein Eingangsneuron 110 auf, dem Eingangsgrößen xt zu vorgebbaren Zeitpunkten t, d.h. im weiteren beschriebene Zeitreihenwerte mit vorgegebenen Zeitschritten, anlegbar sind. Die Eingangsgröße $x_t$ ist ein mehrdimensionaler Vektor in einem ersten Zustandsraum x (Eingangsraum x) des Systems.

Das Eingangsneuron 110 ist über eine variable Verbindung, welche Gewichte aufweist, die in einer ersten Verbindungsmatrix D enthalten sind, mit einem ersten Zwischenneuron 130 verbunden. Die erste Verbindungsmatrix D ist die negative Identitätsmatrix -Id.

Ein zweites Zwischenneuron 120 ist mit dem ersten Zwischenneuron 130 über eine variable Verbindung verbunden, wobei die variable Verbindung Gewichte aufweist, die in einer zweiten Verbindungsmatrix C enthalten sind.

Das erste Zwischenneuron 130 ist weiter mit einem dritten Zwischenneuron 121 über eine weitere variable Verbindung verbunden, wobei die variable Verbindung Gewichte aufweist, die in einer dritten Verbindungsmatrix B enthalten sind.

Ferner ist das zweite Zwischenneuron 120 und das dritte Zwischenneuron 121 über eine variable Verbindung verbunden, wobei die variable Verbindung Gewichte aufweist, die in einer vierten Verbindungsmatrix A enthalten sind.

Das zweite Zwischenneuron 120 und das dritte Zwischenneuron 121 repräsentieren zwei zeitlich aufeinanderfolgende Zustände t, t+1 des Systems $s_t$, $s_{t+1}$ in einem zweiten Zustandsraum s ("innerer Zustandsraum") des Systems.

Der in dem zweiten Zwischenneuron 120 repräsentierte Zustand $s_t$ des Systems wird in den ersten Zustandsraum x transformiert, so daß in dem ersten Zwischenneuron 130 eine Differenz $z_t$ zwischen dem transformierten Zustand und einem unter Verwendung der Eingangsgröße $x_t$ beschriebenen Zustand gebildet wird. Die Differenz $z_t$ beschreibt ebenfalls einen Zustand des Systems in dem ersten Zustandsraum x.

Somit hängt der in dem dritten Zwischenneuron 121 repräsentierte Zustand $s_{t+1}$ gemäß folgender Vorschrift von der Differenz zwischen der Eingangsgröße $x_t$ und dem Zustand $s_t$ des Systems im vorangegangenen Zeitpunktes t, dem Zustand $s_t$ des Systems im vorangegangenen Zeitpunktes t sowie den Gewichtsmatrizen A, B, C und D ab:

$$s_{t+1} = NN(A,B,C,D,s_t,s_t - x_t), \qquad (5)$$

wobei mit NN(.) eine durch die in **Fig.1a** dargestellte neuronale Netzstruktur vorgegebene Abbildungsvorschrift bezeichnet wird.

**Fig.1b** zeigt die Gesamtstruktur 150 des neuronalen Netzes, welche zwei 100, 160 von den im vorherigen beschriebenen und in **Fig.1a** dargestellten Teilstrukturen 100 aufweist.

Dabei ist zu bemerken, daß auch mehr als zwei Teilstrukturen 100, 160 wie nachfolgend beschrieben miteinander verbunden sein können.

Die Verbindung der Teilstrukturen 100, 160 führt zu einem über die Zeitpunkte t-1, t und t+1 entfalteten neuronalen Netz 150, mit welchem eine Abbildung

$$s_{t+1} = g(s_t - x_t, s_t), \qquad (6)$$

modelliert wird, wobei mit g(.) die Abbildungsvorschrift bezeichnet wird.

Das neuronale Netz 150 basiert auf dem Grundsatz der geteilten Gewichtswerte (Shared Weights), d.h. äquivalente Verbindungsmatrizen weisen zu einem jeweiligen Zeitpunkt die gleichen Gewichtswerte auf.

Die Verbindung der Teilstrukturen 100 und 160 erfolgt derart, daß das dritte Zwischenneuron 120 der ersten Teilstruktur 160 und das erste Zwischenneuron 120 der zweiten Teilstruktur 100 identisch sind.

Zur Entfaltung des neuronalen Netzes auf einen älteren Zustand t-2 des Systems weist die in **Fig.1b** dargestellte Gesamtstruktur 150 ein Anfangseingangsneuron 112 und ein Anfangszwischenneuron 132 auf. Das Anfangseingangsneuron 112 ist mit dem Anfangszwischenneuron 132 über eine variable Verbindung verbunden, wobei die variable Verbindung Gewichte aufweist, die in der ersten Verbindungsmatrix D enthalten sind.

Das Anfangszwischenneuron 132 ist über eine variable Verbindung mit dem zweiten Zwischenneuron 124 der ersten Teilstruktur 160 verbunden, wobei die variable Verbindung Gewichte aufweist, die in der zweiten Verbindungsmatrix B enthalten sind.

Das Anfangseingangsneuron 112 und das Anfangszwischenneuron 132 repräsentieren jeweils einen Zustand des Systems zu dem Zeitpunkt t-2.

Zur Entfaltung des neuronalen Netzes auf jüngere bzw. zukünftige Zustände t+1, t+2 und t+3 des Systems weist die Gesamtstruktur 150 in **Fig.1b** ein viertes Zwischenneuron 133 auf. Das vierte Zwischenneuron 133 ist mit dem dritten Zwischenneuron 121 der zweiten Teilstruktur 100 über eine variable Verbindung verbunden, wobei die variable Verbindung Gewichte aufweist, die in der zweiten Verbindungsmatrix C enthalten sind.

**Fig.1b** zeigt ein fünftes Zwischenneuron 122, welches mit dem dritten Zwischenneuron 121 der zweiten Teilstruktur 100 über eine variable Verbindung verbunden, wobei die variable Verbindung Gewichte aufweist, die in der vierten Verbindungsmatrix A enthalten sind.

Mit dem fünften Zwischenneuron 122 ist über eine variable Verbindung ein sechstes Zwischenneuron 134 verbunden. Diese Verbindung weist Gewichte auf, die in der zweiten Verbindungsmatrix C enthalten sind.

Des weiteren ist mit dem fünften Zwischenneuron 122 über eine variable Verbindung ein siebtes Zwischenneuron 123 verbunden. Diese Verbindung weist Gewichte auf, die in der vierten Verbindungsmatrix A enthalten sind.

Das vierte Zwischenneuron 133 repräsentiert einen Zustand des Systems zu dem Zeitpunkt t+1. Das fünfte Zwischenneuron 122 und das sechste Zwischenneuron 134 repräsentieren jeweils einen Zustand des Systems zu dem Zeitpunkt t+2. Das siebte Zwischenneuron 123 repräsentiert einen Zustand des Systems zu dem Zeitpunkt t+3.

Aufgrund der beschriebenen Struktur des neuronalen Netzes 150 können an dem vierten Zwischenneuron 133 und an dem sechsten Zwischenneuron 134 jeweils Zeitreihenwerte abgegriffen werden, welche zukünftige Zustände t+1, t+2 des Systems beschreiben. Damit ist es möglich, das neuronale Netz 150 zu einer Prognose von Systemzuständen einzusetzen.

Die Prognosefähigkeit des neuronalen Netzes 150 ist strukturiell darauf zurückzuführen, daß das vierte Zwischenneuron 133 und das sechste Zwischenneuron 134 jeweils kein zugehöriges Eingangsneuron aufweisen (vgl. Teilstruktur 100, **Fig.1a**).

Anschaulich gesehen wird in diesem Fall keine Differenz in dem vierten Zwischenneuron 133 bzw. dem sechsten Zwischenneuron 134 gebildet, sondern der in dem dritten Zwischenneuron 121 der zweiten Teilstruktur 100 ermittelte zukünftige innere Systemzustand $s_{t+1}$ wird in den Eingangsraum x transformiert bzw. der in dem fünften Zwischenneuron 122 ermittelte zukünftige innere Systemzustand $s_{t+2}$ wird in den Eingangsraum x transformiert.

Den besonderen Vorteil, den die in **Fig.1b** dargestellte Anordnung insbesondere durch ihre Struktur aufweist, liegt darin, daß die Anordnung unter Verwendung von nur wenigen Trainingsdaten ein effizientes Training ermöglicht. Dies ist insbesondere dadurch möglich, da durch die jeweils gleichen Gewichte in den Verbindungsmatrizen A, B und C wenige Gewichtsparameter eingestellt werden müssen ("Shared Weights").

Für ein Training des beschriebenen neuronalen Netzes 150 wird ein Verfahren auf der Basis eines Back-Propagation-Verfahrens, wie es in [1] beschrieben ist, verwendet.

Bei dem Training des beschriebenen neuronalen Netzes 150 werden die Gewichte, welche jeweils in den Verbindungsmatrizen A, B und C enthalten sind, verändert bzw. angepaßt.

Ferner werden bei dem Training die Zwischenneuronen, in welchen Differenzzustände gebildet werden, also das Anfangszwischenneuron 132, das erste Zwischenneuron 131 der ersten Teilstruktur 100, das erste Zwischenneuron 130 der zweiten Teilstruktur, das vierte Zwischenneuron 133 und das sechste Zwischenneuron 134 jeweils verwendet als ein "errorproduzierendes" Ausgangsneuron mit dem Zielwert Null.

Anschaulich gesehen wird dadurch das neuronale Netz 150 gezwungen, jeweils einen auf einem inneren Modell (Zustandsraum s) basierenden Zustand in Übereinstimmung mit einem äußeren Zustand (Zustandsraum x) zu bringen.

Bei dem aus [1] bekannten Trainingsverfahren wird in der Trainingsphase folgende Kostenfunktion E minimiert:

$$E = \frac{1}{T} \sum_{t=1}^{T} \left( y_t - y_t^d \right)^2 \rightarrow \min_{f,g}, \tag{7}$$

wobei mit T eine Anzahl berücksichtigter Zeitpunkte bezeichnet wird.

Als Trainingsverfahren wird das Back-Propagation-Verfahren eingesetzt. Der Trainingsdatensatz wird auf folgende Weise aus dem chemischen Reaktor 400 gewonnen.

Es werden mit dem Meßgerät 407 zu vorgegebenen Eingangsgrößen Konzentrationen gemessen und dem Rechner 409 zugeführt, dort digitalisiert und als Zeitreihenwerte $x_t$ in einem Speicher gemeinsam mit den entsprechenden Eingangsgrößen, die zu den gemessenen Größen korrespondieren, gruppiert.

Die Anordnung aus **Fig.1b** wird unter Verwendung des Trainingsdatensatzes und der Kostenfunktion E trainiert.

Die gemäß dem oben beschriebenen Trainingsverfahren trainierte Anordnung aus **Fig.1b** wird zur Ermittlung chemischer Größen im chemischen Reaktor 400 eingesetzt derart, daß für Eingangsgrößen zu den Zeitpunkten t-2, t-1 und t Prognosegrößen $z_{t+1}$ und $z_{t+2}$ in einer Anwendungsphase von der Anordnung ermittelt werden, die anschließend als Steuergrößen nach einer eventuellen Aufbereitung der ermittelten Größen als Steuergrößen 420, 421 dem Steuerungsmittel 405 zur Steuerung des Rührers 402 oder auch einer Zuflußsteuereinrichtung 430 zur Steuerung des Zuflusses weiterer chemischer Substanzen 403 in dem chemischen Reaktor 400 verwendet werden (vgl. **Fig.4**).

### 2. Ausführungsbeispiel: Mietpreisprognose

In **Fig.3a** (Teilstruktur, implizite Darstellung) und in **Fig.3b** (Gesamtstruktur, implizite Darstellung) sind weitere neuronale Strukturen dargestellt, welche jeweils zu den neuronalen Strukturen in **Fig.1a** und **Fig.1b** äquivalent sind, d.h. es werden die gleichen funktionellen Abbildungen beschrieben.

Die in den **Fig.3a** und **Fig.3b** dargestellten neuronale Strukturen werden für eine Mietpreisprognose verwendet.

Die Eingangsgröße $x_t$ setzt sich in diesem Fall zusammen aus Angaben über einen Mietpreis, einem Wohnraumangebot, einer Inflation und einer Arbeitslosenrate, welche Angaben bezüglich eines zu untersuchenden Wohngebiets jeweils am Jahresende (Dezemberwerte) ermittelt werden. Somit ist die Eingangsgröße ein vierdimensionaler Vektor. Eine Zeitreihe der Eingangsgrößen, welche aus mehreren zeitlich aufeinanderfolgenden Vektoren bestehen, weist Zeitschritte von jeweils einem Jahr auf.

Ziel der im weiteren beschriebenen Modellierung einer Mitpreisbildung ist die Prognose eines Mietpreises.

Die Beschreibung des dynamischen Prozesses der Mietpreisbildung erfolgt unter Verwendung der im weiteren beschriebenen und in der **Fig.3a** (Teilstruktur 300, implizite Darstellung) sowie in der **Fig.3b** (Gesamtstruktur 350, implizite Darstellung) dargestellten neuronalen Netzstrukturen.

Die in **Fig.3a** dargestellte neuronale Teilstruktur 300 weist ein Eingangsneuron 310 auf, dem Eingangsgrößen $x_t$ zu vorgebbaren Zeitpunkten t, d.h. im weiteren beschriebene Zeitreihenwerte mit vorgegebenen Zeitschritten, anlegbar sind. Die Eingangsgröße $x_t$ ist ein mehrdimensionaler Vektor in einem ersten Zustandsraum x (Eingangsraum x) des Systems.

Das Eingangsneuron 310 ist über eine variable Verbindung, welche Gewichte aufweist, die in einer ersten Verbindungsmatrix B enthalten sind, mit einem ersten Zwischenneuron 320 verbunden.

Die erste Verbindungsmatrix B ist eine erweiterte negative Identitätsmatrix, welche derart erweitert ist, daß der negativen Identitätsmatrix -Id Zeilenvektoren, welche jeweils Null-Werte enthalten, zugefügt sind. Der negativen Identitätsmatrix -Id werden Null-Zeilen zugefügt entsprechend einem Dimensionsunterschied, welchen den niederdimensionale Eingangsraum x und der hochdimensionale "innere Systemzustandsraum" z aufweist.

**Fig.3b** zeigt die Gesamtstruktur 350 des neuronalen Netzes, bei dem vier 300, 301, 302, 303 von der im vorherigen beschriebenen und in **Fig.3a** dargestellten Teilstruktur 300 miteinander verbunden sind.

Dabei ist zu bemerken, daß auch mehr als vier Teilstrukturen 300, 301, 302 und 303 wie nachfolgend beschrieben miteinander verbunden sein können.

Die Verbindung von den Teilstrukturen 300, 301, 302 und 303 führt zu einem über die Zeitpunkte t-3, t-2, t-1 und t entfalteten neuronalen Netz mit "shared weights".

Die Verbindung der Teilstrukturen 300, 301, 302 und 303 erfolgt derart, daß jeweils das Zwischenneuron 320 bzw. 322 bzw. 323 bzw. 324 einer ersten Teilstruktur 300 bzw. 301 bzw. 302 bzw. 303 mit einem Zwischenneuron 320 bzw. 322 bzw. 323 bzw. 324 einer zweiten Teilstruktur 300 bzw. 301 bzw. 302 bzw. 303 verbunden ist.

Die Verbindungen weisen jeweils Gewichte auf, welche in einer zweiten Verbindungsmatrix A ("Shared weights") enthalten sind.

Zur Entfaltung des neuronalen Netzes auf einen jüngeren bzw. zukünftigen Zustand t+1 des Systems weist die Gesamtstruktur 350 in **Fig.3b** ein weiteres Zwischenneuron 321 auf. Das weitere Zwischenneuron 321 ist mit dem Zwischenneuron 320 der Teilstruktur 300 über eine variable Verbindung verbunden, wobei die variable Verbindung Gewichte aufweist, die in der zweiten Verbindungsmatrix A enthalten sind.

Aufgrund der beschriebenen Struktur des neuronalen Netzes 350 können an dem weiteren Zwischenneuron 321 Zeitreihenwerte abgegriffen werden, welche zukünftige Zustände t+1 des Systems beschreiben. Damit ist es möglich, das neuronale Netz 350 zu einer Prognose von Systemzuständen einzusetzen.

Diese Prognosefähigkeit ist strukturiell darauf zurückzuführen, daß das weitere Zwischenneuron 321 keine Verbindung mit einem zugehörigen Eingangsneuron aufweist (vgl. erstes Ausführungsbeispiel).

Den besonderen Vorteil, den die in **Fig.3b** dargestellte Anordnung insbesondere durch ihre Struktur aufweist, liegt darin, daß die Anordnung unter Verwendung von nur wenigen Trainingsdaten ein effizientes Training ermöglicht. Dies ist insbesondere dadurch möglich, da durch die jeweils gleichen Gewichte in der Verbindungsmatrix A nur wenige Gewichtsparameter (vgl. erstes Ausführungsbeispiel: Verbindungsmatrizen A, B und C) eingestellt werden müssen.

Für ein Training der oben beschriebenen Anordnung wird ein Verfahren auf der Basis eines Back-Propagation-Verfahrens, wie es in [1] beschrieben ist, verwendet.

Bei dem Training des beschriebenen neuronalen Netzes werden nur die Gewichte, welche in der Verbindungsmatrix A enthalten sind, verändert bzw. angepaßt.

Bei dem aus [1] bekannten Trainingsverfahren wird in der Trainingsphase folgende Kostenfunktion E minimiert:

$$E = \frac{1}{T} \sum_{t=1}^{T} \left( y_t - y_t^d \right)^2 \rightarrow \min_{f,g}, \tag{8}$$

wobei mit T eine Anzahl berücksichtigter Zeitpunkte bezeichnet wird.

Im weiteren werden einige Alternativen zu dem oben beschriebenen Ausführungsbeispielen aufgezeigt.

Die in den Ausführungsbeispielen beschriebenen Anordnungen können jeweils auch für die Ermittlung einer Dynamik eines Elektro-Kardio-Gramms (EKG) eingesetzt werden. Damit lassen sich frühzeitig Indikatoren, die auf ein erhöhtes Herzinfarktrisiko hinweisen, bestimmen. Als Eingangsgröße wird eine Zeitreihe aus an einem Patienten gemessenen EKG-Werten verwendet.

Darüber hinaus können die in den Ausführungsbeispielen beschriebenen Anordnungen auch für die Prognose einer makroökonomischer Dynamik, wie beispielsweise eines Wechselkursverlaufs, oder anderen ökonomischer Kennzahlen, wie beispielsweise eines Börsenkurses, eingesetzt werden. Bei einer derartigen Prognose wird eine Eingangsgröße aus Zeitreihen relevanter makroökonomischer bzw. ökonomischer Kennzahlen, wie beispielsweise Zinsen, Währungen oder Inflationsraten, gebildet.

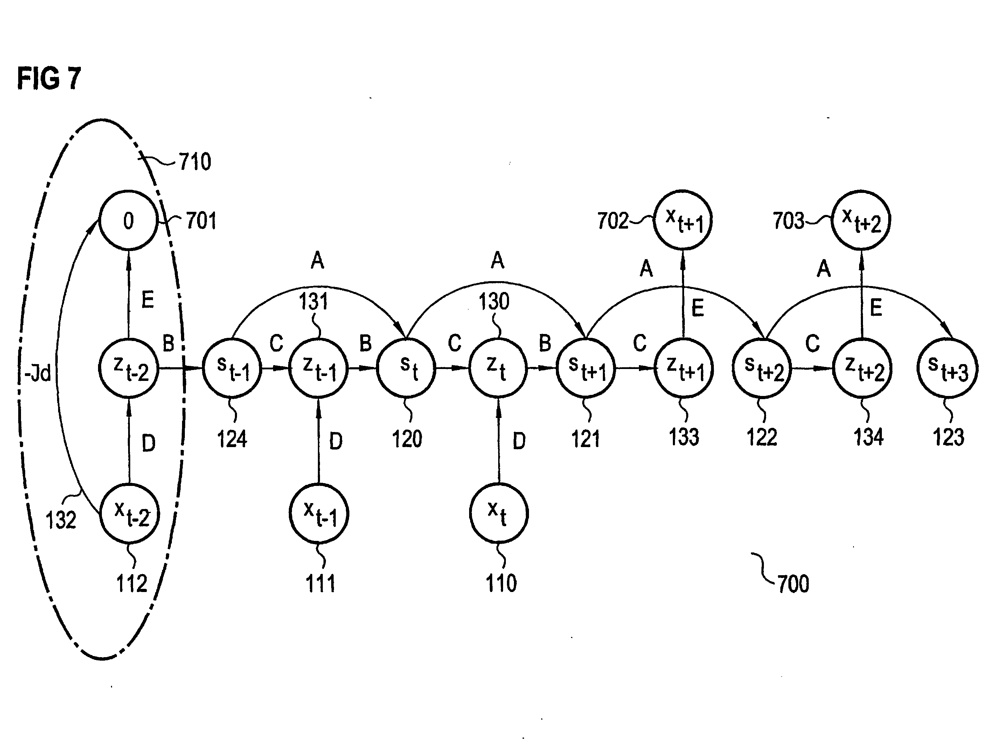

In **Fig.7** ist eine alternative Netzstruktur zu der im Rahmen des ersten Ausführungsbeispiels beschrieben neuronalen Netzstruktur dargestellt.

Gleiche Strukturelemente sind in **Fig.7** und **Fig.3a** bzw. **Fig.3b** gleich bezeichnet.

Bei der alternativen Netzstruktur in **Fig.7** wird das Anfangszwischenneuron 132 mit einem Anfangsausgangsneuron 701 verbunden. Das Anfangsausgangsneuron 701 ist ein Nullneuron.

Die Verbindung zwischen dem Anfangszwischenneuron 132 und dem Anfangsausgangsneuron 701 weist variable Gewichte auf, die in einer Verbindungsmatrix E enthalten sind.

Ferner ist das Anfangseingangsneuron 112 mit dem Anfangsausgangsneuron 701 verbunden. Die Verbindungsmatrix F dieser Verbindung ist die negative Identitätsmatrix -Id.

Eine Teilstruktur 710 umfassend das Anfangseingangsneuron 112, das Anfangszwischenneuron 132 und das Anfangsausgangsneuron 701 weist die Funktionalität eines neuronalen Autoassoziators.

Aus [4] ist ein neuronaler Autoassoziator bekannt (vgl. **Fig.6**).

Das vierte Zwischenneuron 133 und das sechste Zwischenneuron 134 ist jeweils mit einem Ausgangsneuron 702 bzw. 703 verbunden. Die zugehörigen Verbindungen weisen jeweils Gewichte der Verbindungsmatrix E auf.

Das Ausgangsneuron 702 repräsentiert einen Zustand $x_{t+1}$ des Systems zu dem Zeitpunkt t+1 in dem ersten Zustandsraum x. Das Ausgangsneuron 703 repräsentiert einen Zustand $x_{t+2}$ des Systems zu dem Zeitpunkt t+1 in dem ersten Zustandsraum x.

Im weiteren sind mögliche Realisierungen für das oben beschriebenen erste und zweiten Ausführungsbeispiels angegeben für das Programm SENN, Version 2.3. Die Realisierungen umfassen jeweils drei Abschnitte, die jeweils einen Programmcode enthalten, die zur Verarbeitung in SENN, Version 2.3 erforderlich sind.

Realisierung für das erste Ausführungsbeispiel:

**1. Parameter-Datei:**

```
BpNet {
 Globals {
  WtPenalty {
   sel NoPenalty
   Weigend {
    Lambda { 0.000000 }
    AutoAdapt { T }
    w0 { 1.000000 }
    DeltaLambda { 0.000001 }
    ReducFac { 0.900000 }
    Gamma { 0.900000 }
    DesiredError { 0.000000 }
   }
   WtDecay {
    Lambda { 0.030000 }
    AutoAdapt { F }
    AdaptTime { 10 }
    EpsObj { 0.001000 }
    ObjSet { Training }
    EpsilonFac { 1.000000 }
   }
```

```
ExtWtDecay {
  Lambda { 0.001000 }
  AutoAdapt { F }
  AdaptTime { 10 }
  EpsObj { 0.001000 }
  ObjSet { Training }
  EpsilonFac { 1.000000 }
}
Finnoff {
  AutoAdapt { T }
  Lambda { 0.000000 }
  DeltaLambda { 0.000001 }
  ReducFac { 0.900000 }
  Gamma { 0.900000 }
  DesiredError { 0.000000 }
}
}
ErrorFunc {
sel LnCosh
  |x| {
    parameter { 0.050000 }
  }
  LnCosh {
    parameter { 2.000000 }
  }
  parametricalEntropy {
    parameter { 0.000001 }
  }
}
AnySave {
  file_name { f.Globals.dat }
}
AnyLoad {
  file_name { f.Globals.dat }
}
ASCII { T }
}
LearnCtrl {
sel Stochastic
  Stochastic {
    PatternSelection {
    sel Permute
      SubSample {
        Percent { 0.500000 }
      }
      ExpRandom {
        Lambda { 2.000000 }
      }
    }
    WtPruneCtrl {
      PruneSchedule {
      sel FixSchedule
        FixSchedule {
          Limit_0 { 10 }
          Limit_1 { 10 }
          Limit_2 { 10 }
          Limit_3 { 10 }
          RepeatLast { T }
```

```
        }
        DynSchedule {
          MaxLength { 4 }
          MinimumRuns { 0 }
          Training { F }
          Validation { T }
          Generalization { F }
        }
        DivSchedule {
          Divergence { 0.100000 }
          MinEpochs { 5 }
        }
      }
      PruneAlg {
       sel FixPrune
        FixPrune {
          Perc_0 { 0.100000 }
          Perc_1 { 0.100000 }
          Perc_2 { 0.100000 }
          Perc_3 { 0.100000 }
        }
        EpsiPrune {
          DeltaEps { 0.050000 }
          StartEps { 0.050000 }
          MaxEps { 1.000000 }
          ReuseEps { F }
        }
      }
      Tracer {
        Active { F }
        Set { Validation }
        File { trace }
      }
      Active { F }
      Randomize { 0.000000 }
      PruningSet { Train.+Valid. }
      Method { S-Pruning }
    }
    StopControl {
      EpochLimit {
        Active { F }
        MaxEpoch { 60 }
      }
      MovingExpAverage {
        Active { F }
        MaxLength { 4 }
        Training { F }
        Validation { T }
        Generalization { F }
        Decay { 0.900000 }
      }
      CheckObjectiveFct {
        Active { F }
        MaxLength { 4 }
        Training { F }
        Validation { T }
        Generalization { F }
      }
```

```
                CheckDelta {
                  Active { F }
                  Divergence { 0.100000 }
                }
              }
              EtaCtrl {
                Mode {
                  sel EtaSchedule
                  EtaSchedule {
                    SwitchTime { 10 }
                    ReductFactor { 0.950000 }
                  }
                  FuzzCtrl {
                    MaxDeltaObj { 0.300000 }
                    MaxDelta2Obj { 0.300000 }
                    MaxEtaChange { 0.020000 }
                    MinEta { 0.001000 }
                    MaxEta { 0.100000 }
                    Smoother { 1.000000 }
                  }
                }
                Active { F }
              }
              LearnAlgo {
                sel VarioEta
                VarioEta {
                  MinCalls { 50 }
                }
                MomentumBackProp {
                  Alpha { 0.050000 }
                }
                Quickprop {
                  Decay { 0.050000 }
                  Mu { 2.000000 }
                }
              }
              AnySave {
                file_name { f.Stochastic.dat }
              }
              AnyLoad {
                file_name { f.Stochastic.dat }
              }
              BatchSize { 15 }
              Eta { 0.005000 }
              DerivEps { 0.000000 }
            }
            TrueBatch {
              PatternSelection {
               sel Sequential
                SubSample {
                  Percent { 0.500000 }
                }
                ExpRandom {
                  Lambda { 2.000000 }
                }
              }
              WtPruneCtrl {
                Tracer {
```

```
        Active { F }
         Set { Validation }
         File { trace }
        }
        Active { F }
        Randomize { 0.000000 }
        PruningSet { Train.+Valid. }
        Method { S-Pruning }
       }
      EtaCtrl {
        Active { F }
      }
      LearnAlgo {
       sel VarioEta
        VarioEta {
          MinCalls { 200 }
        }
        MomentumBackProp {
          Alpha { 0.050000 }
        }
        Quickprop {
          Decay { 0.050000 }
          Mu { 2.000000 }
        }
      }
      AnySave {
        file_name { f.TrueBatch.dat }
      }
      AnyLoad {
        file_name { f.TrueBatch.dat }
      }
      Eta { 0.050000 }
      DerivEps { 0.000000 }
    }
    LineSearch {
     PatternSelection {
      sel Sequential
       SubSample {
         Percent { 0.500000 }
       }
       ExpRandom {
         Lambda { 2.000000 }
       }
     }
     WtPruneCtrl {
       Tracer {
         Active { F }
         Set { Validation }
         File { trace }
       }
       Active { F }
       Randomize { 0.000000 }
       PruningSet { Train.+Valid. }
       Method { S-Pruning }
     }
     LearnAlgo {
      sel ConjGradient
       VarioEta {
```

16

```
          MinCalls { 200 }
        }
        MomentumBackProp {
          Alpha { 0.050000 }
        }
        Quickprop {
          Decay { 0.050000 }
          Mu { 2.000000 }
        }
        Low-Memory-BFGS {
          Limit { 2 }
        }
      }
      AnySave {
        file_name { f.LineSearch.dat }
      }
      AnyLoad {
        file_name { f.LineSearch.dat }
      }
      EtaNull { 1.000000 }
      MaxSteps { 10 }
      LS_Precision { 0.500000 }
      TrustRegion { T }
      DerivEps { 0.000000 }
      BatchSize { 2147483647 }
    }
    GeneticWeightSelect {
      PatternSelection {
       sel Sequential
        SubSample {
          Percent { 0.500000 }
        }
        ExpRandom {
          Lambda { 2.000000 }
        }
      }
      LearnAlgo {
       sel VarioEta
        VarioEta {
          MinCalls { 200 }
        }
        MomentumBackProp {
          Alpha { 0.050000 }
        }
      }
      ObjFctTracer {
        Active { F }
        File { objFunc }
      }
      SearchControl {
        SearchStrategy {
         sel HillClimberControl
          HillClimberControl {
            %InitialAlive { 0.950000 }
            InheritWeights { T }
            Beta { 0.100000 }
            MutationType { DistributedMacroMutation }
            MaxTrials { 50 }
```

```
            }
          PBILControl {
            %InitialAlive { 0.950000 }
            InheritWeights { T }
            Beta { 0.100000 }
            Alpha { 0.100000 }
            PopulationSize { 40 }
          }
          PopulationControl {
            pCrossover { 1.000000 }
            CrossoverType { SimpleCrossover }
            Scaling { T }
            ScalingFactor { 2.000000 }
            Sharing { T }
            SharingFactor { 0.050000 }
            PopulationSize { 50 }
            min.%InitialAlive { 0.010000 }
            max.%InitialAlive { 0.100000 }
          }
        }
        pMutation { 0.000000 }
      }
      ObjectiveFunctionWeights {
        %Alive { 0.600000 }
        E(TS) { 0.200000 }
        Improvement(TS) { 0.000000 }
        E(VS) { 1.000000 }
        Improvement(VS) { 0.000000 }
        (E(TS)-E(VS))/max(E(TS),E(VS)) { 0.000000 }
        LipComplexity { 0.000000 }
        OptComplexity { 2.000000 }
        testVal(dead)-testVal(alive) { 0.000000 }
      }
      AnySave {
        file_name { f.GeneticWeightSelect.dat }
      }
      AnyLoad {
        file_name { f.GeneticWeightSelect.dat }
      }
      Eta { 0.050000 }
      DerivEps { 0.000000 }
      BatchSize { 5 }
      #minEpochsForFitnessTest { 2 }
      #maxEpochsForFitnessTest { 3 }
      SelectWeights { T }
      SelectNodes { T }
      maxGrowthOfValError { 0.005000 }
    }
  }
CCMenu {
  Clusters {
    mlp.input76 {
      ActFunction {
      sel id
        plogistic {
          parameter { 0.500000 }
        }
        ptanh {
```

```
      parameter { 0.500000 }
    }
    pid {
      parameter { 0.500000 }
    }
  }
  InputModification {
  sel None
   AdaptiveUniformNoise {
     NoiseEta { 1.000000 }
     DampingFactor { 1.000000 }
   }
   AdaptiveGaussNoise {
     NoiseEta { 1.000000 }
     DampingFactor { 1.000000 }
   }
   FixedUniformNoise {
     SetNoiseLevel {
       NewNoiseLevel { 0.000000 }
     }
   }
   FixedGaussNoise {
     SetNoiseLevel {
       NewNoiseLevel { 0.000000 }
     }
   }
  }
  SaveNoiseLevel {
   Filename { noise_level.dat }
  }
  LoadNoiseLevel {
   Filename { noise_level.dat }
  }
  SaveManipulatorData {
   Filename { inputManip.dat }
  }
  LoadManipulatorData {
   Filename { inputManip.dat }
  }
  Norm { NoNorm }
 }
 mlp.input65 {
  ActFunction {
  sel id
   plogistic {
     parameter { 0.500000 }
   }
   ptanh {
     parameter { 0.500000 }
   }
   pid {
     parameter { 0.500000 }
   }
  }
  InputModification {
  sel None
   AdaptiveUniformNoise {
     NoiseEta { 1.000000 }
```

```
          DampingFactor { 1.000000 }
        }
        AdaptiveGaussNoise {
          NoiseEta { 1.000000 }
          DampingFactor { 1.000000 }
        }
        FixedUniformNoise {
          SetNoiseLevel {
            NewNoiseLevel { 0.000000 }
          }
        }
        FixedGaussNoise {
          SetNoiseLevel {
            NewNoiseLevel { 0.000000 }
          }
        }
      }
      SaveNoiseLevel {
        Filename { noise_level.dat }
      }
      LoadNoiseLevel {
        Filename { noise_level.dat }
      }
      SaveManipulatorData {
        Filename { inputManip.dat }
      }
      LoadManipulatorData {
        Filename { inputManip.dat }
      }
      Norm { NoNorm }
    }
    mlp.input54 {
      ActFunction {
       sel id
        plogistic {
          parameter { 0.500000 }
        }
        ptanh {
          parameter { 0.500000 }
        }
        pid {
          parameter { 0.500000 }
        }
      }
      InputModification {
       sel None
        AdaptiveUniformNoise {
          NoiseEta { 1.000000 }
          DampingFactor { 1.000000 }
        }
        AdaptiveGaussNoise {
          NoiseEta { 1.000000 }
          DampingFactor { 1.000000 }
        }
        FixedUniformNoise {
          SetNoiseLevel {
            NewNoiseLevel { 0.000000 }
          }
```

```
        }
        FixedGaussNoise {
          SetNoiseLevel {
            NewNoiseLevel { 0.000000 }
          }
        }
      }
      SaveNoiseLevel {
        Filename { noise_level.dat }
      }
      LoadNoiseLevel {
        Filename { noise_level.dat }
      }
      SaveManipulatorData {
        Filename { inputManip.dat }
      }
      LoadManipulatorData {
        Filename { inputManip.dat }
      }
      Norm { NoNorm }
    }
    mlp.input43 {
      ActFunction {
        sel id
        plogistic {
          parameter { 0.500000 }
        }
        ptanh {
          parameter { 0.500000 }
        }
        pid {
          parameter { 0.500000 }
        }
      }
      InputModification {
        sel None
        AdaptiveUniformNoise {
          NoiseEta { 1.000000 }
          DampingFactor { 1.000000 }
        }
        AdaptiveGaussNoise {
          NoiseEta { 1.000000 }
          DampingFactor { 1.000000 }
        }
        FixedUniformNoise {
          SetNoiseLevel {
            NewNoiseLevel { 0.000000 }
          }
        }
        FixedGaussNoise {
          SetNoiseLevel {
            NewNoiseLevel { 0.000000 }
          }
        }
      }
      SaveNoiseLevel {
        Filename { noise_level.dat }
      }
```

```
LoadNoiseLevel {
  Filename { noise_level.dat }
}
SaveManipulatorData {
  Filename { inputManip.dat }
}
LoadManipulatorData {
  Filename { inputManip.dat }
}
Norm { NoNorm }
}
mlp.input32 {
  ActFunction {
  sel id
   plogistic {
     parameter { 0.500000 }
   }
   ptanh {
     parameter { 0.500000 }
   }
   pid {
     parameter { 0.500000 }
   }
  }
  InputModification {
  sel None
   AdaptiveUniformNoise {
     NoiseEta { 1.000000 }
     DampingFactor { 1.000000 }
   }
   AdaptiveGaussNoise {
     NoiseEta { 1.000000 }
     DampingFactor { 1.000000 }
   }
   FixedUniformNoise {
     SetNoiseLevel {
       NewNoiseLevel { 0.000000 }
     }
   }
   FixedGaussNoise {
     SetNoiseLevel {
       NewNoiseLevel { 0.000000 }
     }
   }
  }
SaveNoiseLevel {
  Filename { noise_level.dat }
}
LoadNoiseLevel {
  Filename { noise_level.dat }
}
SaveManipulatorData {
  Filename { inputManip.dat }
}
LoadManipulatorData {
  Filename { inputManip.dat }
}
Norm { NoNorm }
```

```
  }
  mlp.input21 {
    ActFunction {
    sel id
      plogistic {
        parameter { 0.500000 }
      }
      ptanh {
        parameter { 0.500000 }
      }
      pld {
        parameter { 0.500000 }
      }
    }
    InputModification {
    sel None
      AdaptiveUniformNoise {
        NoiseEta { 1.000000 }
        DampingFactor { 1.000000 }
      }
      AdaptiveGaussNoise {
        NoiseEta { 1.000000 }
        DampingFactor { 1.000000 }
      }
      FixedUniformNoise {
        SetNoiseLevel {
          NewNoiseLevel { 0.000000 }
        }
      }
      FixedGaussNoise {
        SetNoiseLevel {
          NewNoiseLevel { 0.000000 }
        }
      }
    }
    SaveNoiseLevel {
      Filename { noise_level.dat }
    }
    LoadNoiseLevel {
      Filename { noise_level.dat }
    }
    SaveManipulatorData {
      Filename { inputManip.dat }
    }
    LoadManipulatorData {
      Filename { inputManip.dat }
    }
    Norm { NoNorm }
  }
  mlp.input10 {
    ActFunction {
    sel id
      plogistic {
        parameter { 0.500000 }
      }
      ptanh {
        parameter { 0.500000 }
      }
```

```
pid {
  parameter { 0.500000 }
  }
}
InputModification {
 sel None
  AdaptiveUniformNoise {
    NoiseEta { 1.000000 }
    DampingFactor { 1.000000 }
  }
  AdaptiveGaussNoise {
    NoiseEta { 1.000000 }
    DampingFactor { 1.000000 }
  }
  FixedUniformNoise {
    SetNoiseLevel {
      NewNoiseLevel { 0.000000 }
    }
  }
  FixedGaussNoise {
    SetNoiseLevel {
      NewNoiseLevel { 0.000000 }
    }
  }
  SaveNoiseLevel {
   Filename { noise_level.dat }
  }
  LoadNoiseLevel {
   Filename { noise_level.dat }
  }
  SaveManipulatorData {
   Filename { inputManip.dat }
  }
  LoadManipulatorData {
   Filename { inputManip.dat }
  }
  Norm { NoNorm }
}
mlp.past6 {
  ActFunction {
   sel tanh
    plogistic {
      parameter { 0.500000 }
    }
    ptanh {
      parameter { 0.500000 }
    }
    pid {
      parameter { 0.500000 }
    }
  }
  Norm { NoNorm }
}
mlp.past5 {
  ActFunction {
   sel tanh
    plogistic {
```

```
                parameter { 0.500000 }
              }
              ptanh {
                parameter { 0.500000 }
              }
              pid {
                parameter { 0.500000 }
              }
            }
            Norm { NoNorm }
          }
          mlp.past4 {
            ActFunction {
            sel tanh
              plogistic {
                parameter { 0.500000 }
              }
              ptanh {
                parameter { 0.500000 }
              }
              pid {
                parameter { 0.500000 }
              }
            }
            Norm { NoNorm }
          }
          mlp.past3 {
            ActFunction {
            sel tanh
              plogistic {
                parameter { 0.500000 }
              }
              ptanh {
                parameter { 0.500000 }
              }
              pid {
                parameter { 0.500000 }
              }
            }
            Norm { NoNorm }
          }
          mlp.past2 {
            ActFunction {
            sel tanh
              plogistic {
                parameter { 0.500000 }
              }
              ptanh {
                parameter { 0.500000 }
              }
              pid {
                parameter { 0.500000 }
              }
            }
            Norm { NoNorm }
          }
          mlp.past1 {
            ActFunction {
```

25

```
      sel tanh
       plogistic {
         parameter { 0.500000 }
       }
       ptanh {
         parameter { 0.500000 }
       }
       pid {
         parameter { 0.500000 }
       }
      }
     Norm { NoNorm }
    }
   mlp.present {
    ActFunction {
     sel tanh
      plogistic {
        parameter { 0.500000 }
      }
      ptanh {
        parameter { 0.500000 }
      }
      pid {
        parameter { 0.500000 }
      }
     }
     Norm { NoNorm }
    }
   mlp.future1 {
    ActFunction {
     sel tanh
      plogistic {
        parameter { 0.500000 }
      }
      ptanh {
        parameter { 0.500000 }
      }
      pid {
        parameter { 0.500000 }
      }
     }
     Norm { NoNorm }
    }
   mlp.future2 {
    ActFunction {
     sel tanh
      plogistic {
        parameter { 0.500000 }
      }
      ptanh {
        parameter { 0.500000 }
      }
      pid {
        parameter { 0.500000 }
      }
     }
     Norm { NoNorm }
    }
```

```
mlp.future3 {
  ActFunction {
   sel tanh
    plogistic {
      parameter { 0.500000 }
    }
    ptanh {
      parameter { 0.500000 }
    }
    pid {
      parameter { 0.500000 }
    }
  }
  Norm { NoNorm }
}
mlp.future4 {
  ActFunction {
   sel tanh
    plogistic {
      parameter { 0.500000 }
    }
    ptanh {
      parameter { 0.500000 }
    }
    pid {
      parameter { 0.500000 }
    }
  }
  Norm { NoNorm }
}
mlp.zero76 {
  ActFunction {
   sel tanh
    plogistic {
      parameter { 0.500000 }
    }
    ptanh {
      parameter { 0.500000 }
    }
    pid {
      parameter { 0.500000 }
    }
  }
  ErrorFunc {
   sel LnCosh
    |x| {
      parameter { 0.050000 }
    }
    LnCosh {
      parameter { 2.000000 }
    }
    parametricalEntropy {
      parameter { 0.000001 }
    }
  }
  Norm { NoNorm }
  ToleranceFlag { F }
```

```
        Tolerance { 0.000000 0.000000 0.000000 0.000000 0.000000 0.000000 0.000000 0.000000
0.000000 0.000000 0.000000 }
        Weighting { 1.000000 1.000000 1.000000 1.000000 1.000000 1.000000 1.000000 1.000000
1.000000 1.000000 1.000000 }
        }
       mlp.zero65 {
        ActFunction {
        sel tanh
         plogistic {
           parameter { 0.500000 }
         }
         ptanh {
           parameter { 0.500000 }
         }
         pid {
           parameter { 0.500000 }
         }
        }
        ErrorFunc {
        sel LnCosh
        |x| {
           parameter { 0.050000 }
        }
        LnCosh {
           parameter { 2.000000 }
        }
        parametricalEntropy {
           parameter { 0.000001 }
        }
        }
       Norm { NoNorm }
       ToleranceFlag { F }
        Tolerance { 0.000000 0.000000 0.000000 0.000000 0.000000 0.000000 0.000000 0.000000
0.000000 0.000000 0.000000 }
        Weighting { 1.000000 1.000000 1.000000 1.000000 1.000000 1.000000 1.000000 1.000000
1.000000 1.000000 1.000000 }
        }
       mlp.zero54 {
        ActFunction {
        sel tanh
         plogistic {
           parameter { 0.500000 }
         }
         ptanh {
           parameter { 0.500000 }
         }
         pid {
           parameter { 0.500000 }
         }
        }
        ErrorFunc {
        sel LnCosh
        |x| {
           parameter { 0.050000 }
        }
        LnCosh {
           parameter { 2.000000 }
        }
```

```
          parametricalEntropy {
            parameter { 0.000001 }
          }
        }
        Norm { NoNorm }
        ToleranceFlag { F }
        Tolerance { 0.000000 0.000000 0.000000 0.000000 0.000000 0.000000 0.000000 0.000000
0.000000 0.000000 0.000000 }
        Weighting { 1.000000 1.000000 1.000000 1.000000 1.000000 1.000000 1.000000 1.000000
1.000000 1.000000 1.000000 }
      }
      mlp.zero43 {
        ActFunction {
        sel tanh
          plogistic {
            parameter { 0.500000 }
          }
          ptanh {
            parameter { 0.500000 }
          }
          pid {
            parameter { 0.500000 }
          }
        }
        ErrorFunc {
        sel LnCosh
        |x| {
            parameter { 0.050000 }
          }
          LnCosh {
            parameter { 2.000000 }
          }
          parametricalEntropy {
            parameter { 0.000001 }
          }
        }
        Norm { NoNorm }
        ToleranceFlag { F }
        Tolerance { 0.000000 0.000000 0.000000 0.000000 0.000000 0.000000 0.000000 0.000000
0.000000 0.000000 0.000000 }
        Weighting { 1.000000 1.000000 1.000000 1.000000 1.000000 1.000000 1.000000 1.000000
1.000000 1.000000 1.000000 }
      }
      mlp.zero32 {
        ActFunction {
        sel tanh
          plogistic {
            parameter { 0.500000 }
          }
          ptanh {
            parameter { 0.500000 }
          }
          pid {
            parameter { 0.500000 }
          }
        }
        ErrorFunc {
        sel LnCosh
```

29

```
        |x| {
          parameter { 0.050000 }
        }
        LnCosh {
          parameter { 2.000000 }
        }
        parametricalEntropy {
          parameter { 0.000001 }
        }
      }
      Norm { NoNorm }
      ToleranceFlag { F }
      Tolerance { 0.000000 0.000000 0.000000 0.000000 0.000000 0.000000 0.000000 0.000000
0.000000 0.000000 0.000000 }
      Weighting { 1.000000 1.000000 1.000000 1.000000 1.000000 1.000000 1.000000 1.000000
1.000000 1.000000 1.000000 }
    }
    mlp.zero21 {
      ActFunction {
      sel tanh
        plogistic {
          parameter { 0.500000 }
        }
        ptanh {
          parameter { 0.500000 }
        }
        pid {
          parameter { 0.500000 }
        }
      }
      ErrorFunc {
      sel LnCosh
        |x| {
          parameter { 0.050000 }
        }
        LnCosh {
          parameter { 2.000000 }
        }
        parametricalEntropy {
          parameter { 0.000001 }
        }
      }
      Norm { NoNorm }
      ToleranceFlag { F }
      Tolerance { 0.000000 0.000000 0.000000 0.000000 0.000000 0.000000 0.000000 0.000000
0.000000 0.000000 0.000000 }
      Weighting { 1.000000 1.000000 1.000000 1.000000 1.000000 1.000000 1.000000 1.000000
1.000000 1.000000 1.000000 }
    }
    mlp.zero10 {
      ActFunction {
      sel tanh
        plogistic {
          parameter { 0.500000 }
        }
        ptanh {
          parameter { 0.500000 }
        }
```

```
      pid {
        parameter { 0.500000 }
      }
    }
    ErrorFunc {
     sel LnCosh
     |x| {
        parameter { 0.050000 }
      }
     LnCosh {
        parameter { 2.000000 }
      }
     parametricalEntropy {
        parameter { 0.000001 }
      }
    }
    Norm { NoNorm }
    ToleranceFlag { F }
    Tolerance { 0.000000 0.000000 0.000000 0.000000 0.000000 0.000000 0.000000 0.000000
0.000000 0.000000 0.000000 }
    Weighting { 1.000000 1.000000 1.000000 1.000000 1.000000 1.000000 1.000000 1.000000
1.000000 1.000000 1.000000 }
    }
   mlp.zero01 {
    ActFunction {
     sel id
     plogistic {
        parameter { 0.500000 }
      }
     ptanh {
        parameter { 0.500000 }
      }
     pid {
        parameter { 0.500000 }
      }
    }
    ErrorFunc {
     sel LnCosh
     |x| {
        parameter { 0.050000 }
      }
     LnCosh {
        parameter { 2.000000 }
      }
     parametricalEntropy {
        parameter { 0.000001 }
      }
    }
    Norm { NoNorm }
    ToleranceFlag { F }
    Tolerance { 0.000000 0.000000 0.000000 0.000000 0.000000 0.000000 0.000000 0.000000
0.000000 0.000000 0.000000 }
    Weighting { 1.000000 0.000000 0.000000 0.000000 0.000000 0.000000 0.000000 0.000000
0.000000 0.000000 0.000000 }
    }
   mlp.zero12 {
    ActFunction {
     sel id
```

```
plogistic {
  parameter { 0.500000 }
}
ptanh {
  parameter { 0.500000 }
}
pid {
  parameter { 0.500000 }
}
}
ErrorFunc {
 sel LnCosh
 |x| {
  parameter { 0.050000 }
}
LnCosh {
  parameter { 2.000000 }
}
parametricalEntropy {
  parameter { 0.000001 }
}
}
Norm { NoNorm }
ToleranceFlag { F }
Tolerance { 0.000000 0.000000 0.000000 0.000000 0.000000 0.000000 0.000000 0.000000
0.000000 0.000000 0.000000 }
Weighting { 1.000000 0.000000 0.000000 0.000000 0.000000 0.000000 0.000000 0.000000
0.000000 0.000000 0.000000 }
}
mlp.zero23 {
  ActFunction {
   sel id
    plogistic {
     parameter { 0.500000 }
   }
   ptanh {
     parameter { 0.500000 }
   }
   pid {
     parameter { 0.500000 }
   }
  }
  ErrorFunc {
   sel LnCosh
   |x| {
    parameter { 0.050000 }
   }
  LnCosh {
    parameter { 2.000000 }
  }
  parametricalEntropy {
    parameter { 0.000001 }
  }
  }
  Norm { NoNorm }
  ToleranceFlag { F }
  Tolerance { 0.000000 0.000000 0.000000 0.000000 0.000000 0.000000 0.000000 0.000000
0.000000 0.000000 0.000000 }
```

```
      Weighting { 1.000000 0.000000 0.000000 0.000000 0.000000 0.000000 0.000000 0.000000
0.000000 0.000000 0.000000 }
    }
    mlp.zero34 {
     ActFunction {
      sel id
       plogistic {
         parameter { 0.500000 }
       }
       ptanh {
         parameter { 0.500000 }
       }
       pid {
         parameter { 0.500000 }
       }
     }
     ErrorFunc {
      sel LnCosh
      |x| {
         parameter { 0.050000 }
      }
      LnCosh {
         parameter { 2.000000 }
      }
      parametricalEntropy {
         parameter { 0.000001 }
      }
     }
     Norm { NoNorm }
     ToleranceFlag { F }
     Tolerance { 0.000000 0.000000 0.000000 0.000000 0.000000 0.000000 0.000000 0.000000
0.000000 0.000000 0.000000 }
      Weighting { 1.000000 0.000000 0.000000 0.000000 0.000000 0.000000 0.000000 0.000000
0.000000 0.000000 0.000000 }
    }
    mlp.zero45 {
     ActFunction {
      sel id
       plogistic {
         parameter { 0.500000 }
       }
       ptanh {
         parameter { 0.500000 }
       }
       pid {
         parameter { 0.500000 }
       }
     }
     ErrorFunc {
      sel LnCosh
      |x| {
         parameter { 0.050000 }
      }
      LnCosh {
         parameter { 2.000000 }
      }
      parametricalEntropy {
         parameter { 0.000001 }
```

```
        }
      }
      Norm { NoNorm }
      ToleranceFlag { F }
      Tolerance { 0.000000 0.000000 0.000000 0.000000 0.000000 0.000000 0.000000 0.000000
0.000000 0.000000 0.000000 }
      Weighting { 1.000000 0.000000 0.000000 0.000000 0.000000 0.000000 0.000000 0.000000
0.000000 0.000000 0.000000 }
    }
  }
  Connectors {
   mlp.zero76->past6 {
     WeightWatcher {
       Active { F }
       MaxWeight { 1.000000 }
       MinWeight { 0.000000 }
     }
     LoadWeightsLocal {
       Filename { std }
     }
     SaveWeightsLocal {
       Filename { std }
     }
     Alive { T }
     WtFreeze { F }
     AllowPruning { F }
     EtaModifier { 1.000000 }
     Penalty { WtDecay }
   }
   mlp.past6->past5 {
     WeightWatcher {
       Active { F }
       MaxWeight { 1.000000 }
       MinWeight { 0.000000 }
     }
     LoadWeightsLocal {
       Filename { std }
     }
     SaveWeightsLocal {
       Filename { std }
     }
     Alive { T }
     WtFreeze { F }
     AllowPruning { F }
     EtaModifier { 1.000000 }
     Penalty { NoPenalty }
   }
   mlp.zero65->past5 {
     LoadWeightsLocal {
       Filename { std }
     }
     SaveWeightsLocal {
       Filename { std }
     }
     Alive { T }
     WtFreeze { F }
     AllowPruning { F }
     EtaModifier { 1.000000 }
```

```
        Penalty { WtDecay }
      }
      mlp.past5->past4 {
        LoadWeightsLocal {
          Filename { std }
        }
        SaveWeightsLocal {
          Filename { std }
        }
        Alive { T }
        WtFreeze { F }
        AllowPruning { F }
        EtaModifier { 1.000000 }
        Penalty { NoPenalty }
      }
      mlp.zero54->past4 {
        LoadWeightsLocal {
          Filename { std }
        }
        SaveWeightsLocal {
          Filename { std }
        }
        Alive { T }
        WtFreeze { F }
        AllowPruning { F }
        EtaModifier { 1.000000 }
        Penalty { WtDecay }
      }
      mlp.past4->past3 {
        LoadWeightsLocal {
          Filename { std }
        }
        SaveWeightsLocal {
          Filename { std }
        }
        Alive { T }
        WtFreeze { F }
        AllowPruning { F }
        EtaModifier { 1.000000 }
        Penalty { NoPenalty }
      }
      mlp.zero43->past3 {
        LoadWeightsLocal {
          Filename { std }
        }
        SaveWeightsLocal {
          Filename { std }
        }
        Alive { T }
        WtFreeze { F }
        AllowPruning { F }
        EtaModifier { 1.000000 }
        Penalty { WtDecay }
      }
      mlp.past3->past2 {
        LoadWeightsLocal {
          Filename { std }
        }
```

```
      SaveWeightsLocal {
        Filename { std }
      }
      Alive { T }
      WtFreeze { F }
      AllowPruning { F }
      EtaModifier { 1.000000 }
      Penalty { NoPenalty }
    }
    mlp.zero32->past2 {
      LoadWeightsLocal {
        Filename { std }
      }
      SaveWeightsLocal {
        Filename { std }
      }
      Alive { T }
      WtFreeze { F }
      AllowPruning { F }
      EtaModifier { 1.000000 }
      Penalty { WtDecay }
    }
    mlp.past2->past1 {
      LoadWeightsLocal {
        Filename { std }
      }
      SaveWeightsLocal {
        Filename { std }
      }
      Alive { T }
      WtFreeze { F }
      AllowPruning { F }
      EtaModifier { 1.000000 }
      Penalty { NoPenalty }
    }
    mlp.zero21->past1 {
      LoadWeightsLocal {
        Filename { std }
      }
      SaveWeightsLocal {
        Filename { std }
      }
      Alive { T }
      WtFreeze { F }
      AllowPruning { F }
      EtaModifier { 1.000000 }
      Penalty { WtDecay }
    }
    mlp.past1->present {
      LoadWeightsLocal {
        Filename { std }
      }
      SaveWeightsLocal {
        Filename { std }
      }
      Alive { T }
      WtFreeze { F }
      AllowPruning { F }
```

```
      EtaModifier { 1.000000 }
      Penalty { NoPenalty }
    }
    mlp.zero10->present {
      LoadWeightsLocal {
        Filename { std }
      }
      SaveWeightsLocal {
        Filename { std }
      }
      Alive { T }
      WtFreeze { F }
      AllowPruning { F }
      EtaModifier { 1.000000 }
      Penalty { WtDecay }
    }
    mlp.present->future1 {
      LoadWeightsLocal {
        Filename { std }
      }
      SaveWeightsLocal {
        Filename { std }
      }
      Alive { T }
      WtFreeze { F }
      AllowPruning { F }
      EtaModifier { 1.000000 }
      Penalty { NoPenalty }
    }
    mlp.future1->future2 {
      LoadWeightsLocal {
        Filename { std }
      }
      SaveWeightsLocal {
        Filename { std }
      }
      Alive { T }
      WtFreeze { F }
      AllowPruning { F }
      EtaModifier { 1.000000 }
      Penalty { NoPenalty }
    }
    mlp.future2->future3 {
      LoadWeightsLocal {
        Filename { std }
      }
      SaveWeightsLocal {
        Filename { std }
      }
      Alive { T }
      WtFreeze { F }
      AllowPruning { F }
      EtaModifier { 1.000000 }
      Penalty { NoPenalty }
    }
    mlp.future3->future4 {
      LoadWeightsLocal {
        Filename { std }
```

```
    }
    SaveWeightsLocal {
      Filename { std }
    }
    Alive { T }
    WtFreeze { F }
    AllowPruning { F }
    EtaModifier { 1.000000 }
    Penalty { NoPenalty }
}
mlp.input76->zero76 {
    WeightWatcher {
      Active { F }
      MaxWeight { 1.000000 }
      MinWeight { 0.000000 }
    }
    LoadWeightsLocal {
      Filename { std }
    }
    SaveWeightsLocal {
      Filename { std }
    }
    Alive { T }
    WtFreeze { T }
    AllowPruning { F }
    EtaModifier { 1.000000 }
    Penalty { NoPenalty }
}
mlp.input65->zero65 {
    LoadWeightsLocal {
      Filename { std }
    }
    SaveWeightsLocal {
      Filename { std }
    }
    Alive { T }
    WtFreeze { T }
    AllowPruning { F }
    EtaModifier { 1.000000 }
    Penalty { NoPenalty }
}
mlp.past6->zero65 {
    WeightWatcher {
      Active { F }
      MaxWeight { 1.000000 }
      MinWeight { 0.000000 }
    }
    LoadWeightsLocal {
      Filename { std }
    }
    SaveWeightsLocal {
      Filename { std }
    }
    Alive { T }
    WtFreeze { F }
    AllowPruning { F }
    EtaModifier { 1.000000 }
    Penalty { NoPenalty }
```

```
          }
        mlp.input54->zero54 {
          LoadWeightsLocal {
            Filename { std }
          }
          SaveWeightsLocal {
            Filename { std }
          }
          Alive { T }
          WtFreeze { T }
          AllowPruning { F }
          EtaModifier { 1.000000 }
          Penalty { NoPenalty }
        }
        mlp.past5->zero54 {
          LoadWeightsLocal {
            Filename { std }
          }
          SaveWeightsLocal {
            Filename { std }
          }
          Alive { T }
          WtFreeze { F }
          AllowPruning { F }
          EtaModifier { 1.000000 }
          Penalty { NoPenalty }
        }
        mlp.input43->zero43 {
          LoadWeightsLocal {
            Filename { std }
          }
          SaveWeightsLocal {
            Filename { std }
          }
          Alive { T }
          WtFreeze { T }
          AllowPruning { F }
          EtaModifier { 1.000000 }
          Penalty { NoPenalty }
        }
        mlp.past4->zero43 {
          LoadWeightsLocal {
            Filename { std }
          }
          SaveWeightsLocal {
            Filename { std }
          }
          Alive { T }
          WtFreeze { F }
          AllowPruning { F }
          EtaModifier { 1.000000 }
          Penalty { NoPenalty }
        }
        mlp.input32->zero32 {
          LoadWeightsLocal {
            Filename { std }
          }
          SaveWeightsLocal {
```

```
      Filename { std }
    }
    Alive { T }
    WtFreeze { T }
    AllowPruning { F }
    EtaModifier { 1.000000 }
    Penalty { NoPenalty }
}
mlp.past3->zero32 {
    LoadWeightsLocal {
      Filename { std }
    }
    SaveWeightsLocal {
      Filename { std }
    }
    Alive { T }
    WtFreeze { F }
    AllowPruning { F }
    EtaModifier { 1.000000 }
    Penalty { NoPenalty }
}
mlp.input21->zero21 {
    LoadWeightsLocal {
      Filename { std }
    }
    SaveWeightsLocal {
      Filename { std }
    }
    Alive { T }
    WtFreeze { T }
    AllowPruning { F }
    EtaModifier { 1.000000 }
    Penalty { NoPenalty }
}
mlp.past2->zero21 {
    LoadWeightsLocal {
      Filename { std }
    }
    SaveWeightsLocal {
      Filename { std }
    }
    Alive { T }
    WtFreeze { F }
    AllowPruning { F }
    EtaModifier { 1.000000 }
    Penalty { NoPenalty }
}
mlp.input10->zero10 {
    LoadWeightsLocal {
      Filename { std }
    }
    SaveWeightsLocal {
      Filename { std }
    }
    Alive { T }
    WtFreeze { T }
    AllowPruning { F }
    EtaModifier { 1.000000 }
```

```
    Penalty { NoPenalty }
}
mlp.past1->zero10 {
  LoadWeightsLocal {
    Filename { std }
  }
  SaveWeightsLocal {
    Filename { std }
  }
  Alive { T }
  WtFreeze { F }
  AllowPruning { F }
  EtaModifier { 1.000000 }
  Penalty { NoPenalty }
}
mlp.present->zero01 {
  LoadWeightsLocal {
    Filename { std }
  }
  SaveWeightsLocal {
    Filename { std }
  }
  Alive { T }
  WtFreeze { F }
  AllowPruning { F }
  EtaModifier { 1.000000 }
  Penalty { NoPenalty }
}
mlp.future1->zero12 {
  LoadWeightsLocal {
    Filename { std }
  }
  SaveWeightsLocal {
    Filename { std }
  }
  Alive { T }
  WtFreeze { F }
  AllowPruning { F }
  EtaModifier { 1.000000 }
  Penalty { NoPenalty }
}
mlp.future2->zero23 {
  LoadWeightsLocal {
    Filename { std }
  }
  SaveWeightsLocal {
    Filename { std }
  }
  Alive { T }
  WtFreeze { F }
  AllowPruning { F }
  EtaModifier { 1.000000 }
  Penalty { NoPenalty }
}
mlp.future3->zero34 {
  LoadWeightsLocal {
    Filename { std }
  }
```

```
        SaveWeightsLocal {
          Filename { std }
        }
        Alive { T }
        WtFreeze { F }
        AllowPruning { F }
        EtaModifier { 1.000000 }
        Penalty { NoPenalty }
      }
      mlp.future4->zero45 {
        LoadWeightsLocal {
          Filename { std }
        }
        SaveWeightsLocal {
          Filename { std }
        }
        Alive { T }
        WtFreeze { F }
        AllowPruning { F }
        EtaModifier { 1.000000 }
        Penalty { NoPenalty }
      }
    }
    AnySave {
      file_name { f.CCMenu.dat }
    }
    AnyLoad {
      file_name { f.CCMenu.dat }
    }
  }
  TestRun {
    Filename { Test }
    Part.Transformed { F }
  }
  Online {
    Filename { Online.dat }
  }
}
```

## 2. Spezifikations-Datei:

```
APPLICATION DM-Dollar_FORECAST

MODE DAY WEEK 5

FROM 01.01.1991 TO MAX

TRAINING FROM 01.01.1991 TO 01.01.1996

VALIDATION RANDOM 0%


INPUT CLUSTER  mlp.input10

BEGIN  DEMUSD "DMARKER/USDOLLR"
       //DM-Dollar Kurs
   x = FILE data/dol.txt COLUMN 1



             INPUT = 100 * ln(x / x(-1))
             END



       BEGIN  JPYUSD "JAPAYEN/USDOLLR"
              //Yen-Dollar Kurs
          x = FILE data/dol.txt COLUMN 2

          INPUT = scale((x - x(-1)) / x(-1))
          END


   BEGIN  ECUS3M "EURO-CURRENCY (LDN) US$ 3 MONTHS - MIDDLE RATE"
          //3-Monatszins Dtld.
      x = FILE data/dol.txt COLUMN 3

   INPUT = scale((x - x(-1)) / x(-1))
   END



   BEGIN  ECWGM3M "EURO-CURRENCY (LDN) D-MARK 3 MONTHS - MIDDLE RATE"
          //3-Monatszins USA
      x = FILE data/dol.txt COLUMN 4

   INPUT = scale((x - x(-1)) / x(-1))
   END
```

```
BEGIN  AUSGVG4RY "US TOTAL 7-10 YEARS DS GOVT. INDEX - RED. YIELD"
       //7-10 Jahreszins USA
    x = FILE data/dol.txt COLUMN 5

    INPUT = scale((x - x(-1)) / x(-1))
END




BEGIN  ABDGVG4RY "BD TOTAL 7-10 YEARS DS GOVT. INDEX - RED. YIELD"
       //7-10 Jahreszins Dtld.
    x = FILE data/dol.txt COLUMN 6

    INPUT = scale((x - x(-1)) / x(-1))
END




BEGIN  AJPGVG4RY "JP TOTAL 7-10 YEARS DS GOVT. INDEX - RED. YIELD"
       //7-10 Jahreszins Japan
    x = FILE data/dol.txt COLUMN 7

    INPUT = scale((x - x(-1)) / x(-1))
END




BEGIN  TOTMKUSRI "US-DS MARKET - TOT RETURN IND"
       //Aktienmarkt USA
    x = FILE data/dol.txt COLUMN 8

    INPUT = scale((x - x(-1)) / x(-1))




                          END



BEGIN  TOTMKBDRI "GERMANY-DS MARKET - TOT RETURN IND"
       //Aktienmarkt Dtld.
    x = FILE data/dol.txt COLUMN 9

    INPUT = scale((x - x(-1)) / x(-1))
END



BEGIN  NYFECRB "COMMODITY RESEARCH BUREAU INDEX-CRB - PRICE INDEX"
       //Rohstoffindex
    x = FILE data/dol.txt COLUMN 10

    INPUT = scale((x - x(-1)) / x(-1))
END
```

```
BEGIN  GOLDBLN "GOLD BULLION $/TROY OUNCE"
     //Gold
  x = FILE data/dol.txt COLUMN 11

  INPUT = scale((x - x(-1)) / x(-1))
END




        INPUT CLUSTER  mlp.input21

   BEGIN  DEMUSD "DMARKER/USDOLLR"
        //DM-Dollar Kurs
     x = FILE data/dol.txt COLUMN 1

     INPUT = 100 * ln(x / x(-1))        LAG -1
     END



        BEGIN  JPYUSD "JAPAYEN/USDOLLR"
             //Yen-Dollar Kurs
          x = FILE data/dol.txt COLUMN 2

          INPUT = scale((x - x(-1)) / x(-1))  LAG -1
          END



BEGIN  ECUS3M "EURO-CURRENCY (LDN) US$ 3 MONTHS - MIDDLE RATE"
     //3-Monatszins Dtld.
  x = FILE data/dol.txt COLUMN 3

  INPUT = scale((x - x(-1)) / x(-1))  LAG -1
END



BEGIN  ECWGM3M "EURO-CURRENCY (LDN) D-MARK 3 MONTHS - MIDDLE RATE"
     //3-Monatszins USA
  x = FILE data/dol.txt COLUMN 4



          INPUT = scale((x - x(-1)) / x(-1))  LAG -1
          END



BEGIN  AUSGVG4RY "US TOTAL 7-10 YEARS DS GOVT. INDEX - RED. YIELD"
     //7-10 Jahreszins USA
  x = FILE data/dol.txt COLUMN 5

  INPUT = scale((x - x(-1)) / x(-1))  LAG -1
END
```

```
BEGIN  ABDGVG4RY "BD TOTAL 7-10 YEARS DS GOVT. INDEX - RED. YIELD"
       //7-10 Jahreszins Dtld.
   x = FILE data/dol.txt COLUMN 6

   INPUT = scale((x - x(-1)) / x(-1))  LAG -1
END



BEGIN  AJPGVG4RY "JP TOTAL 7-10 YEARS DS GOVT. INDEX - RED. YIELD"
       //7-10 Jahreszins Japan
   x = FILE data/dol.txt COLUMN 7

   INPUT = scale((x - x(-1)) / x(-1))  LAG -1
END



       BEGIN  TOTMKUSRI "US-DS MARKET - TOT RETURN IND"
              //Aktienmarkt USA
          x = FILE data/dol.txt COLUMN 8

          INPUT = scale((x - x(-1)) / x(-1))  LAG -1
       END



       BEGIN  TOTMKBDRI "GERMANY-DS MARKET - TOT RETURN IND"
              //Aktienmarkt Dtld.
          x = FILE data/dol.txt COLUMN 9

          INPUT = scale((x - x(-1)) / x(-1))  LAG -1
       END



BEGIN  NYFECRB "COMMODITY RESEARCH BUREAU INDEX-CRB - PRICE INDEX"
       //Rohstoffindex
   x = FILE data/dol.txt COLUMN 10

   INPUT = scale((x - x(-1)) / x(-1))  LAG -1
END



       BEGIN  GOLDBLN "GOLD BULLION $/TROY OUNCE"
              //Gold
          x = FILE data/dol.txt COLUMN 11

          INPUT = scale((x - x(-1)) / x(-1))  LAG -1
       END




              INPUT CLUSTER  mlp.input32
```

46

```
BEGIN  DEMUSD "DMARKER/USDOLLR"
      //DM-Dollar Kurs
      x = FILE data/dol.txt COLUMN 1

      INPUT = 100 * ln(x / x(-1))        LAG -2
END


BEGIN  JPYUSD "JAPAYEN/USDOLLR"
      //Yen-Dollar Kurs
      x = FILE data/dol.txt COLUMN 2

      INPUT = scale((x - x(-1)) / x(-1))  LAG -2
END


BEGIN  ECUS3M "EURO-CURRENCY (LDN) US$ 3 MONTHS - MIDDLE RATE"
      //3-Monatszins Dtld.
      x = FILE data/dol.txt COLUMN 3

      INPUT = scale((x - x(-1)) / x(-1))  LAG -2
END


BEGIN  ECWGM3M "EURO-CURRENCY (LDN) D-MARK 3 MONTHS - MIDDLE RATE"
      //3-Monatszins USA
      x = FILE data/dol.txt COLUMN 4

      INPUT = scale((x - x(-1)) / x(-1))  LAG -2
END


BEGIN  AUSGVG4RY "US TOTAL 7-10 YEARS DS GOVT. INDEX - RED. YIELD"
      //7-10 Jahreszins USA
      x = FILE data/dol.txt COLUMN 5

      INPUT = scale((x - x(-1)) / x(-1))  LAG -2
END


BEGIN  ABDGVG4RY "BD TOTAL 7-10 YEARS DS GOVT. INDEX - RED. YIELD"
      //7-10 Jahreszins Dtld.
      x = FILE data/dol.txt COLUMN 6

      INPUT = scale((x - x(-1)) / x(-1))  LAG -2
END


BEGIN  AJPGVG4RY "JP TOTAL 7-10 YEARS DS GOVT. INDEX - RED. YIELD"
      //7-10 Jahreszins Japan
      x = FILE data/dol.txt COLUMN 7

      INPUT = scale((x - x(-1)) / x(-1))  LAG -2
```

END

```
BEGIN  TOTMKUSRI "US-DS MARKET - TOT RETURN IND"
       //Aktienmarkt USA
    x = FILE data/dol.txt COLUMN 8

    INPUT = scale((x - x(-1)) / x(-1))  LAG -2
END


BEGIN  TOTMKBDRI "GERMANY-DS MARKET - TOT RETURN IND"
       //Aktienmarkt Dtld.
    x = FILE data/dol.txt COLUMN 9

    INPUT = scale((x - x(-1)) / x(-1))  LAG -2
END


BEGIN  NYFECRB "COMMODITY RESEARCH BUREAU INDEX-CRB - PRICE INDEX"
       //Rohstoffindex
    x = FILE data/dol.txt COLUMN 10

    INPUT = scale((x - x(-1)) / x(-1))  LAG -2
END


BEGIN  GOLDBLN "GOLD BULLION $/TROY OUNCE"
       //Gold
    x = FILE data/dol.txt COLUMN 11

    INPUT = scale((x - x(-1)) / x(-1))  LAG -2
END


INPUT CLUSTER  mlp.input43

BEGIN  DEMUSD "DMARKER/USDOLLR"
       //DM-Dollar Kurs
    x = FILE data/dol.txt COLUMN 1

    INPUT = 100 * ln(x / x(-1))       LAG -3
END


BEGIN  JPYUSD "JAPAYEN/USDOLLR"
       //Yen-Dollar Kurs
    x = FILE data/dol.txt COLUMN 2

    INPUT = scale((x - x(-1)) / x(-1)) LAG -3
END
```

```
BEGIN  ECUS3M "EURO-CURRENCY (LDN) US$ 3 MONTHS - MIDDLE RATE"
       //3-Monatszins Dtld.
  x = FILE data/dol.txt COLUMN 3


               INPUT = scale((x - x(-1)) / x(-1))  LAG -3
               END


BEGIN  ECWGM3M "EURO-CURRENCY (LDN) D-MARK 3 MONTHS - MIDDLE RATE"
       //3-Monatszins USA
  x = FILE data/dol.txt COLUMN 4

  INPUT = scale((x - x(-1)) / x(-1))  LAG -3
END


BEGIN  AUSGVG4RY "US TOTAL 7-10 YEARS DS GOVT. INDEX - RED. YIELD"
       //7-10 Jahreszins USA
  x = FILE data/dol.txt COLUMN 5

  INPUT = scale((x - x(-1)) / x(-1))  LAG -3
END


BEGIN  ABDGVG4RY "BD TOTAL 7-10 YEARS DS GOVT. INDEX - RED. YIELD"
       //7-10 Jahreszins Dtld.
  x = FILE data/dol.txt COLUMN 6

  INPUT = scale((x - x(-1)) / x(-1))  LAG -3
END


BEGIN  AJPGVG4RY "JP TOTAL 7-10 YEARS DS GOVT. INDEX - RED. YIELD"
       //7-10 Jahreszins Japan
  x = FILE data/dol.txt COLUMN 7

  INPUT = scale((x - x(-1)) / x(-1))  LAG -3
END


       BEGIN  TOTMKUSRI "US-DS MARKET - TOT RETURN IND"
              //Aktienmarkt USA
         x = FILE data/dol.txt COLUMN 8

         INPUT = scale((x - x(-1)) / x(-1))  LAG -3
         END


       BEGIN  TOTMKBDRI "GERMANY-DS MARKET - TOT RETURN IND"
              //Aktienmarkt Dtld.
         x = FILE data/dol.txt COLUMN 9

         INPUT = scale((x - x(-1)) / x(-1))  LAG -3
         END
```

```
BEGIN  NYFECRB "COMMODITY RESEARCH BUREAU INDEX-CRB - PRICE INDEX"
      //Rohstoffindex
   x = FILE data/dol.txt COLUMN 10

   INPUT = scale((x - x(-1)) / x(-1))  LAG -3
END



               BEGIN  GOLDBLN "GOLD BULLION $/TROY OUNCE"
                     //Gold
                  x = FILE data/dol.txt COLUMN 11

                  INPUT = scale((x - x(-1)) / x(-1))  LAG -3
                  END


               INPUT CLUSTER  mlp.input54

               BEGIN  DEMUSD "DMARKER/USDOLLR"
                     //DM-Dollar Kurs
                  x = FILE data/dol.txt COLUMN 1

                  INPUT = 100 * ln(x / x(-1))        LAG -4
                  END


               BEGIN  JPYUSD "JAPAYEN/USDOLLR"
                     //Yen-Dollar Kurs
                  x = FILE data/dol.txt COLUMN 2

                  INPUT = scale((x - x(-1)) / x(-1))  LAG -4
                  END


      BEGIN  ECUS3M "EURO-CURRENCY (LDN) US$ 3 MONTHS - MIDDLE RATE"
            //3-Monatszins Dtld.
         x = FILE data/dol.txt COLUMN 3

         INPUT = scale((x - x(-1)) / x(-1))  LAG -4
         END


   BEGIN  ECWGM3M "EURO-CURRENCY (LDN) D-MARK 3 MONTHS - MIDDLE RATE"
         //3-Monatszins USA
      x = FILE data/dol.txt COLUMN 4

      INPUT = scale((x - x(-1)) / x(-1))  LAG -4
   END


   BEGIN  AUSGVG4RY "US TOTAL 7-10 YEARS DS GOVT. INDEX - RED. YIELD"
         //7-10 Jahreszins USA
      x = FILE data/dol.txt COLUMN 5

      INPUT = scale((x - x(-1)) / x(-1))  LAG -4
      END
```

```
BEGIN  ABDGVG4RY "BD TOTAL 7-10 YEARS DS GOVT. INDEX - RED. YIELD"
       //7-10 Jahreszins Dtld.
  x = FILE data/dol.txt COLUMN 6

  INPUT = scale((x - x(-1)) / x(-1))  LAG -4


                               END


  BEGIN  AJPGVG4RY "JP TOTAL 7-10 YEARS DS GOVT. INDEX - RED. YIELD"
         //7-10 Jahreszins Japan
    x = FILE data/dol.txt COLUMN 7

    INPUT = scale((x - x(-1)) / x(-1))  LAG -4
  END



            BEGIN  TOTMKUSRI "US-DS MARKET - TOT RETURN IND"
                   //Aktienmarkt USA
              x = FILE data/dol.txt COLUMN 8

              INPUT = scale((x - x(-1)) / x(-1))  LAG -4
            END



            BEGIN  TOTMKBDRI "GERMANY-DS MARKET - TOT RETURN IND"
                   //Aktienmarkt Dtld.
              x = FILE data/dol.txt COLUMN 9

              INPUT = scale((x - x(-1)) / x(-1))  LAG -4
            END



BEGIN  NYFECRB "COMMODITY RESEARCH BUREAU INDEX-CRB - PRICE INDEX"
       //Rohstoffindex
  x = FILE data/dol.txt COLUMN 10

  INPUT = scale((x - x(-1)) / x(-1))  LAG -4
END



            BEGIN  GOLDBLN "GOLD BULLION $/TROY OUNCE"
                   //Gold
              x = FILE data/dol.txt COLUMN 11

              INPUT = scale((x - x(-1)) / x(-1))  LAG -4
              END
```

```
INPUT CLUSTER mlp.input65

BEGIN DEMUSD "DMARKER/USDOLLR"
    //DM-Dollar Kurs
    x = FILE data/dol.txt COLUMN 1

    INPUT = 100 * ln(x / x(-1))        LAG -5
END




BEGIN JPYUSD "JAPAYEN/USDOLLR"
    //Yen-Dollar Kurs
    x = FILE data/dol.txt COLUMN 2



    INPUT = scale((x - x(-1)) / x(-1))  LAG -5
END



BEGIN ECUS3M "EURO-CURRENCY (LDN) US$ 3 MONTHS - MIDDLE RATE"
    //3-Monatszins Dtld.
    x = FILE data/dol.txt COLUMN 3

    INPUT = scale((x - x(-1)) / x(-1))  LAG -5
END



BEGIN ECWGM3M "EURO-CURRENCY (LDN) D-MARK 3 MONTHS - MIDDLE RATE"
    //3-Monatszins USA
    x = FILE data/dol.txt COLUMN 4

    INPUT = scale((x - x(-1)) / x(-1))  LAG -5
END



BEGIN AUSGVG4RY "US TOTAL 7-10 YEARS DS GOVT. INDEX - RED. YIELD"
    //7-10 Jahreszins USA
    x = FILE data/dol.txt COLUMN 5

    INPUT = scale((x - x(-1)) / x(-1))  LAG -5
END



BEGIN ABDGVG4RY "BD TOTAL 7-10 YEARS DS GOVT. INDEX - RED. YIELD"
    //7-10 Jahreszins Dtld.
    x = FILE data/dol.txt COLUMN 6

    INPUT = scale((x - x(-1)) / x(-1))  LAG -5
END
```

52

```
BEGIN  AJPGVG4RY "JP TOTAL 7-10 YEARS DS GOVT. INDEX - RED. YIELD"
       //7-10 Jahreszins Japan
    x = FILE data/dol.txt COLUMN 7

     INPUT = scale((x - x(-1)) / x(-1))  LAG -5
   END



               BEGIN  TOTMKUSRI "US-DS MARKET - TOT RETURN IND"
                      //Aktienmarkt USA
                   x = FILE data/dol.txt COLUMN 8

                    INPUT = scale((x - x(-1)) / x(-1))  LAG -5
                    END



               BEGIN  TOTMKBDRI "GERMANY-DS MARKET - TOT RETURN IND"
                      //Aktienmarkt Dtld.
                   x = FILE data/dol.txt COLUMN 9

                    INPUT = scale((x - x(-1)) / x(-1))  LAG -5
                    END



   BEGIN  NYFECRB "COMMODITY RESEARCH BUREAU INDEX-CRB - PRICE INDEX"
          //Rohstoffindex
       x = FILE data/dol.txt COLUMN 10

     INPUT = scale((x - x(-1)) / x(-1))  LAG -5
   END



               BEGIN  GOLDBLN "GOLD BULLION $/TROY OUNCE"
                      //Gold
                   x = FILE data/dol.txt COLUMN 11

                    INPUT = scale((x - x(-1)) / x(-1))  LAG -5
                    END



                    INPUT CLUSTER  mlp.input76

                    BEGIN  DEMUSD "DMARKER/USDOLLR"
                           //DM-Dollar Kurs
                        x = FILE data/dol.txt COLUMN 1

                         INPUT = 100 * ln(x / x(-1))        LAG -6
                         END
```

```
BEGIN  JPYUSD "JAPAYEN/USDOLLR"
       //Yen-Dollar Kurs
   x = FILE data/dol.txt COLUMN 2

   INPUT = scale((x - x(-1)) / x(-1))  LAG -6
   END



BEGIN  ECUS3M "EURO-CURRENCY (LDN) US$ 3 MONTHS - MIDDLE RATE"
       //3-Monatszins Dtld.
    x = FILE data/dol.txt COLUMN 3

    INPUT = scale((x - x(-1)) / x(-1))  LAG -6
    END



BEGIN  ECWGM3M "EURO-CURRENCY (LDN) D-MARK 3 MONTHS - MIDDLE RATE"
       //3-Monatszins USA
    x = FILE data/dol.txt COLUMN 4

    INPUT = scale((x - x(-1)) / x(-1))  LAG -6
    END



BEGIN  AUSGVG4RY "US TOTAL 7-10 YEARS DS GOVT. INDEX - RED. YIELD"
       //7-10 Jahreszins USA
    x = FILE data/dol.txt COLUMN 5

    INPUT = scale((x - x(-1)) / x(-1))  LAG -6




                              END



BEGIN  ABDGVG4RY "BD TOTAL 7-10 YEARS DS GOVT. INDEX - RED. YIELD"
       //7-10 Jahreszins Dtld.
     x = FILE data/dol.txt COLUMN 6

     INPUT = scale((x - x(-1)) / x(-1))  LAG -6
     END



BEGIN  AJPGVG4RY "JP TOTAL 7-10 YEARS DS GOVT. INDEX - RED. YIELD"
       //7-10 Jahreszins Japan
     x = FILE data/dol.txt COLUMN 7

     INPUT = scale((x - x(-1)) / x(-1))  LAG -6
     END
```

```
BEGIN  TOTMKUSRI "US-DS MARKET - TOT RETURN IND"
       //Aktienmarkt USA
   x = FILE data/dol.txt COLUMN 8

   INPUT = scale((x - x(-1)) / x(-1))  LAG -6
   END



BEGIN  TOTMKBDRI "GERMANY-DS MARKET - TOT RETURN IND"
       //Aktienmarkt Dtld.
   x = FILE data/dol.txt COLUMN 9

   INPUT = scale((x - x(-1)) / x(-1))  LAG -6
   END



BEGIN  NYFECRB "COMMODITY RESEARCH BUREAU INDEX-CRB - PRICE INDEX"
       //Rohstoffindex
   x = FILE data/dol.txt COLUMN 10

   INPUT = scale((x - x(-1)) / x(-1))  LAG -6
END



BEGIN  GOLDBLN "GOLD BULLION $/TROY OUNCE"
       //Gold
   x = FILE data/dol.txt COLUMN 11

   INPUT = scale((x - x(-1)) / x(-1))  LAG -6
   END



TARGET CLUSTER mlp.zero76

BEGIN
   TARGET = 0
   TARGET = 0


   TARGET = 0
   TARGET = 0
   TARGET = 0

   TARGET = 0
   TARGET = 0
   TARGET = 0
   TARGET = 0
   TARGET = 0

   TARGET = 0
END
```

TARGET CLUSTER mlp.zero65

```
BEGIN
  TARGET = 0
  TARGET = 0
  TARGET = 0
  TARGET = 0
  TARGET = 0

  TARGET = 0
  TARGET = 0
  TARGET = 0
  TARGET = 0
  TARGET = 0

  TARGET = 0
END
```

TARGET CLUSTER mlp.zero54

```
BEGIN
  TARGET = 0
  TARGET = 0
  TARGET = 0
  TARGET = 0
  TARGET = 0

  TARGET = 0
  TARGET = 0
  TARGET = 0
  TARGET = 0
  TARGET = 0

  TARGET = 0
END
```

TARGET CLUSTER mlp.zero43

```
BEGIN
  TARGET = 0
  TARGET = 0
  TARGET = 0


        TARGET = 0
        TARGET = 0

        TARGET = 0
        TARGET = 0
        TARGET = 0
        TARGET = 0
        TARGET = 0

        TARGET = 0
END
```

```
TARGET CLUSTER mlp.zero32

BEGIN
  TARGET = 0
  TARGET = 0
  TARGET = 0
  TARGET = 0
  TARGET = 0

  TARGET = 0
  TARGET = 0
  TARGET = 0
  TARGET = 0
  TARGET = 0

  TARGET = 0
END


TARGET CLUSTER mlp.zero21

BEGIN
  TARGET = 0
  TARGET = 0
  TARGET = 0
  TARGET = 0
  TARGET = 0

  TARGET = 0
  TARGET = 0
  TARGET = 0
  TARGET = 0
  TARGET = 0

  TARGET = 0

END


TARGET CLUSTER mlp.zero10

BEGIN
  TARGET = 0
  TARGET = 0
  TARGET = 0
```

```
                    TARGET = 0
                    TARGET = 0

                    TARGET = 0
                    TARGET = 0
                    TARGET = 0
                    TARGET = 0
                    TARGET = 0

                    TARGET = 0
            END



TARGET CLUSTER mlp.zero01

    BEGIN  1 day forecast
    x = FILE data/dol.txt COLUMN 1

    TARGET = 100 * ln(x(1) / x)
            ASSIGN TO channel1

    TARGET = 0
    TARGET = 0
    TARGET = 0
    TARGET = 0
    TARGET = 0

    TARGET = 0
    TARGET = 0
    TARGET = 0
    TARGET = 0
    TARGET = 0
END



TARGET CLUSTER mlp.zero12

    BEGIN  2 day forecast
    x = FILE data/dol.txt COLUMN 1

    TARGET = 100 * ln(x(2) / x(1))
            ASSIGN TO channel2

    TARGET = 0
    TARGET = 0
    TARGET = 0
    TARGET = 0
    TARGET = 0

    TARGET = 0
    TARGET = 0
    TARGET = 0
    TARGET = 0
    TARGET = 0
END
```

```
TARGET CLUSTER mlp.zero23

  BEGIN  3 day forecast
    x = FILE data/dol.txt COLUMN 1

    TARGET = 100 * ln(x(3) / x(2))
        ASSIGN TO channel3

    TARGET = 0
    TARGET = 0
    TARGET = 0
    TARGET = 0
    TARGET = 0

    TARGET = 0
    TARGET = 0
    TARGET = 0
    TARGET = 0
    TARGET = 0
  END



TARGET CLUSTER mlp.zero34

  BEGIN  4 day forecast
    x = FILE data/dol.txt COLUMN 1

    TARGET = 100 * ln(x(4) / x(3))
        ASSIGN TO channel4

    TARGET = 0
    TARGET = 0
    TARGET = 0
    TARGET = 0
    TARGET = 0

    TARGET = 0
    TARGET = 0
    TARGET = 0
    TARGET = 0
    TARGET = 0
  END
```

```
TARGET CLUSTER mlp.zero45

BEGIN  5 day forecast
    x = FILE data/dol.txt COLUMN 1

    TARGET = 100 * ln(x(5) / x(4))
        ASSIGN TO channel5

    TARGET = 0
    TARGET = 0
    TARGET = 0
    TARGET = 0
    TARGET = 0




            TARGET = 0
            TARGET = 0
            TARGET = 0
            TARGET = 0
            TARGET = 0
        END



SIGNAL

BEGIN hit rate1 = NORMSUM(signal0)
    t = TARGET channel1
    o = OUTPUT channel1

    SIGNAL = IF t * o > 0 THEN 1 ELSE 0
END



BEGIN Rol1 = accumulated Signal1
    y  = FILE data/dol.txt COLUMN 1
    o1 = OUTPUT channel1

    SIGNAL = (y(1) / y - 1)  * sign(o1)
END



BEGIN hit rate2 = NORMSUM(signal2)
    t = TARGET channel2
    o = OUTPUT channel2

    SIGNAL = IF t * o > 0 THEN 1 ELSE 0
END
```

```
BEGIN Rol2 = accumulated Signal3
  y  = FILE data/dol.txt COLUMN 1
  o1 = OUTPUT channel1
  o2 = OUTPUT channel2

  SIGNAL = (y(2) / y - 1)  * sign(o1 + o2) / 2
END


BEGIN hit rate3 = NORMSUM(signal4)
  t = TARGET channel3
  o = OUTPUT channel3

  SIGNAL = IF t * o > 0 THEN 1 ELSE 0
END


        BEGIN Rol3 = accumulated Signal5
          y  = FILE data/dol.txt COLUMN 1
          o1 = OUTPUT channel1
          o2 = OUTPUT channel2
          o3 = OUTPUT channel3


          SIGNAL = (y(3) / y - 1)  * sign(o1 + o2 + o3) / 3
        END


        BEGIN hit rate4 = NORMSUM(signal6)
          t = TARGET channel4
          o = OUTPUT channel4

          SIGNAL = IF t * o > 0 THEN 1 ELSE 0
        END


BEGIN Rol4 = accumulated Signal7
  y  = FILE data/dol.txt COLUMN 1
  o1 = OUTPUT channel1
  o2 = OUTPUT channel2
  o3 = OUTPUT channel3
  o4 = OUTPUT channel4

  SIGNAL = (y(4) / y - 1)  * sign(o1 + o2 + o3 + o4) / 4
END


        BEGIN hit rate5 = NORMSUM(signal8)
          t = TARGET channel5
          o = OUTPUT channel5

          SIGNAL = IF t * o > 0 THEN 1 ELSE 0
        END
```

```
BEGIN Rol5 = accumulated Signal9
  y  = FILE data/dol.txt COLUMN 1
  o1 = OUTPUT channel1
  o2 = OUTPUT channel2
  o3 = OUTPUT channel3
  o4 = OUTPUT channel4
  o5 = OUTPUT channel5

  SIGNAL = (y(5) / y - 1)  * sign(o1 + o2 + o3 + o4 + o5) / 5
END
```

### 3. Modell-Top-Datei:

```
net {
    const nr_STATE = 33;

    cluster INPUT ( EQUIVALENT,                 IN  );
    cluster STATE ( EQUIVALENT, DIM( nr_STATE ), HID );
    cluster ZERO  ( EQUIVALENT, DIM(LIKE INPUT ), OUT  );

    connect INPUT_ZERO  ( INPUT -> ZERO, DIAGONAL(-1.0));
    connect STATE_STATE ( STATE -> STATE            );
    connect STATE_ZERO  ( STATE -> ZERO             );
    connect ZERO_STATE  ( ZERO  -> STATE            );

    INPUT  input76;
```

```
INPUT  input65;
INPUT  input54;
INPUT  input43;
INPUT  input32;
INPUT  input21;
INPUT  input10;

STATE  past6;
STATE  past5;
STATE  past4;
STATE  past3;
STATE  past2;
STATE  past1;
STATE  present;
STATE  future1;
STATE  future2;
STATE  future3;
STATE  future4;

ZERO   zero76;
ZERO   zero65;
ZERO   zero54;
ZERO   zero43;
ZERO   zero32;
ZERO   zero21;
ZERO   zero10;
ZERO   zero01;
ZERO   zero12;
ZERO   zero23;
ZERO   zero34;
ZERO   zero45;


connect ( input76 -> zero76  , INPUT_ZERO );
connect ( input65 -> zero65  , INPUT_ZERO );
connect ( input54 -> zero54  , INPUT_ZERO );
connect ( input43 -> zero43  , INPUT_ZERO );
connect ( input32 -> zero32  , INPUT_ZERO );
connect ( input21 -> zero21  , INPUT_ZERO );
connect ( input10 -> zero10  , INPUT_ZERO );

connect ( zero76 -> past6   , ZERO_STATE );

connect ( past6  -> past5   , STATE_STATE );
connect ( past6  -> zero65  , STATE_ZERO );
connect ( zero65 -> past5   , ZERO_STATE );

connect ( past5  -> past4   , STATE_STATE );
connect ( past5  -> zero54  , STATE_ZERO );
connect ( zero54 -> past4   , ZERO_STATE );

connect ( past4  -> past3   , STATE_STATE );
connect ( past4  -> zero43  , STATE_ZERO );
connect ( zero43 -> past3   , ZERO_STATE );

connect ( past3  -> past2   , STATE_STATE );
connect ( past3  -> zero32  , STATE_ZERO );
connect ( zero32 -> past2   , ZERO_STATE );
```

```
connect ( past2  -> past1   , STATE_STATE );
connect ( past2  -> zero21  , STATE_ZERO );
connect ( zero21 -> past1   , ZERO_STATE );

connect ( past1  -> present , STATE_STATE );
connect ( past1  -> zero10  , STATE_ZERO );
connect ( zero10 -> present , ZERO_STATE );

connect ( present -> future1 , STATE_STATE );
connect ( present -> zero01  , STATE_ZERO );

connect ( future1 -> future2 , STATE_STATE );
connect ( future1 -> zero12  , STATE_ZERO );

connect ( future2 -> future3 , STATE_STATE );
connect ( future2 -> zero23  , STATE_ZERO );

connect ( future3 -> future4 , STATE_STATE );
connect ( future3 -> zero34  , STATE_ZERO );

connect ( future4 -> zero45  , STATE_ZERO );

} mlp;
```

Realisierung für das zweite Ausführungsbeispiel:

**1. Parameter-Datei:**

```
BpNet {
 Globals {
  WtPenalty {
   sel NoPenalty
   Weigend {
     Lambda { 0.000000 }
     AutoAdapt { T }
     w0 { 1.000000 }
     DeltaLambda { 0.000001 }
     ReducFac { 0.900000 }
     Gamma { 0.900000 }
     DesiredError { 0.000000 }
   }
   WtDecay {
     Lambda { 0.010000 }
     AutoAdapt { F }
     AdaptTime { 10 }
     EpsObj { 0.001000 }
     ObjSet { Training }
     EpsilonFac { 1.000000 }        .
   }
   ExtWtDecay {
     Lambda { 0.001000 }
     AutoAdapt { F }
     AdaptTime { 10 }
     EpsObj { 0.001000 }
```

```
        ObjSet { Training }
        EpsilonFac { 1.000000 }
      }
      Finnoff {
        AutoAdapt { T }
        Lambda { 0.000000 }
        DeltaLambda { 0.000001 }
        ReducFac { 0.900000 }
        Gamma { 0.900000 }
        DesiredError { 0.000000 }
      }
    }
    ErrorFunc {
    sel LnCosh
      |x| {
        parameter { 0.050000 }
      }
      LnCosh {
        parameter { 2.000000 }
      }
      parametricalEntropy {
        parameter { 0.000001 }
      }
    }
    AnySave {
      file_name { f.Globals.dat }
    }
    AnyLoad {
      file_name { f.Globals.dat }
    }
    ASCII { T }
    }
    LearnCtrl {
    sel Stochastic
      Stochastic {
        PatternSelection {
        sel Permute
          SubSample {
            Percent { 0.500000 }
          }
          ExpRandom {
            Lambda { 2.000000 }
          }
        }
        WtPruneCtrl {
          PruneSchedule {
          sel FixSchedule
            FixSchedule {
              Limit_0 { 10 }
              Limit_1 { 10 }
              Limit_2 { 10 }
              Limit_3 { 10 }
              RepeatLast { T }
            }
            DynSchedule {
              MaxLength { 4 }
              MinimumRuns { 0 }
              Training { F }
```

```
        Validation { T }
        Generalization { F }
      }
       DivSchedule {
        Divergence { 0.100000 }
        MinEpochs { 5 }
       }
      }
     PruneAlg {
      sel FixPrune
      FixPrune {
        Perc_0 { 0.100000 }
        Perc_1 { 0.100000 }
        Perc_2 { 0.100000 }
        Perc_3 { 0.100000 }
      }
       EpsiPrune {
        DeltaEps { 0.050000 }
        StartEps { 0.050000 }
        MaxEps { 1.000000 }
        ReuseEps { F }
       }
      }
      Tracer {
        Active { F }
        Set { Validation }
        File { trace }
      }
      Active { F }
      Randomize { 0.000000 }
      PruningSet { Train.+Valid. }
      Method { S-Pruning }
     }
    StopControl {
     EpochLimit {
        Active { F }
        MaxEpoch { 60 }
     }
      MovingExpAverage {
        Active { F }
        MaxLength { 4 }
        Training { F }
        Validation { T }
        Generalization { F }
        Decay { 0.900000 }
     }
     CheckObjectiveFct {
        Active { F }
        MaxLength { 4 }
        Training { F }
        Validation { T }
        Generalization { F }
     }
     CheckDelta {
        Active { F }
        Divergence { 0.100000 }
     }
    }
```

```
EtaCtrl {
  Mode {
   sel EtaSchedule
    EtaSchedule {
     SwitchTime { 10 }
     ReductFactor { 0.950000 }
    }
    FuzzCtrl {
     MaxDeltaObj { 0.300000 }
     MaxDelta2Obj { 0.300000 }
     MaxEtaChange { 0.020000 }
     MinEta { 0.001000 }
     MaxEta { 0.100000 }
     Smoother { 1.000000 }
    }
  }
  Active { F }
}
LearnAlgo {
  sel VarioEta
   VarioEta {
    MinCalls { 50 }
   }
   MomentumBackProp {
    Alpha { 0.050000 }
   }
   Quickprop {
    Decay { 0.050000 }
    Mu { 2.000000 }
   }
}
AnySave {
  file_name { f.Stochastic.dat }
}
AnyLoad {
  file_name { f.Stochastic.dat }
}
BatchSize { 15 }
Eta { 0.005000 }
DerivEps { 0.000000 }
}
TrueBatch {
  PatternSelection {
   sel Sequential
    SubSample {
     Percent { 0.500000 }
    }
    ExpRandom {
     Lambda { 2.000000 }
    }
  }
  WtPruneCtrl {
   Tracer {
    Active { F }
    Set { Validation }
    File { trace }
   }
   Active { F }
```

```
        Randomize { 0.000000 }
        PruningSet { Train.+Valid. }
        Method { S-Pruning }
    }
    EtaCtrl {
      Active { F }
    }
    LearnAlgo {
     sel VarioEta
      VarioEta {
        MinCalls { 200 }
      }
      MomentumBackProp {
        Alpha { 0.050000 }
      }
      Quickprop {
        Decay { 0.050000 }
        Mu { 2.000000 }
      }
    }
    AnySave {
      file_name { f.TrueBatch.dat }
    }
    AnyLoad {
      file_name { f.TrueBatch.dat }
    }
    Eta { 0.050000 }       .
    DerivEps { 0.000000 }
}
LineSearch {
    PatternSelection {
     sel Sequential
      SubSample {
        Percent { 0.500000 }
      }
      ExpRandom {
        Lambda { 2.000000 }
      }
    }
    WtPruneCtrl {
      Tracer {
        Active { F }
        Set { Validation }
        File { trace }
      }
      Active { F }
      Randomize { 0.000000 }
      PruningSet { Train.+Valid. }
      Method { S-Pruning }
    }
    LearnAlgo {
     sel ConjGradient
      VarioEta {
        MinCalls { 200 }
      }
      MomentumBackProp {
        Alpha { 0.050000 }
      }
```

```
Quickprop {
  Decay { 0.050000 }
  Mu { 2.000000 }
}
Low-Memory-BFGS {
  Limit { 2 }
}
}
AnySave {
  file_name { f.LineSearch.dat }
}
AnyLoad {
  file_name { f.LineSearch.dat }
}
EtaNull { 1.000000 }
MaxSteps { 10 }
LS_Precision { 0.500000 }
TrustRegion { T }
DerivEps { 0.000000 }
BatchSize { 2147483647 }
}
GeneticWeightSelect {
  PatternSelection {
  sel Sequential
    SubSample {
      Percent { 0.500000 }
    }
    ExpRandom {
      Lambda { 2.000000 }
    }
  }
  LearnAlgo {
  sel VarioEta
    VarioEta {
      MinCalls { 200 }
    }
    MomentumBackProp {
      Alpha { 0.050000 }
    }
  }
  ObjFctTracer {
    Active { F }
    File { objFunc }
  }
  SearchControl {
    SearchStrategy {
    sel HillClimberControl
      HillClimberControl {
        %InitialAlive { 0.950000 }
        InheritWeights { T }
        Beta { 0.100000 }
        MutationType { DistributedMacroMutation }
        MaxTrials { 50 }
      }
      PBILControl {
        %InitialAlive { 0.950000 }
        InheritWeights { T }
        Beta { 0.100000 }
```

```
        Alpha { 0.100000 }
        PopulationSize { 40 }
      }
      PopulationControl {
        pCrossover { 1.000000 }
        CrossoverType { SimpleCrossover }
        Scaling { T }
        ScalingFactor { 2.000000 }
        Sharing { T }
        SharingFactor { 0.050000 }
        PopulationSize { 50 }
        min.%InitialAlive { 0.010000 }
        max.%InitialAlive { 0.100000 }
      }
    }
    pMutation { 0.000000 }
  }
  ObjectiveFunctionWeights {
    %Alive { 0.600000 }
    E(TS) { 0.200000 }
    Improvement(TS) { 0.000000 }
    E(VS) { 1.000000 }
    Improvement(VS) { 0.000000 }
    (E(TS)-E(VS))/max(E(TS),E(VS)) { 0.000000 }
    LipComplexity { 0.000000 }
    OptComplexity { 2.000000 }
    testVal(dead)-testVal(alive) { 0.000000 }
  }
  AnySave {
    file_name { f.GeneticWeightSelect.dat }
  }
  AnyLoad {
    file_name { f.GeneticWeightSelect.dat }
  }
  Eta { 0.050000 }
  DerivEps { 0.000000 }
  BatchSize { 5 }
  #minEpochsForFitnessTest { 2 }
  #maxEpochsForFitnessTest { 3 }
  SelectWeights { T }
  SelectNodes { T }
  maxGrowthOfValError { 0.005000 }
  }
}
CCMenu {
  Clusters {
    mlp.input6 {
      ActFunction {
        sel id
        plogistic {
          parameter { 0.500000 }
        }
        ptanh {
          parameter { 0.500000 }
        }
        pid {
          parameter { 0.500000 }
        }
```

```
}
InputModification {
 sel None
  AdaptiveUniformNoise {
    NoiseEta { 1.000000 }
    DampingFactor { 1.000000 }
  }
  AdaptiveGaussNoise {
    NoiseEta { 1.000000 }
    DampingFactor { 1.000000 }
  }
  FixedUniformNoise {
    SetNoiseLevel {
      NewNoiseLevel { 0.000000 }
    }
  }
  FixedGaussNoise {
    SetNoiseLevel {
      NewNoiseLevel { 0.000000 }
    }
  }
 }
 SaveNoiseLevel {
  Filename { noise_level.dat }
 }
 LoadNoiseLevel {
  Filename { noise_level.dat }
 }
 SaveManipulatorData {
  Filename { inputManip.dat }
 }
 LoadManipulatorData {
  Filename { inputManip.dat }
 }
 Norm { NoNorm }
}
mlp.input5 {
 ActFunction {
  sel id
   plogistic {
    parameter { 0.500000 }
   }
   ptanh {
    parameter { 0.500000 }
   }
   pid {
    parameter { 0.500000 }
   }
 }
 InputModification {
  sel None
   AdaptiveUniformNoise {
     NoiseEta { 1.000000 }
     DampingFactor { 1.000000 }
   }
   AdaptiveGaussNoise {
     NoiseEta { 1.000000 }
     DampingFactor { 1.000000 }
```

```
    }
    FixedUniformNoise {
      SetNoiseLevel {
        NewNoiseLevel { 0.000000 }
      }
    }
    FixedGaussNoise {
      SetNoiseLevel {
        NewNoiseLevel { 0.000000 }
      }
    }
  }
  SaveNoiseLevel {
    Filename { noise_level.dat }
  }
  LoadNoiseLevel {
    Filename { noise_level.dat }
  }
  SaveManipulatorData {
    Filename { inputManip.dat }
  }
  LoadManipulatorData {
    Filename { inputManip.dat }
  }
  Norm { NoNorm }
}
mlp.input4 {
  ActFunction {
   sel id
    plogistic {
      parameter { 0.500000 }
    }
    ptanh {
      parameter { 0.500000 }
    }
    pid {
      parameter { 0.500000 }
    }
  }
  InputModification {
   sel None
    AdaptiveUniformNoise {
      NoiseEta { 1.000000 }
      DampingFactor { 1.000000 }
    }
    AdaptiveGaussNoise {
      NoiseEta { 1.000000 }
      DampingFactor { 1.000000 }
    }
    FixedUniformNoise {
      SetNoiseLevel {
        NewNoiseLevel { 0.000000 }
      }
    }
    FixedGaussNoise {
      SetNoiseLevel {
        NewNoiseLevel { 0.000000 }
      }
```

```
          }
        }
        SaveNoiseLevel {
          Filename { noise_level.dat }
        }
        LoadNoiseLevel {
          Filename { noise_level.dat }
        }
        SaveManipulatorData {
          Filename { inputManip.dat }
        }
        LoadManipulatorData {
          Filename { inputManip.dat }
        }
        Norm { NoNorm }
      }
      mlp.input3 {
        ActFunction {
        sel id
          plogistic {
            parameter { 0.500000 }
          }
          ptanh {
            parameter { 0.500000 }
          }
          pid {
            parameter { 0.500000 }
          }
        }
        InputModification {
        sel None
          AdaptiveUniformNoise {
            NoiseEta { 1.000000 }
            DampingFactor { 1.000000 }
          }
          AdaptiveGaussNoise {
            NoiseEta { 1.000000 }
            DampingFactor { 1.000000 }
          }
          FixedUniformNoise {
            SetNoiseLevel {
              NewNoiseLevel { 0.000000 }
            }
          }
          FixedGaussNoise {
            SetNoiseLevel {
              NewNoiseLevel { 0.000000 }
            }
          }
        }
        SaveNoiseLevel {
          Filename { noise_level.dat }
        }
        LoadNoiseLevel {
          Filename { noise_level.dat }
        }
        SaveManipulatorData {
          Filename { inputManip.dat }
```

```
    }
  LoadManipulatorData {
    Filename { inputManip.dat }
  }
  Norm { NoNorm }
}
mlp.input2 {
  ActFunction {
   sel id
    plogistic {
      parameter { 0.500000 }
    }
    ptanh {
      parameter { 0.500000 }
    }
    pid {
      parameter { 0.500000 }
    }
  }
  InputModification {
   sel None
    AdaptiveUniformNoise {
      NoiseEta { 1.000000 }
      DampingFactor { 1.000000 }
    }
    AdaptiveGaussNoise {
      NoiseEta { 1.000000 }
      DampingFactor { 1.000000 }
    }
    FixedUniformNoise {
      SetNoiseLevel {
        NewNoiseLevel { 0.000000 }
      }
    }
    FixedGaussNoise {
      SetNoiseLevel {
        NewNoiseLevel { 0.000000 }
      }
    }
  }
  SaveNoiseLevel {
    Filename { noise_level.dat }
  }
  LoadNoiseLevel {
    Filename { noise_level.dat }
  }
  SaveManipulatorData {
    Filename { inputManip.dat }
  }
  LoadManipulatorData {
    Filename { inputManip.dat }
  }
  Norm { NoNorm }
}
mlp.input1 {
  ActFunction {
   sel id
    plogistic {
```

```
    parameter { 0.500000 }
  }
  ptanh {
    parameter { 0.500000 }
  }
  pid {
    parameter { 0.500000 }
  }
}
InputModification {
 sel None
  AdaptiveUniformNoise {
    NoiseEta { 1.000000 }
    DampingFactor { 1.000000 }
  }
  AdaptiveGaussNoise {
    NoiseEta { 1.000000 }
    DampingFactor { 1.000000 }
  }
  FixedUniformNoise {
    SetNoiseLevel {
      NewNoiseLevel { 0.000000 }
    }
  }
  FixedGaussNoise {
    SetNoiseLevel {
      NewNoiseLevel { 0.000000 }
    }
  }
}
SaveNoiseLevel {
  Filename { noise_level.dat }
}
LoadNoiseLevel {
  Filename { noise_level.dat }
}
SaveManipulatorData {
  Filename { inputManip.dat }
}
LoadManipulatorData {
  Filename { inputManip.dat }
}
Norm { NoNorm }
}
mlp.input0 {
 ActFunction {
  sel id
  plogistic {
    parameter { 0.500000 }
  }
  ptanh {
    parameter { 0.500000 }
  }
  pid {
    parameter { 0.500000 }
  }
}
InputModification {
```

```
sel None
 AdaptiveUniformNoise {
   NoiseEta { 1.000000 }
   DampingFactor { 1.000000 }
 }
 AdaptiveGaussNoise {
   NoiseEta { 1.000000 }
   DampingFactor { 1.000000 }
 }
 FixedUniformNoise {
   SetNoiseLevel {
     NewNoiseLevel { 0.000000 }
   }
 }
 FixedGaussNoise {
   SetNoiseLevel {
     NewNoiseLevel { 0.000000 }
   }
 }
}
SaveNoiseLevel {
  Filename { noise_level.dat }
}
LoadNoiseLevel {
  Filename { noise_level.dat }
}
SaveManipulatorData {
  Filename { inputManip.dat }
}
LoadManipulatorData {
  Filename { inputManip.dat }
}
Norm { NoNorm }
}
mlp.past6 {
  ActFunction {
  sel tanh
   plogistic {
     parameter { 0.500000 }
   }
   ptanh {
     parameter { 0.500000 }
   }
   pid {
     parameter { 0.500000 }
   }
  }
  ErrorFunc {
  sel LnCosh
  |x| {
     parameter { 0.050000 }
  }
  LnCosh {
     parameter { 2.000000 }
  }
  parametricalEntropy {
     parameter { 0.000001 }
  }
```

```
      }
      Norm { NoNorm }
      ToleranceFlag { F }
      Tolerance { 0.000000 0.000000 0.000000 0.000000 0.000000 0.000000 0.000000 0.000000
0.000000 0.000000 0.000000 0.000000 0.000000 0.000000 0.000000 0.000000 0.000000
0.000000 0.000000 0.000000 0.000000 0.000000 0.000000 0.000000 0.000000 0.000000
0.000000 0.000000 0.000000 0.000000 0.000000 0.000000 0.000000 }
      Weighting { 10.000000 1.000000 1.000000 1.000000 1.000000 1.000000 1.000000 1.000000
1.000000 1.000000 1.000000 0.000000 0.000000 0.000000 0.000000 0.000000 0.000000
0.000000 0.000000 0.000000 0.000000 0.000000 0.000000 0.000000 0.000000 0.000000
0.000000 0.000000 0.000000 0.000000 0.000000 0.000000 0.000000 }
    }
    mlp.past5 {
     ActFunction {
      sel tanh
      plogistic {
        parameter { 0.500000 }
      }
      ptanh {
        parameter { 0.500000 }
      }
      pid {
        parameter { 0.500000 }
      }
     }
     ErrorFunc {
      sel LnCosh
      |x| {
        parameter { 0.050000 }
      }
      LnCosh {
        parameter { 2.000000 }
      }
      parametricalEntropy {
        parameter { 0.000001 }
      }
     }
      Norm { NoNorm }
      ToleranceFlag { F }
      Tolerance { 0.000000 0.000000 0.000000 0.000000 0.000000 0.000000 0.000000 0.000000
0.000000 0.000000 0.000000 0.000000 0.000000 0.000000 0.000000 0.000000 0.000000
0.000000 0.000000 0.000000 0.000000 0.000000 0.000000 0.000000 0.000000 0.000000
0.000000 0.000000 0.000000 0.000000 0.000000 0.000000 0.000000 }
      Weighting { 10.000000 1.000000 1.000000 1.000000 1.000000 1.000000 1.000000 1.000000
1.000000 1.000000 1.000000 0.000000 0.000000 0.000000 0.000000 0.000000 0.000000
0.000000 0.000000 0.000000 0.000000 0.000000 0.000000 0.000000 0.000000 0.000000
0.000000 0.000000 0.000000 0.000000 0.000000 0.000000 0.000000 }
    }
    mlp.past4 {
     ActFunction {
      sel tanh
      plogistic {
        parameter { 0.500000 }
      }
      ptanh {
        parameter { 0.500000 }
      }
      pid {
```

```
            parameter { 0.500000 }
          }
        }
        ErrorFunc {
        sel LnCosh
        |x| {
          parameter { 0.050000 }
        }
        LnCosh {
          parameter { 2.000000 }
        }
        parametricalEntropy {
          parameter { 0.000001 }
        }
        }
        Norm { NoNorm }
        ToleranceFlag { F }
        Tolerance { 0.000000 0.000000 0.000000 0.000000 0.000000 0.000000 0.000000 0.000000
0.000000 0.000000 0.000000 0.000000 0.000000 0.000000 0.000000 0.000000 0.000000
0.000000 0.000000 0.000000 0.000000 0.000000 0.000000 0.000000 0.000000 0.000000
0.000000 0.000000 0.000000 0.000000 0.000000 0.000000 0.000000 }
        Weighting { 10.000000 1.000000 1.000000 1.000000 1.000000 1.000000 1.000000 1.000000
1.000000 1.000000 1.000000 0.000000 0.000000 0.000000 0.000000 0.000000 0.000000
0.000000 0.000000 0.000000 0.000000 0.000000 0.000000 0.000000 0.000000 0.000000
0.000000 0.000000 0.000000 0.000000 0.000000 0.000000 0.000000 }
      }
    mlp.past3 {
      ActFunction {
      sel tanh
      plogistic {
        parameter { 0.500000 }
      }
      ptanh {
        parameter { 0.500000 }
      }
      pid {
        parameter { 0.500000 }
      }
      }
      ErrorFunc {
      sel LnCosh
      |x| {
        parameter { 0.050000 }
      }
      LnCosh {
        parameter { 2.000000 }
      }
      parametricalEntropy {
        parameter { 0.000001 }
      }
      }
      Norm { NoNorm }
      ToleranceFlag { F }
      Tolerance { 0.000000 0.000000 0.000000 0.000000 0.000000 0.000000 0.000000 0.000000
0.000000 0.000000 0.000000 0.000000 0.000000 0.000000 0.000000 0.000000 0.000000
0.000000 0.000000 0.000000 0.000000 0.000000 0.000000 0.000000 0.000000 0.000000
0.000000 0.000000 0.000000 0.000000 0.000000 0.000000 0.000000 }
```

```
        Weighting { 10.000000 1.000000 1.000000 1.000000 1.000000 1.000000 1.000000 1.000000
    1.000000 1.000000 1.000000 0.000000 0.000000 0.000000 0.000000 0.000000 0.000000
    0.000000 0.000000 0.000000 0.000000 0.000000 0.000000 0.000000 0.000000 0.000000
    0.000000 0.000000 0.000000 0.000000 0.000000 0.000000 0.000000 }
      }
      mlp.past2 {
        ActFunction {
        sel tanh
         plogistic {
           parameter { 0.500000 }
         }
         ptanh {
           parameter { 0.500000 }
         }
         pid {
           parameter { 0.500000 }
         }
        }
        ErrorFunc {
        sel LnCosh
        |x| {
           parameter { 0.050000 }
         }
        LnCosh {
           parameter { 2.000000 }
         }
        parametricalEntropy {
           parameter { 0.000001 }
         }
        }
        Norm { NoNorm }
        ToleranceFlag { F }
        Tolerance { 0.000000 0.000000 0.000000 0.000000 0.000000 0.000000 0.000000 0.000000
    0.000000 0.000000 0.000000 0.000000 0.000000 0.000000 0.000000 0.000000 0.000000
    0.000000 0.000000 0.000000 0.000000 0.000000 0.000000 0.000000 0.000000 0.000000
    0.000000 0.000000 0.000000 0.000000 0.000000 0.000000 0.000000 }
        Weighting { 10.000000 1.000000 1.000000 1.000000 1.000000 1.000000 1.000000 1.000000
    1.000000 1.000000 1.000000 0.000000 0.000000 0.000000 0.000000 0.000000 0.000000
    0.000000 0.000000 0.000000 0.000000 0.000000 0.000000 0.000000 0.000000 0.000000
    0.000000 0.000000 0.000000 0.000000 0.000000 0.000000 0.000000 }
      }
      mlp.past1 {
        ActFunction {
        sel tanh
         plogistic {
           parameter { 0.500000 }
         }
         ptanh {
           parameter { 0.500000 }
         }
         pid {
           parameter { 0.500000 }
         }
        }
        ErrorFunc {
        sel LnCosh
        |x| {
           parameter { 0.050000 }
```

```
       }
      LnCosh {
        parameter { 2.000000 }
      }
      parametricalEntropy {
        parameter { 0.000001 }
      }
    }
    Norm { NoNorm }
    ToleranceFlag { F }
    Tolerance { 0.000000 0.000000 0.000000 0.000000 0.000000 0.000000 0.000000 0.000000
0.000000 0.000000 0.000000 0.000000 0.000000 0.000000 0.000000 0.000000 0.000000
0.000000 0.000000 0.000000 0.000000 0.000000 0.000000 0.000000 0.000000 0.000000
0.000000 0.000000 0.000000 0.000000 0.000000 0.000000 0.000000 }
    Weighting { 10.000000 1.000000 1.000000 1.000000 1.000000 1.000000 1.000000 1.000000
1.000000 1.000000 1.000000 0.000000 0.000000 0.000000 0.000000 0.000000 0.000000
0.000000 0.000000 0.000000 0.000000 0.000000 0.000000 0.000000 0.000000 0.000000
0.000000 0.000000 0.000000 0.000000 0.000000 0.000000 0.000000 }
  }
  mlp.present {
    ActFunction {
     sel tanh
      plogistic {
        parameter { 0.500000 }
      }
      ptanh {
        parameter { 0.500000 }
      }
      pid {
        parameter { 0.500000 }
      }
    }
    ErrorFunc {
     sel LnCosh
      |x| {
        parameter { 0.050000 }
      }
      LnCosh {
        parameter { 2.000000 }
      }
      parametricalEntropy {
        parameter { 0.000001 }
      }
    }
    Norm { NoNorm }
    ToleranceFlag { F }
    Tolerance { 0.000000 0.000000 0.000000 0.000000 0.000000 0.000000 0.000000 0.000000
0.000000 0.000000 0.000000 0.000000 0.000000 0.000000 0.000000 0.000000 0.000000
0.000000 0.000000 0.000000 0.000000 0.000000 0.000000 0.000000 0.000000 0.000000
0.000000 0.000000 0.000000 0.000000 0.000000 0.000000 0.000000 }
    Weighting { 10.000000 1.000000 1.000000 1.000000 1.000000 1.000000 1.000000 1.000000
1.000000 1.000000 1.000000 0.000000 0.000000 0.000000 0.000000 0.000000 0.000000
0.000000 0.000000 0.000000 0.000000 0.000000 0.000000 0.000000 0.000000 0.000000
0.000000 0.000000 0.000000 0.000000 0.000000 0.000000 0.000000 }
  }
  mlp.future1 {
    ActFunction {
     sel tanh
```

```
     plogistic {
       parameter { 0.500000 }
     }
     ptanh {
       parameter { 0.500000 }
     }
     pid {
       parameter { 0.500000 }
     }
   }
   ErrorFunc {
   sel none
   |x| {
       parameter { 0.050000 }
   }
   LnCosh {
       parameter { 2.000000 }
   }
   parametricalEntropy {
       parameter { 0.000001 }
   }
   }
   Norm { NoNorm }
   ToleranceFlag { F }
   Tolerance { 0.000000 0.000000 0.000000 0.000000 0.000000 0.000000 0.000000 0.000000
0.000000 0.000000 0.000000 0.000000 0.000000 0.000000 0.000000 0.000000 0.000000
0.000000 0.000000 0.000000 0.000000 0.000000 0.000000 0.000000 0.000000 0.000000
0.000000 0.000000 0.000000 0.000000 0.000000 0.000000 0.000000 }
   Weighting { 1.000000 0.000000 0.000000 0.000000 0.000000 0.000000 0.000000 0.000000
0.000000 0.000000 0.000000 0.000000 0.000000 0.000000 0.000000 0.000000 0.000000
0.000000 0.000000 0.000000 0.000000 0.000000 0.000000 0.000000 0.000000 0.000000
0.000000 0.000000 0.000000 0.000000 0.000000 0.000000 0.000000 }
   }
 }
 Connectors {
 mlp.input6->past6 {
   WeightWatcher {
     Active { F }
     MaxWeight { 1.000000 }
     MinWeight { 0.000000 }
   }
   LoadWeightsLocal {
     Filename { std }
   }
   SaveWeightsLocal {
     Filename { std }
   }
   Alive { T }
   WtFreeze { T }
   AllowPruning { F }
   EtaModifier { 1.000000 }
   Penalty { NoPenalty }
 }
 mlp.input5->past5 {
   LoadWeightsLocal {
     Filename { std }
   }
   SaveWeightsLocal {
```

```
        Filename { std }
      }
      Alive { T }
      WtFreeze { T }
      AllowPruning { F }
      EtaModifier { 1.000000 }
      Penalty { NoPenalty }
    }
    mlp.past6->past5 {
      WeightWatcher {
        Active { F }
        MaxWeight { 1.000000 }
        MinWeight { 0.000000 }
      }
      LoadWeightsLocal {
        Filename { std }
      }
      SaveWeightsLocal {
        Filename { std }
      }
      Alive { T }
      WtFreeze { F }
      AllowPruning { F }
      EtaModifier { 1.000000 }
      Penalty { NoPenalty }
    }
    mlp.input4->past4 {
      LoadWeightsLocal {
        Filename { std }
      }
      SaveWeightsLocal {
        Filename { std }
      }
      Alive { T }
      WtFreeze { T }
      AllowPruning { F }
      EtaModifier { 1.000000 }
      Penalty { NoPenalty }
    }
    mlp.past5->past4 {
      LoadWeightsLocal {
        Filename { std }
      }
      SaveWeightsLocal {
        Filename { std }
      }
      Alive { T }
      WtFreeze { F }
      AllowPruning { F }
      EtaModifier { 1.000000 }
      Penalty { NoPenalty }
    }
    mlp.input3->past3 {
      LoadWeightsLocal {
        Filename { std }
      }
      SaveWeightsLocal {
        Filename { std }
```

```
    }
    Alive { T }
    WtFreeze { T }
    AllowPruning { F }
    EtaModifier { 1.000000 }
    Penalty { NoPenalty }
  }
  mlp.past4->past3 {
    LoadWeightsLocal {
      Filename { std }
    }
    SaveWeightsLocal {
      Filename { std }
    }
    Alive { T }
    WtFreeze { F }
    AllowPruning { F }
    EtaModifier { 1.000000 }
    Penalty { NoPenalty }
  }
  mlp.input2->past2 {
    LoadWeightsLocal {
      Filename { std }
    }
    SaveWeightsLocal {
      Filename { std }
    }
    Alive { T }
    WtFreeze { T }
    AllowPruning { F }
    EtaModifier { 1.000000 }
    Penalty { NoPenalty }
  }
  mlp.past3->past2 {
    LoadWeightsLocal {
      Filename { std }
    }
    SaveWeightsLocal {
      Filename { std }
    }
    Alive { T }
    WtFreeze { F }
    AllowPruning { F }
    EtaModifier { 1.000000 }
    Penalty { NoPenalty }
  }
  mlp.input1->past1 {
    LoadWeightsLocal {
      Filename { std }
    }
    SaveWeightsLocal {
      Filename { std }
    }
    Alive { T }
    WtFreeze { T }
    AllowPruning { F }
    EtaModifier { 1.000000 }
    Penalty { NoPenalty }
```

```
        }
  mlp.past2->past1 {
    LoadWeightsLocal {
      Filename { std }
    }
    SaveWeightsLocal {
      Filename { std }
    }
    Alive { T }
    WtFreeze { F }
    AllowPruning { F }
    EtaModifier { 1.000000 }
    Penalty { NoPenalty }
  }
  mlp.input0->present {
    LoadWeightsLocal {
      Filename { std }
    }
    SaveWeightsLocal {
      Filename { std }
    }
    Alive { T }
    WtFreeze { T }
    AllowPruning { F }
    EtaModifier { 1.000000 }
    Penalty { NoPenalty }
  }
  mlp.past1->present {
    LoadWeightsLocal {
      Filename { std }
    }
    SaveWeightsLocal {
      Filename { std }
    }
    Alive { T }
    WtFreeze { F }
    AllowPruning { F }
    EtaModifier { 1.000000 }
    Penalty { NoPenalty }
  }
  mlp.present->future1 {
    LoadWeightsLocal {
      Filename { std }
    }
    SaveWeightsLocal {
      Filename { std }
    }
    Alive { T }
    WtFreeze { F }
    AllowPruning { F }
    EtaModifier { 1.000000 }
    Penalty { NoPenalty }
  }
}
AnySave {
  file_name { f.CCMenu.dat }
}
AnyLoad {
```

```
        file_name { f.CCMenu.dat }
      }
    }
    TestRun {
      Filename { Test }
      Part.Transformed { F }
    }
    Online {
      Filename { Online.dat }
    }

  }
```

**2. Spezifikations-Datei :**

```
              APPLICATION DM-Dollar_FORECAST

              MODE DAY WEEK 5

              FROM 01.01.1991 TO MAX

              TRAINING FROM 01.01.1991 TO 01.01.1996

              VALIDATION RANDOM 0%



              INPUT CLUSTER mlp.input0

              BEGIN  DEMUSD "DMARKER/USDOLLR"
                    //DM-Dollar Kurs
                 x = FILE data/dol.txt COLUMN 1

                 INPUT = 100 * ln(x / x(-1))
              END



              BEGIN  JPYUSD "JAPAYEN/USDOLLR"
                    //Yen-Dollar Kurs
                 x = FILE data/dol.txt COLUMN 2

                 INPUT = scale((x - x(-1)) / x(-1))
              END



      BEGIN  ECUS3M "EURO-CURRENCY (LDN) US$ 3 MONTHS - MIDDLE RATE"
                    //3-Monatszins Dtld.
                 x = FILE data/dol.txt COLUMN 3

                 INPUT = scale((x - x(-1)) / x(-1))
      END
```

```
BEGIN  ECWGM3M "EURO-CURRENCY (LDN) D-MARK 3 MONTHS - MIDDLE RATE"
       //3-Monatszins USA
  x = FILE data/dol.txt COLUMN 4

  INPUT = scale((x - x(-1)) / x(-1))
END



        BEGIN  AUSGVG4RY "US TOTAL 7-10 YEARS DS GOVT. INDEX - RED. YIELD"
               //7-10 Jahreszins USA
          x = FILE data/dol.txt COLUMN 5

          INPUT = scale((x - x(-1)) / x(-1))
        END



        BEGIN  ABDGVG4RY "BD TOTAL 7-10 YEARS DS GOVT. INDEX - RED. YIELD"
               //7-10 Jahreszins Dtld.
          x = FILE data/dol.txt COLUMN 6

          INPUT = scale((x - x(-1)) / x(-1))
        END



        BEGIN  AJPGVG4RY "JP TOTAL 7-10 YEARS DS GOVT. INDEX - RED. YIELD"
               //7-10 Jahreszins Japan
          x = FILE data/dol.txt COLUMN 7

          INPUT = scale((x - x(-1)) / x(-1))
        END



                BEGIN  TOTMKUSRI "US-DS MARKET - TOT RETURN IND"
                       //Aktienmarkt USA
                  x = FILE data/dol.txt COLUMN 8

                  INPUT = scale((x - x(-1)) / x(-1))
                END



          BEGIN  TOTMKBDRI "GERMANY-DS MARKET - TOT RETURN IND"
                 //Aktienmarkt Dtld.
            x = FILE data/dol.txt COLUMN 9

            INPUT = scale((x - x(-1)) / x(-1))
          END
```

```
BEGIN  NYFECRB "COMMODITY RESEARCH BUREAU INDEX-CRB - PRICE INDEX"
       //Rohstoffindex
   x = FILE data/dol.txt COLUMN 10

   INPUT = scale((x - x(-1)) / x(-1))
END



                    BEGIN  GOLDBLN "GOLD BULLION $/TROY OUNCE"
                           //Gold
                       x = FILE data/dol.txt COLUMN 11

                       INPUT = scale((x - x(-1)) / x(-1))
                    END



                       INPUT CLUSTER  mlp.input1

                       BEGIN  DEMUSD "DMARKER/USDOLLR"
                              //DM-Dollar Kurs
                          x = FILE data/dol.txt COLUMN 1

                          INPUT = 100 * ln(x / x(-1))        LAG -1
                       END


                       BEGIN  JPYUSD "JAPAYEN/USDOLLR"
                              //Yen-Dollar Kurs
                          x = FILE data/dol.txt COLUMN 2

                       INPUT = scale((x - x(-1)) / x(-1))  LAG -1
                       END



   BEGIN  ECUS3M "EURO-CURRENCY (LDN) US$ 3 MONTHS - MIDDLE RATE"
          //3-Monatszins Dtld.
      x = FILE data/dol.txt COLUMN 3

      INPUT = scale((x - x(-1)) / x(-1))  LAG -1
   END



BEGIN  ECWGM3M "EURO-CURRENCY (LDN) D-MARK 3 MONTHS - MIDDLE RATE"
       //3-Monatszins USA
   x = FILE data/dol.txt COLUMN 4

   INPUT = scale((x - x(-1)) / x(-1))  LAG -1
END
```

```
BEGIN  AUSGVG4RY "US TOTAL 7-10 YEARS DS GOVT. INDEX - RED. YIELD"
       //7-10 Jahreszins USA
  x = FILE data/dol.txt COLUMN 5

  INPUT = scale((x - x(-1)) / x(-1))  LAG -1
END


BEGIN  ABDGVG4RY "BD TOTAL 7-10 YEARS DS GOVT. INDEX - RED. YIELD"
       //7-10 Jahreszins Dtld.
  x = FILE data/dol.txt COLUMN 6

  INPUT = scale((x - x(-1)) / x(-1))  LAG -1
END


BEGIN  AJPGVG4RY "JP TOTAL 7-10 YEARS DS GOVT. INDEX - RED. YIELD"
       //7-10 Jahreszins Japan
  x = FILE data/dol.txt COLUMN 7

  INPUT = scale((x - x(-1)) / x(-1))  LAG -1
END


         BEGIN  TOTMKUSRI "US-DS MARKET - TOT RETURN IND"
                //Aktienmarkt USA
           x = FILE data/dol.txt COLUMN 8

           INPUT = scale((x - x(-1)) / x(-1))  LAG -1
           END


         BEGIN  TOTMKBDRI "GERMANY-DS MARKET - TOT RETURN IND"
                //Aktienmarkt Dtld.
           x = FILE data/dol.txt COLUMN 9

           INPUT = scale((x - x(-1)) / x(-1))  LAG -1
           END


BEGIN  NYFECRB "COMMODITY RESEARCH BUREAU INDEX-CRB - PRICE INDEX"
       //Rohstoffindex
  x = FILE data/dol.txt COLUMN 10

  INPUT = scale((x - x(-1)) / x(-1))  LAG -1
END


         BEGIN  GOLDBLN "GOLD BULLION $/TROY OUNCE"
                //Gold
           x = FILE data/dol.txt COLUMN 11

           INPUT = scale((x - x(-1)) / x(-1))  LAG -1
           END
```

```
INPUT CLUSTER  mlp.input2

BEGIN  DEMUSD "DMARKER/USDOLLR"
       //DM-Dollar Kurs
    x = FILE data/dol.txt COLUMN 1

     INPUT = 100 * ln(x / x(-1))       LAG -2
    END




BEGIN  JPYUSD "JAPAYEN/USDOLLR"
       //Yen-Dollar Kurs      -
    x = FILE data/dol.txt COLUMN 2

     INPUT = scale((x - x(-1)) / x(-1))  LAG -2
    END




BEGIN  ECUS3M "EURO-CURRENCY (LDN) US$ 3 MONTHS - MIDDLE RATE"
       //3-Monatszins Dtld.
    x = FILE data/dol.txt COLUMN 3

    INPUT = scale((x - x(-1)) / x(-1))  LAG -2
    END




BEGIN  ECWGM3M "EURO-CURRENCY (LDN) D-MARK 3 MONTHS - MIDDLE RATE"
       //3-Monatszins USA
    x = FILE data/dol.txt COLUMN 4

    INPUT = scale((x - x(-1)) / x(-1))  LAG -2
END




BEGIN  AUSGVG4RY "US TOTAL 7-10 YEARS DS GOVT. INDEX - RED. YIELD"
       //7-10 Jahreszins USA
    x = FILE data/dol.txt COLUMN 5

    INPUT = scale((x - x(-1)) / x(-1))  LAG -2
    END




BEGIN  ABDGVG4RY "BD TOTAL 7-10 YEARS DS GOVT. INDEX - RED. YIELD"
       //7-10 Jahreszins Dtld.
    x = FILE data/dol.txt COLUMN 6

    INPUT = scale((x - x(-1)) / x(-1))  LAG -2
    END
```

```
BEGIN  AJPGVG4RY "JP TOTAL 7-10 YEARS DS GOVT. INDEX - RED. YIELD"
       //7-10 Jahreszins Japan
   x = FILE data/dol.txt COLUMN 7

   INPUT = scale((x - x(-1)) / x(-1))  LAG -2
   END



               BEGIN  TOTMKUSRI "US-DS MARKET - TOT RETURN IND"
                      //Aktienmarkt USA
                  x = FILE data/dol.txt COLUMN 8

                  INPUT = scale((x - x(-1)) / x(-1))  LAG -2
                  END



               BEGIN  TOTMKBDRI "GERMANY-DS MARKET - TOT RETURN IND"
                      //Aktienmarkt Dtld.
                  x = FILE data/dol.txt COLUMN 9

                  INPUT = scale((x - x(-1)) / x(-1))  LAG -2
                  END



   BEGIN  NYFECRB "COMMODITY RESEARCH BUREAU INDEX-CRB - PRICE INDEX"
          //Rohstoffindex
      x = FILE data/dol.txt COLUMN 10

      INPUT = scale((x - x(-1)) / x(-1))  LAG -2
      END



                  BEGIN  GOLDBLN "GOLD BULLION $/TROY OUNCE"
                         //Gold
                     x = FILE data/dol.txt COLUMN 11

                     INPUT = scale((x - x(-1)) / x(-1))  LAG -2
                     END


                  INPUT CLUSTER  mlp.input3

                     BEGIN  DEMUSD "DMARKER/USDOLLR"
                            //DM-Dollar Kurs
                        x = FILE data/dol.txt COLUMN 1

                        INPUT = 100 * ln(x / x(-1))       LAG -3
                        END
```

```
BEGIN  JPYUSD "JAPAYEN/USDOLLR"
        //Yen-Dollar Kurs
     x = FILE data/dol.txt COLUMN 2

     INPUT = scale((x - x(-1)) / x(-1)) LAG -3
     END



BEGIN  ECUS3M "EURO-CURRENCY (LDN) US$ 3 MONTHS - MIDDLE RATE"
        //3-Monatszins Dtld.
      x = FILE data/dol.txt COLUMN 3

      INPUT = scale((x - x(-1)) / x(-1))  LAG -3
      END



BEGIN  ECWGM3M "EURO-CURRENCY (LDN) D-MARK 3 MONTHS - MIDDLE RATE"
         //3-Monatszins USA
      x = FILE data/dol.txt COLUMN 4

      INPUT = scale((x - x(-1)) / x(-1))  LAG -3
      END



BEGIN  AUSGVG4RY "US TOTAL 7-10 YEARS DS GOVT. INDEX - RED. YIELD"
         //7-10 Jahreszins USA
       x = FILE data/dol.txt COLUMN 5

       INPUT = scale((x - x(-1)) / x(-1))  LAG -3
       END



BEGIN  ABDGVG4RY "BD TOTAL 7-10 YEARS DS GOVT. INDEX - RED. YIELD"
         //7-10 Jahreszins Dtld.
       x = FILE data/dol.txt COLUMN 6

       INPUT = scale((x - x(-1)) / x(-1))  LAG -3
       END



BEGIN  AJPGVG4RY "JP TOTAL 7-10 YEARS DS GOVT. INDEX - RED. YIELD"
         //7-10 Jahreszins Japan
       x = FILE data/dol.txt COLUMN 7

       INPUT = scale((x - x(-1)) / x(-1))  LAG -3
       END



BEGIN  TOTMKUSRI "US-DS MARKET - TOT RETURN IND"
         //Aktienmarkt USA
       x = FILE data/dol.txt COLUMN 8

       INPUT = scale((x - x(-1)) / x(-1))  LAG -3
       END
```

```
BEGIN  TOTMKBDRI "GERMANY-DS MARKET - TOT RETURN IND"
       //Aktienmarkt Dtld.
   x = FILE data/dol.txt COLUMN 9

   INPUT = scale((x - x(-1)) / x(-1))  LAG -3
   END



BEGIN  NYFECRB "COMMODITY RESEARCH BUREAU INDEX-CRB - PRICE INDEX"
       //Rohstoffindex
   x = FILE data/dol.txt COLUMN 10

   INPUT = scale((x - x(-1)) / x(-1))  LAG -3
   END



BEGIN  GOLDBLN "GOLD BULLION $/TROY OUNCE"
       //Gold
   x = FILE data/dol.txt COLUMN 11

   INPUT = scale((x - x(-1)) / x(-1))  LAG -3
   END



INPUT CLUSTER  mlp.input4

   BEGIN  DEMUSD "DMARKER/USDOLLR"
          //DM-Dollar Kurs
      x = FILE data/dol.txt COLUMN 1

      INPUT = 100 * ln(x / x(-1))        LAG -4
      END



   BEGIN  JPYUSD "JAPAYEN/USDOLLR"
          //Yen-Dollar Kurs
      x = FILE data/dol.txt COLUMN 2

      INPUT = scale((x - x(-1)) / x(-1))  LAG -4
      END



BEGIN  ECUS3M "EURO-CURRENCY (LDN) US$ 3 MONTHS - MIDDLE RATE"
       //3-Monatszins Dtld.
   x = FILE data/dol.txt COLUMN 3

   INPUT = scale((x - x(-1)) / x(-1))  LAG -4
   END


BEGIN  ECWGM3M "EURO-CURRENCY (LDN) D-MARK 3 MONTHS - MIDDLE RATE"
       //3-Monatszins USA
   x = FILE data/dol.txt COLUMN 4

   INPUT = scale((x - x(-1)) / x(-1))  LAG -4
   END
```

```
BEGIN  AUSGVG4RY "US TOTAL 7-10 YEARS DS GOVT. INDEX - RED. YIELD"
        //7-10 Jahreszins USA
    x = FILE data/dol.txt COLUMN 5

    INPUT = scale((x - x(-1)) / x(-1))  LAG -4
END


BEGIN  ABDGVG4RY "BD TOTAL 7-10 YEARS DS GOVT. INDEX - RED. YIELD"
        //7-10 Jahreszins Dtld.
    x = FILE data/dol.txt COLUMN 6

    INPUT = scale((x - x(-1)) / x(-1))  LAG -4
END



BEGIN  AJPGVG4RY "JP TOTAL 7-10 YEARS DS GOVT. INDEX - RED. YIELD"
        //7-10 Jahreszins Japan
    x = FILE data/dol.txt COLUMN 7

    INPUT = scale((x - x(-1)) / x(-1))  LAG -4
END



        BEGIN  TOTMKUSRI "US-DS MARKET - TOT RETURN IND"
                //Aktienmarkt USA
            x = FILE data/dol.txt COLUMN 8

            INPUT = scale((x - x(-1)) / x(-1))  LAG -4
        END



        BEGIN  TOTMKBDRI "GERMANY-DS MARKET - TOT RETURN IND"
                //Aktienmarkt Dtld.
            x = FILE data/dol.txt COLUMN 9

            INPUT = scale((x - x(-1)) / x(-1))  LAG -4
        END


BEGIN  NYFECRB "COMMODITY RESEARCH BUREAU INDEX-CRB - PRICE INDEX"
        //Rohstoffindex
    x = FILE data/dol.txt COLUMN 10

    INPUT = scale((x - x(-1)) / x(-1))  LAG -4
END


            BEGIN  GOLDBLN "GOLD BULLION $/TROY OUNCE"
                    //Gold
                x = FILE data/dol.txt COLUMN 11

                INPUT = scale((x - x(-1)) / x(-1))  LAG -4
                END
```

```
INPUT CLUSTER  mlp.input5

BEGIN  DEMUSD "DMARKER/USDOLLR"
       //DM-Dollar Kurs
   x = FILE data/dol.txt COLUMN 1

   INPUT = 100 * ln(x / x(-1))        LAG -5
   END




BEGIN  JPYUSD "JAPAYEN/USDOLLR"
       //Yen-Dollar Kurs
   x = FILE data/dol.txt COLUMN 2

   INPUT = scale((x - x(-1)) / x(-1)) LAG -5
   END



BEGIN  ECUS3M "EURO-CURRENCY (LDN) US$ 3 MONTHS - MIDDLE RATE"
       //3-Monatszins Dtld.
   x = FILE data/dol.txt COLUMN 3

   INPUT = scale((x - x(-1)) / x(-1))  LAG -5
   END



BEGIN  ECWGM3M "EURO-CURRENCY (LDN) D-MARK 3 MONTHS - MIDDLE RATE"
       //3-Monatszins USA
   x = FILE data/dol.txt COLUMN 4

   INPUT = scale((x - x(-1)) / x(-1))  LAG -5
   END



BEGIN  AUSGVG4RY "US TOTAL 7-10 YEARS DS GOVT. INDEX - RED. YIELD"
       //7-10 Jahreszins USA
   x = FILE data/dol.txt COLUMN 5

   INPUT = scale((x - x(-1)) / x(-1))  LAG -5
   END



BEGIN  ABDGVG4RY "BD TOTAL 7-10 YEARS DS GOVT. INDEX - RED. YIELD"
       //7-10 Jahreszins Dtld.
   x = FILE data/dol.txt COLUMN 6

   INPUT = scale((x - x(-1)) / x(-1))  LAG -5
   END
```

```
BEGIN  AJPGVG4RY "JP TOTAL 7-10 YEARS DS GOVT. INDEX - RED. YIELD"
        //7-10 Jahreszins Japan
    x = FILE data/dol.txt COLUMN 7

    INPUT = scale((x - x(-1)) / x(-1))  LAG -5
END


        BEGIN  TOTMKUSRI "US-DS MARKET - TOT RETURN IND"
              //Aktienmarkt USA
          x = FILE data/dol.txt COLUMN 8

          INPUT = scale((x - x(-1)) / x(-1))  LAG -5
        END


        BEGIN  TOTMKBDRI "GERMANY-DS MARKET - TOT RETURN IND"
              //Aktienmarkt Dtld.
          x = FILE data/dol.txt COLUMN 9

          INPUT = scale((x - x(-1)) / x(-1))  LAG -5
        END


BEGIN  NYFECRB "COMMODITY RESEARCH BUREAU INDEX-CRB - PRICE INDEX"
        //Rohstoffindex
    x = FILE data/dol.txt COLUMN 10

    INPUT = scale((x - x(-1)) / x(-1))  LAG -5
END


        BEGIN  GOLDBLN "GOLD BULLION $/TROY OUNCE"
              //Gold
          x = FILE data/dol.txt COLUMN 11

          INPUT = scale((x - x(-1)) / x(-1))  LAG -5
        END


        INPUT CLUSTER  mlp.input6

        BEGIN  DEMUSD "DMARKER/USDOLLR"
              //DM-Dollar Kurs
          x = FILE data/dol.txt COLUMN 1

          INPUT = 100 * ln(x / x(-1))        LAG -6
        END
```

```
BEGIN  JPYUSD "JAPAYEN/USDOLLR"
    //Yen-Dollar Kurs
    x = FILE data/dol.txt COLUMN 2

    INPUT = scale((x - x(-1)) / x(-1))  LAG -6
    END



BEGIN  ECUS3M "EURO-CURRENCY (LDN) US$ 3 MONTHS - MIDDLE RATE"
    //3-Monatszins Dtld.
    x = FILE data/dol.txt COLUMN 3

    INPUT = scale((x - x(-1)) / x(-1))  LAG -6
    END



BEGIN  ECWGM3M "EURO-CURRENCY (LDN) D-MARK 3 MONTHS - MIDDLE RATE"
    //3-Monatszins USA
    x = FILE data/dol.txt COLUMN 4

    INPUT = scale((x - x(-1)) / x(-1))  LAG -6
    END



BEGIN  AUSGVG4RY "US TOTAL 7-10 YEARS DS GOVT. INDEX - RED. YIELD"
    //7-10 Jahreszins USA
    x = FILE data/dol.txt COLUMN 5

    INPUT = scale((x - x(-1)) / x(-1))  LAG -6
    END



BEGIN  ABDGVG4RY "BD TOTAL 7-10 YEARS DS GOVT. INDEX - RED. YIELD"
    //7-10 Jahreszins Dtld.
    x = FILE data/dol.txt COLUMN 6

    INPUT = scale((x - x(-1)) / x(-1))  LAG -6
    END



BEGIN  AJPGVG4RY "JP TOTAL 7-10 YEARS DS GOVT. INDEX - RED. YIELD"
    //7-10 Jahreszins Japan
    x = FILE data/dol.txt COLUMN 7

    INPUT = scale((x - x(-1)) / x(-1))  LAG -6
    END



BEGIN  TOTMKUSRI "US-DS MARKET - TOT RETURN IND"
    //Aktienmarkt USA
    x = FILE data/dol.txt COLUMN 8

    INPUT = scale((x - x(-1)) / x(-1))  LAG -6
    END
```

BEGIN  TOTMKBDRI "GERMANY-DS MARKET - TOT RETURN IND"

```
                    //Aktienmarkt Dtld.
            x = FILE data/dol.txt COLUMN 9

            INPUT = scale((x - x(-1)) / x(-1))  LAG -6
            END
```

BEGIN  NYFECRB "COMMODITY RESEARCH BUREAU INDEX-CRB - PRICE INDEX"
```
        //Rohstoffindex
    x = FILE data/dol.txt COLUMN 10

    INPUT = scale((x - x(-1)) / x(-1))  LAG -6
END
```

```
            BEGIN  GOLDBLN "GOLD BULLION $/TROY OUNCE"
                //Gold
            x = FILE data/dol.txt COLUMN 11

            INPUT = scale((x - x(-1)) / x(-1))  LAG -6
            END
```

TARGET CLUSTER mlp.past6

```
BEGIN
  TARGET = 0
  TARGET = 0
  TARGET = 0
  TARGET = 0
  TARGET = 0

  TARGET = 0
  TARGET = 0
  TARGET = 0
  TARGET = 0
  TARGET = 0


  TARGET = 0
  TARGET = 0
  TARGET = 0
  TARGET = 0
  TARGET = 0

  TARGET = 0
  TARGET = 0
  TARGET = 0
  TARGET = 0
  TARGET = 0


  TARGET = 0
  TARGET = 0
  TARGET = 0
  TARGET = 0
  TARGET = 0




            TARGET = 0
            TARGET = 0
            TARGET = 0
            TARGET = 0
            TARGET = 0


            TARGET = 0
            TARGET = 0
            TARGET = 0
  END
```

TARGET CLUSTER mlp.past5

```
BEGIN
  TARGET = 0
  TARGET = 0
  TARGET = 0
  TARGET = 0
  TARGET = 0

  TARGET = 0
  TARGET = 0
  TARGET = 0
  TARGET = 0
  TARGET = 0


  TARGET = 0
  TARGET = 0
  TARGET = 0
  TARGET = 0
  TARGET = 0

  TARGET = 0
  TARGET = 0
  TARGET = 0
  TARGET = 0
  TARGET = 0


  TARGET = 0
  TARGET = 0
  TARGET = 0
  TARGET = 0
  TARGET = 0

  TARGET = 0
  TARGET = 0
  TARGET = 0
  TARGET = 0
  TARGET = 0


  TARGET = 0
  TARGET = 0


  TARGET = 0
END
```

```
TARGET CLUSTER mlp.past4

  BEGIN
    TARGET = 0
    TARGET = 0
    TARGET = 0
    TARGET = 0
    TARGET = 0

    TARGET = 0
    TARGET = 0
    TARGET = 0
    TARGET = 0
    TARGET = 0


    TARGET = 0
    TARGET = 0
    TARGET = 0
    TARGET = 0
    TARGET = 0

    TARGET = 0
    TARGET = 0
    TARGET = 0
    TARGET = 0
    TARGET = 0


    TARGET = 0
    TARGET = 0
    TARGET = 0
    TARGET = 0
    TARGET = 0

    TARGET = 0
    TARGET = 0
    TARGET = 0
    TARGET = 0
    TARGET = 0


    TARGET = 0
    TARGET = 0
    TARGET = 0
  END



  TARGET CLUSTER mlp.past3

    BEGIN
      TARGET = 0
      TARGET = 0
      TARGET = 0
```

```
                TARGET = 0
                TARGET = 0

                TARGET = 0
                TARGET = 0
                TARGET = 0
                TARGET = 0
                TARGET = 0


                TARGET = 0
                TARGET = 0
                TARGET = 0
                TARGET = 0
                TARGET = 0

                TARGET = 0
                TARGET = 0
                TARGET = 0
                TARGET = 0
                TARGET = 0


                TARGET = 0
                TARGET = 0
                TARGET = 0
                TARGET = 0
                TARGET = 0

                TARGET = 0
                TARGET = 0
                TARGET = 0
                TARGET = 0
                TARGET = 0


                TARGET = 0
                TARGET = 0
                TARGET = 0
            END


    TARGET CLUSTER mlp.past2

    BEGIN
        TARGET = 0
        TARGET = 0
        TARGET = 0
        TARGET = 0
        TARGET = 0

        TARGET = 0
        TARGET = 0
        TARGET = 0
        TARGET = 0
        TARGET = 0
```

```
TARGET = 0
TARGET = 0
TARGET = 0
TARGET = 0
TARGET = 0

TARGET = 0
TARGET = 0
TARGET = 0
TARGET = 0
TARGET = 0

TARGET = 0
TARGET = 0
TARGET = 0
TARGET = 0
TARGET = 0

TARGET = 0
TARGET = 0
TARGET = 0
TARGET = 0
TARGET = 0

TARGET = 0
TARGET = 0
TARGET = 0

END
```

```
TARGET CLUSTER mlp.past1

BEGIN
  TARGET = 0
  TARGET = 0
  TARGET = 0
  TARGET = 0
  TARGET = 0

  TARGET = 0
  TARGET = 0
  TARGET = 0
  TARGET = 0
  TARGET = 0


  TARGET = 0
  TARGET = 0
  TARGET = 0
  TARGET = 0
  TARGET = 0

  TARGET = 0
  TARGET = 0
  TARGET = 0



        TARGET = 0
        TARGET = 0


        TARGET = 0
        TARGET = 0
        TARGET = 0
        TARGET = 0
        TARGET = 0

        TARGET = 0
        TARGET = 0
        TARGET = 0
        TARGET = 0
        TARGET = 0


       TARGET = 0
        TARGET = 0
        TARGET = 0
  END
```

```
TARGET CLUSTER mlp.present

BEGIN
   TARGET = 0
   TARGET = 0
   TARGET = 0
   TARGET = 0
   TARGET = 0

   TARGET = 0
   TARGET = 0
   TARGET = 0
   TARGET = 0
   TARGET = 0


   TARGET = 0
   TARGET = 0
   TARGET = 0
   TARGET = 0
   TARGET = 0

   TARGET = 0
   TARGET = 0
   TARGET = 0
   TARGET = 0
   TARGET = 0


   TARGET = 0
   TARGET = 0
   TARGET = 0
   TARGET = 0
   TARGET = 0



            TARGET = 0
            TARGET = 0
            TARGET = 0
            TARGET = 0
            TARGET = 0


            TARGET = 0
            TARGET = 0
            TARGET = 0
   END
```

TARGET CLUSTER *mlp.future1*

BEGIN 1 day forecast
x = FILE data/dol.txt COLUMN 1

TARGET = 100 * ln(x(1) / x)
ASSIGN TO channel1

TARGET = 0
TARGET = 0
TARGET = 0
TARGET = 0
TARGET = 0

TARGET = 0
TARGET = 0
TARGET = 0
TARGET = 0
TARGET = 0

TARGET = 0
TARGET = 0
TARGET = 0
TARGET = 0
TARGET = 0

TARGET = 0
TARGET = 0
TARGET = 0
TARGET = 0
TARGET = 0

TARGET = 0
TARGET = 0
TARGET = 0
TARGET = 0
TARGET = 0

TARGET = 0
TARGET = 0
TARGET = 0
TARGET = 0

TARGET = 0

TARGET = 0
TARGET = 0
END

```
SIGNAL

    BEGIN hit rate1 = NORMSUM(signal0)
        t = TARGET channel1
        o = OUTPUT channel1

        SIGNAL = IF t * o > 0 THEN 1 ELSE 0
    END



    BEGIN Rol1 = accumulated Signal1
        y  = FILE data/dol.txt COLUMN 1
        o1 = OUTPUT channel1

        SIGNAL = (y(1) / y - 1)  * sign(o1)
    END
```

### 3. Modell-Top-Datei:

```
net {
    const nr_STATE = 33;

    cluster INPUT ( EQUIVALENT,             IN );
    cluster STATE ( EQUIVALENT, DIM( nr_STATE ), OUT );

    connect INPUT_STATE ( INPUT -> STATE, DIAGONAL(-1.0));
    connect STATE_STATE ( STATE -> STATE           );


    INPUT  input6;
    INPUT  input5;
    INPUT  input4;
    INPUT  input3;
    INPUT  input2;
    INPUT  input1;
    INPUT  input0;

    STATE  past6;
    STATE  past5;
    STATE  past4;
    STATE  past3;
    STATE  past2;
    STATE  past1;
    STATE  present;
    STATE  future1;


    connect ( input6  -> past6   , INPUT_STATE );
```

```
connect ( input5  -> past5   , INPUT_STATE );
connect ( input4  -> past4   , INPUT_STATE );
connect ( input3  -> past3   , INPUT_STATE );
connect ( input2  -> past2   , INPUT_STATE );
connect ( input1  -> past1   , INPUT_STATE );
connect ( input0  -> present , INPUT_STATE );

connect ( past6   -> past5   , STATE_STATE );
connect ( past5   -> past4   , STATE_STATE );
connect ( past4   -> past3   , STATE_STATE );
connect ( past3   -> past2   , STATE_STATE );
connect ( past2   -> past1   , STATE_STATE );
connect ( past1   -> present , STATE_STATE );
connect ( present -> future1 , STATE_STATE );
} mlp;
```

In diesem Dokument sind folgende Veröffentlichungen zitiert:

[1] S. Haykin, Neural Networks: A Comprehensive Foundation, Mc Millan College Publishing Company, Second Edition, ISBN 0-13-273350-1, S. 732-789, 1999

[2] David E. Rumelhart et al., Parallel Distributed Processing, Explorations in the Microstructure of Cognition, Vol. 1: Foundations, A Bradford Book, The MIT Press, Cambrigde, Massachusetts, London, England, 1987

[3] H. Rehkugler und H. G. Zimmermann, Neuronale Netze in der Ökonomie, Grundlagen und finanzwirtschaftliche Anwendungen, Verlag Franz Vahlen München, ISBN 3-8006-1871-0, S. 3-90, 1994

[4] Ackley, Hinton, Senjnowski, A learning algorithm for Boltzmann machines, Cognitive Science, 9, S, 147 - 169, 1985

[5] US-A-5 761 386 (Lawrence et al), 2. June 1998

[6] Templeman : Race Networks - A theory of competitive recognition networks based on the rate of reactivation of nervous in cortical columns, Proceedings of the International Conference on Neural Networks, US, New York, IEEE, 24. Juli 1988, Seiten 9-16

[7] Makoto Hirara et al: A neural network model for visual motion detection that can explain psychophysical and neurophysiological phenomena, Biological Cybertics, Springer Velag, Heidelberg, Bd. 68, Nr. 3, 1992, seiten 247-252.

**Patentansprüche**

1.  Anordnung miteinander verbundener Rechenelemente,

    -   mit mindestens einem ersten Rechenelement, mit welchem ein erster Zustand eines Systems in einem ersten Zustandsraum in einen dritten Zustand des Systems in einem zweiten Zustandsraum transformierbar ist,
    -   mit mindestens einem zweiten Rechenelement, mit welchem ein vierter Zustand des Systems in dem zweiten Zustandsraum ermittelbar ist,
    -   mit mindestens einem dritten Rechenelement, welches mit dem ersten Rechenelement und dem zweiten Rechenelement jeweils eine Verbindung hat und mit welchem eine Abweichung zwischen dem dritten Zustand und dem vierten Zustand bestimmbar ist,
    -   mit mindestens einem vierten Rechenelement, welches mit dem ersten Rechenelement und dem dritten Rechenelement jeweils eine Verbindung hat und mit welchem unter Verwendung der Abweichung und dem ersten Zustand ein zweiter Zustand des Systems in dem ersten Zustandsraum bestimmbar ist.

**2.** Anordnung nach Anspruch 1,
bei der das erste Rechenelement, das zweite Rechenelement, das dritte Rechenelement und das vierte Rechenelement eine erste Unteranordnung bilden.

**3.** Anordnung nach Anspruch 1 oder 2,
mit mehreren ersten Rechenelementen, mehreren zweiten Rechenelementen, mehreren dritten Rechenelementen und/oder mehreren vierten Rechenelementen.

**4.** Anordnung nach Anspruch 2 und 3,
mit mehreren ersten Unteranordnungen, wobei zumindest eine erste von den ersten Unteranordnungen und eine zweite von den ersten Unteranordnungen derart miteinander verbunden sind, daß das vierte Rechenelement der ersten von den ersten Unteranordnungen mit dem ersten Rechenelement der zweiten von den ersten Unteranordnungen identisch ist.

**5.** Anordnung nach einem der Ansprüche 1 bis 4,
mit mindestens einer zweiten Unteranordnung, welche zweite Unteranordnung umfaßt:

- ein fünftes Rechenelement, mit welchem ein fünfter Zustand des Systems in dem ersten Zustandsraum in einen sechsten Zustand des Systems in dem zweiten Zustandsraum transformierbar ist und
- ein sechstes Rechenelement, welches mit dem fünften Rechenelement eine Verbindung hat und mit welchem ein siebter Zustand des Systems in dem zweiten Zustandsraum ermittelbar ist,
- ein siebtes Rechenelement, welches mit dem fünften Rechenelement eine Verbindung hat und mit welchem ein achter Zustand des Systems in dem ersten Zustandsraum bestimmbar ist,

wobei die zweite Unteranordnung derart mit der ersten Unteranordnung verbunden ist, daß das vierte Rechenelement und das fünfte Rechenelement identisch sind.

**6.** Anordnung nach Anspruch 5,
mit einer ersten von mehreren zweiten Unteranordnungen und einer zweiten von den mehreren zweiten Unteranordnungen, wobei die erste von den mehreren zweiten Unteranordnungen und die zweite von den mehreren zweiten Unteranordnungen miteinander verbunden sind derart,
daß das fünfte Rechenelement der zweiten von den mehreren zweiten Unteranordnungen und das siebte Rechenelement der ersten von den mehreren zweiten Unteranordnungen identisch sind.

**7.** Anordnung nach einem der Ansprüche 1 bis 6,
umfassend Rechenelemente, die künstliche Neuronen sind.

**8.** Anordnung nach einem der Ansprüche 1 bis 7,
bei der zumindest einem Teil der Verbindungen jeweils Gewichte zugeordnet sind.

**9.** Anordnung nach Anspruch 8,
bei der die Gewichte gleicher Verbindungen identisch sind.

**10.** Anordnung nach Anspruch 8 oder 9,
bei der die Gewichte der Verbindung zwischen dem zweiten Rechenelement und dem dritten Rechenelement die negative Identitätsmatrix bilden.

**11.** Anordnung nach einem der Ansprüche 1 bis 10,
eingesetzt zur Ermittlung einer Dynamik des Systems derart, daß aus einer Zeitreihe aus Zuständen des Systems die Dynamik ermittelt wird.

**12.** Anordnung nach einem der Ansprüche 1 bis 11,
mit einer Meßanordnung zur Erfassung physikalischer Signale, mit denen ein Zustand des Systems beschreibbar ist.

**13.** Anordnung nach Anspruch 11 oder 12,
eingesetzt zur Ermittlung der Dynamik eines dynamischen Prozesses in einem chemischen Reaktor.

**14.** Anordnung nach Anspruch 11 oder 12,
eingesetzt zur Ermittlung der Dynamik eines Elekro-Kardio-Gramms.

**15.** Anordnung nach Anspruch 11 oder 12,
eingesetzt zur Ermittlung einer ökonomischer oder makroökonomischer Dynamik.

**16.** Anordnung nach einem der Ansprüche 8 bis 15,
bei der die Gewichte in einem Training der Anordnung veränderbar sind.

**17.** Verfahren zur rechnergestützten Ermittlung eines zweiten Zustands eines Systems in einem ersten Zustandsraum aus einem ersten Zustand des Systems in dem ersten Zustandsraum,

- bei dem der erste Zustand in einen dritten Zustand des Systems in einem zweiten Zustandsraum transformiert wird,
- bei dem ein vierter Zustand des Systems in dem zweiten Zustandsraum ermittelt wird,
- bei dem eine Abweichung zwischen dem dritten Zustand und dem vierten Zustand bestimmt wird,
- bei dem unter Verwendung der Abweichung und dem ersten Zustand der zweite Zustand ermittelt wird.

**18.** Verfahren nach Anspruch 17,
bei dem ein Zustand des Systems durch einen Vektor vorgebbarer Dimension beschrieben wird.

**19.** Verfahren nach Anspruch 17 oder 18,
bei dem der erste Zustand ein erster Zeitreihenwert und der zweite Zustand ein zweiter Zeitreihenwert einer Zeitreihe aus Zeitreihenwerten sind.

**Claims**

**1.** Arrangement of interconnected computing elements,

- having at least one first computing element which can be used to transform a first state of a system in a first state space into a third state of the system in a second state space,
- having at least one second computing element which can be used to ascertain a fourth state of the system in the second state space,
- having at least one third computing element which has a respective connection to the first computing element and to the second computing element and can be used to determine a discrepancy between the third state and the fourth state,
- having at least one fourth computing element which has a respective connection to the first computing element and to the third computing element and can be used to determine a second state of the system in the first state space using the discrepancy and the first state.

**2.** Arrangement according to Claim 1,
in which the first computing element, the second computing element, the third computing element and the fourth computing element form a first subarrangement.

**3.** Arrangement according to Claim 1 or 2,
having a plurality of first computing elements, a plurality of second computing elements, a plurality of third computing elements and/or a plurality of fourth computing elements.

**4.** Arrangement according to Claim 2 and 3,
having a plurality of first subarrangements, where at least a first of the first subarrangements and a second of the first subarrangements are connected to one another such that the fourth computing element in the first of the first subarrangements is identical to the first computing element in the second of the first subarrangements.

**5.** Arrangement according to one of Claims 1 to 4,
having at least one second subarrangement, which second subarrangement comprises:

- a fifth computing element which can be used to transform a fifth state of the system in the first state space into a sixth state of the system in the second state space, and

- a sixth computing element which has a connection to the fifth computing element and can be used to ascertain a seventh state of the system in the second state space,
- a seventh computing element which has a connection to the fifth computing element and can be used to determine an eighth state of the system in the first state space,

where the second subarrangement is connected to the first subarrangement such that the fourth computing element and the fifth computing element are identical.

6. Arrangement according to Claim 5,
having a first of a plurality of second subarrangements and a second of the plurality of second subarrangements, where the first of the plurality of second subarrangements and the second of the plurality of second subarrangements are connected to one another such
that the fifth computing element in the second of the plurality of second subarrangements and seventh computing element in the first of the plurality of second subarrangements are identical.

7. Arrangement according to one of Claims 1 to 6,
comprising computing elements which are artificial neurons.

8. Arrangement according to one of Claims 1 to 7,
in which at least some of the connections have respectively associated weights.

9. Arrangement according to Claim 8,
in which the weights of identical connections are identical.

10. Arrangement according to Claim 8 or 9,
in which the weights of the connection between the second computing element and the third computing element form the negative identity matrix.

11. Arrangement according to one of Claims 1 to 10,
used for ascertaining a dynamic response for the system such that the dynamic response is ascertained from a time series comprising states of the system.

12. Arrangement according to one of Claims 1 to 11,
having a measurement arrangement for detecting physical signals which can be used to describe a state of the system.

13. Arrangement according to Claim 11 or 12,
used for ascertaining the dynamic response of a dynamic process in a chemical reactor.

14. Arrangement according to Claim 11 or 12, used for ascertaining the dynamic response of an electrocardiogram.

15. Arrangement according to Claim 11 or 12,
used for ascertaining an economic or macroeconomic dynamic response.

16. Arrangement according to one of Claims 8 to 15,
in which the weights can be altered when training the arrangement.

17. Method for computer-aided ascertainment of a
second state of a system in a first state space from a first state of the system in the first state space

- in which the first state is transformed into a third state of the system in a second state space,
- in which a fourth state of the system in the second state space is ascertained,
- in which a discrepancy between the third state and the fourth state is determined,
- in which the discrepancy and the first state are used to ascertain the second state.

18. Method according to Claim 17,
in which a state of the system is described by a vector of prescribable dimension.

**19.** Method according to Claim 17 or 18,
in which the first state is a first time series value and the second state is a second time series value in a time series comprising time series values.

**Revendications**

**1.** Configuration d'éléments de calcul reliés entre eux,

- avec au moins un premier élément de calcul, avec léquei un premier état d'un système dans un premier espace des états, peut être transformé en un troisième état du système dans un deuxième espace des états,
- avec au moins un deuxième élément de calcul, avec lequel un quatrième état du système peut être déterminé dans le deuxième espace des états,
- avec au moins un troisième élément de calcul, lequel possède à chaque fois une connexion avec le premier élément de calcul et le deuxième élément de calcul, et avec lequel un écart entre le troisième état et le quatrième état peut être déterminé,
- avec au moins un quatrième élément de calcul, lequel possède à chaque fois une connexion avec le premier élément de calcul et le troisième élément de calcul, et avec lequel en employant l'écart et avec le premier état, un deuxième état du système peut être déterminé dans le premier espace des états.

**2.** Configuration selon la revendication 1,
dans laquelle le premier élément de calcul, le deuxième élément de calcul, le troisième élément de calcul et le quatrième élément de calcul, forment une première sous-configuration.

**3.** Configuration selon la revendication 1 ou 2,
ayant plusieurs premiers éléments de calcul, plusieurs deuxièmes éléments de calcul, plusieurs troisièmes éléments de calcul, et/ou plusieurs quatrièmes éléments de calcul.

**4.** Configuration selon la revendication 2 et 3,
ayant plusieurs premières sous-configurations, au moins une première des premières sous-configurations et une deuxième des premières sous-configurations étant reliées entre elles, de sorte que le quatrième élément de calcul de la première des premières sous-configurations est identique au premier élément de calcul de la deuxième des premières sous-configurations.

**5.** Configuration selon l'une quelconque des revendications 1 à 4,
ayant au moins une deuxième sous-configuration, laquelle deuxième sous-configuration comprend

- un cinquième élément de calcul avec lequel un cinquième état du système dans le premier espace des états peut être transformé en un sixième état du système dans le deuxième espace des états, et
- un sixième élément de calcul, lequel possède une connexion avec le cinquième élément de calcul et avec lequel un septième état du système peut être déterminé dans le deuxième espace des états,
- un septième élément de calcul, lequel possède une connexion avec le cinquième élément de calcul et avec lequel un huitième état du système peut être déterminé dans le premier espace des états,
la deuxième sous-configuration étant reliée à la première sous-configuration, de telle sorte que le quatrième élément de calcul et le cinquième élément de calcul sont identiques.

**6.** Configuration selon la revendication 5,
ayant une première de plusieurs deuxièmes sous-configurations et une deuxième des plusieurs deuxièmes sous-configurations, la première des plusieurs deuxièmes sous-configurations et la deuxième des plusieurs deuxièmes sous-configurations étant reliées entre elles, de sorte que le cinquième élément de calcul de la deuxième des plusieurs deuxièmes sous-configurations et le septième élément de calcul de la première des plusieurs deuxièmes sous-configurations sont identiques.

**7.** Configuration selon l'une quelconque des revendications 1 à 6, comprenant des éléments de calcul qui sont des neurones artificiels.

**8.** Configuration selon l'une quelconque des revendications 1 à 7,
dans laquelle à chaque fois des poids sont associés à au moins une partie des connexions.

**9.** Configuration selon la revendication 8,
dans laquelle les poids de connexion identique sont identiques.

**10.** Configuration selon la revendication 8 ou 9,
dans laquelle les poids de la connexion entre le deuxième élément de calcul et le troisième élément de calcul forment la matrice identité négative.

**11.** Configuration selon l'une quelconque des revendications 1 à 10,
mise en oeuvre pour déterminer une dynamique du système, de telle sorte à déterminer la dynamique à partir d'une série temporelle constituée des états du système.

**12.** Configuration selon l'une quelconque des revendications 1 à 11,
avec une configuration de mesure pour détecter des signaux physiques avec lesquels un état du système peut être décrit.

**13.** Configuration selon la revendication 11 ou 12,
mise en oeuvre pour déterminer la dynamique d'un processus dynamique dans un réacteur chimique.

**14.** Configuration selon la revendication 11 ou 12,
mise en oeuvre pour déterminer la dynamique d'un électrocardiogramme.

**15.** Configuration selon la revendication 11 ou 12,
mise en oeuvre pour déterminer une dynamique économique ou macro-économique.

**16.** Configuration selon l'une quelconque des revendications 8 à 15,
dans laquelle les poids peuvent être modifiés dans un apprentissage de la configuration.

**17.** Procédé pour la détermination assistée par ordinateur d'un deuxième état d'un système dans un premier espace des états à partir d'un premier état du système dans le premier espace des états,

- dans lequel le premier état est transformé en un troisième état du système dans un deuxième espace des états,
- dans lequel un quatrième état du système est déterminé dans le deuxième espace des états,
- dans lequel un écart entre le troisième état et le quatrième état est déterminé,
- dans lequel le deuxième état est déterminé en employant l'écart et à partir du premier état.

**18.** Procédé selon la revendication 17,
dans lequel un état du système est décrit par un vecteur d'une dimension que l'on peut prédéterminer.

**19.** Procédé selon la revendication 17 ou 18,
dans lequel le premier état est une première valeur de série temporelle et le deuxième état est une deuxième valeur de série temporelle d'une série temporelle constituée de valeurs de série temporelle.

## FIG 1A

## FIG 2

FIG 1B

FIG 3B

EP 1 252 566 B1

# FIG 3A

# FIG 4

**FIG 5**

# FIG 6

**FIG 7**